# EUROPEAN PATENT APPLICATION

(11) **EP 2 916 200 A2**
(43) Date of publication of application: **09.09.2015**
(21) Application number: 13851909.5
(22) Date of filing: 05.11.2013
(51) Int. Cl.: G06F 3/02

(54) **SEMI-COMPACT KEYBOARD AND METHOD THEREFOR**

(30) Priority: 05.11.2012 KR 20120124358; 07.11.2012 KR 20120125361; 13.11.2012 KR 20120127801; 10.12.2012 KR 20120143105; 20.12.2012 KR 20120149465; 04.11.2013 KR 20130132760
(71) Applicant: Yang, Giho, Seoul 121-869 (KR)
(72) Inventor: HWANG, Jay-Yeob, Gyunggi-Do 411-728 (KR)
(74) Representative: Nony
(86) International application number: PCT/KR2013/009940
(87) International publication number: WO 2014/069969

(57) **Abstract**

The present invention relates to a key board for a small-sized mobile device, and a semi-compact keyboard which can provide an increased area of each key in comparison with an existing full keyboard and enables easy input by greatly reducing an increase in the number of key inputs compared with the enlarged area.

The semi-compact keyboard according to the present invention has a basic arrangement of a full keyboard for a computer and is provided as a 7-7-5 type keyboard (the numbers of keys from first to third rows are 7, 7 and 5, respectively) or a 8-8-6 type keyboard (the numbers of keys from first to third rows are 8, 8 and 6, respectively) according to the provided keys. Therefore, when characters corresponding to the number of keys reduced in each row are rearranged at other character keys, as posterior characters, the characters having relatively low frequency use in the same row are rearranged to left and right at other neighboring character keys thereof as the posterior characters on the basis of original positions.

In addition, an interface for inputting each character arranged at a double key enables an input of a prior character using one touch and the input of the posterior character using two touches.

The present invention has a greater key area in a small-sized portable information device and is very similar to a computer keyboard with respect to the number of input keys so as to largely reduce input stress of a user.

## Description

### TECHNICAL FIELD

The present disclosure relates to a keyboard for a small mobile device. More particularly, the present disclosure relates to a compact keyboard in which a plurality of characters is placed on each key and an implementation method thereof.

### BACKGROUND ART

A keyboard for a computer basically includes keys, each key assigned one character, which are used to input characters. However, because a mobile device such as a mobile phone provides only a small number of keys due to its small size, it has provided a compact keyboard in which a plurality of characters is assigned for each key. Typically, there is a compact keyboard in which two or three alphabets are placed for each key on a 3*4 keypad for a telephone. However, this keyboard has a completely different layout from a computer keyboard, and for keys having three characters placed on each key, inputting a character by continuously pressing a key to distinguish characters involves a huge number of key inputs and causes intense stress of avoiding a conflict between characters.

In the past, numerous products were developed to solve the problem, and for example, there is a compact QWERTY keyboard having a computer keyboard layout. It provides the same layout as a computer keyboard on a 5*4 keypad, contributing to the easy transmission of a text message or an e-mail from a mobile phone in the advanced information age, but two alphabet letters are equally placed on each key. Thus, this compact QWERTY keyboard is still very inconvenient compared to a computer keyboard.

Recently, with the development of smart phones, there is a movement toward a virtual keyboard using a wide touch screen, and the virtual keyboard displays most of the keys of a QWERTY keyboard as virtual keys. However, the keys are too small in size, and a user experiences considerable stress because of having to input on a smooth flat touch screen.

### DISCLOSURE

### Technical Problem

The present disclosure is designed to solve the above problem, and therefore, the present disclosure is directed to providing a semi-compact keyboard having a larger size than an existing virtual keyboard to reduce stress caused by inputting characters on a mobile terminal, as well as having an extremely small number of key inputs compared to an enlarged area, allowing more convenient input.

### Technical Solution

There is provided is a semi-compact keyboard according to the present disclosure having, on the basis of a full keyboard layout for a computer, a 7-7-5 type (a number of keys on first to third rows is 7, 7, and 5, respectively) and a 8-8-6 type (a number of keys on first to third rows is 8, 8, and 6, respectively) based on the provided keys. Thus, as many as a reduced number of keys on each row, characters are replaced on other character keys as a subordinated character, and in this instance, on the same row with respect to an original position, characters with a relatively low usage frequency are each replaced on an adjacent character key disposed on the left or right side of the corresponding character as a subordinated character.

Also, an interface for inputting each of the characters placed on the double key allows an input of an unsubordinated character by a single touch, and an input of a subordinated character by consecutive two touches, or a double touch.

### Advantageous Effects

For small mobile information devices, the present disclosure has an effect of greatly reducing input stress of users because it has a wider key area and a number of key inputs come close to that of a computer keyboard.

### BRIEF DESCRIPTION OF THE DRAWINGS

FIG. 1 illustrates a usage frequency table of English alphabet on a QWERTY keyboard.
FIG. 2 illustrates an embodiment in which auto-correction according to the present disclosure is applied.
FIG. 3 is a flowchart illustrating an auto-correction method according to the present disclosure.
FIG. 4 illustrates preferred embodiments of a semi-compact keyboard 7-7-5 type layout for English language according to the present disclosure.
FIG. 5 illustrates embodiments of a semi-compact keyboard 8-8-6 type layout for English language according to the present disclosure.
FIG. 6 illustrates a usage frequency graph of Roman alphabet (pinyin or Romanization system) for Chinese language input.
FIG. 7 illustrates preferred embodiments of a semi-compact keyboard 7-7-x type layout for Chinese language according to the present disclosure.
FIG. 8 illustrates preferred embodiments of a semi-compact keyboard 8-8-x type layout for Chinese language according to the present disclosure.
FIG. 9 illustrates a usage frequency table of Indonesian alphabet.
FIG. 10 illustrates preferred embodiments of semi-compact keyboard 7-7-5 type layout and 8-8-6 type layout for Indonesian language according to the present disclosure.
FIG. 11 illustrates a usage frequency table of Turkish alphabet.
FIG. 12 illustrates a preferred embodiment of a semi-compact keyboard 7-7-5 type layout for Turkish language according to the present disclosure.
FIG. 13 illustrates preferred embodiments of a semi-compact keyboard 8-8-6 type layout for Turkish language according to the present disclosure.
FIG. 14 illustrates a usage frequency table of French alphabet.
FIG. 15 illustrates a preferred embodiment of a semi-compact keyboard 7-7-5 type layout for French language according to the present disclosure.
FIG. 16 illustrates a working principle of a variant character conversion key for French language.
FIG. 17 illustrates a preferred embodiment of a semi-compact keyboard 8-8-6 type layout for French language according to the present disclosure.
FIG. 18 illustrates a usage frequency table of Spanish alphabet.
FIG. 19 illustrates a preferred embodiment of a semi-compact keyboard 7-7-5 type layout for Spanish language according to the present disclosure.
FIG. 20 illustrates another embodiment of semi-compact keyboard 7-7-5 type layout and 8-8-6 type layout for Spanish language according to the present disclosure.
FIG. 21 illustrates a working principle of a variant character conversion key for Spanish language.
FIG. 22 illustrates a usage frequency table of Russian alphabet.
FIG. 23 illustrates a preferred embodiment of a semi-compact keyboard 8-8-6 type layout for Russian language according to the present disclosure.
FIG. 24 illustrates a usage frequency table of Arabic alphabet.
FIG. 25 illustrates a preferred embodiment of a semi-compact keyboard 8-8-7 type layout for Arabic language according to the present disclosure.
FIG. 26 illustrates a usage frequency table of German alphabet.
FIG. 27 illustrates a preferred embodiment of a semi-compact keyboard 7-7-5 type layout for German language according to the present disclosure.
FIG. 28 illustrates a preferred embodiment of a semi-compact keyboard 8-8-6 type layout for German language according to the present disclosure.
FIG. 29 illustrates another embodiment of a semi-compact keyboard 8-8-6 type layout for German language according to the present disclosure.
FIG. 30 illustrates a usage frequency table of Portuguese alphabet.
FIG. 31 illustrates a preferred embodiment of a semi-compact keyboard 7-7-5 type layout for Portuguese language according to the present disclosure.
FIG. 32 illustrates a working principle of a variant character conversion key for Portuguese language.
FIG. 33 illustrates preferred embodiments of a semi-compact keyboard 8-8-6 type layout for Portuguese language according to the present disclosure.
FIG. 34 illustrates a usage frequency table of Italian alphabet.
FIG. 35 illustrates a preferred embodiment of a semi-compact keyboard 8-8-6 type layout for Italian language according to the present disclosure.
FIG. 36 illustrates another embodiment of a semi-compact keyboard 8-8-6 type layout for Italian language according to the present disclosure.
FIGS. 37 and 38 illustrate embodiments of a semi-compact keyboard 7-7-5 type layout for Italian language according to the present disclosure.
FIG. 39 illustrates a usage frequency table of Malay alphabet.
FIG. 40 illustrates preferred embodiments of semi-compact keyboard 7-7-5 type layout and 8-8-6 type layout for Malay language according to the present disclosure.
FIG. 41 illustrates a usage frequency table of Javanese alphabet.
FIG. 42 illustrates preferred embodiments of semi-compact keyboard 7-7-5 type layout and 8-8-6 type layout for Javanese language according to the present disclosure.
FIG. 43 illustrates a usage frequency table of Filipino alphabet.
FIG. 44 illustrates preferred embodiments of semi-compact keyboard 7-7-5 type layout and 8-8-6 type layout for Filipino language according to the present disclosure.
FIG. 45 illustrates a usage frequency table of Polish alphabet.
FIG. 46 illustrates a preferred embodiment of a semi-compact keyboard 7-7-5 type layout for Polish language according to the present disclosure.
FIG. 47 illustrates a usage frequency table of Ukrainian alphabet.
FIG. 48 illustrates a preferred embodiment of a semi-compact keyboard 8-8-6 type layout for Ukrainian language according to the present disclosure.
FIG. 49 illustrates a usage frequency table of Dutch alphabet.
FIG. 50 illustrates preferred embodiments of semi-compact keyboard 7-7-5 type layout and 8-8-6 type layout for Dutch language according to the present disclosure.
FIG. 51 illustrates a usage frequency table of Romanian alphabet.
FIG. 52 illustrates preferred embodiments of a semi-compact keyboard 7-7-5 type layout for Romanian language according to the present disclosure.
FIG. 53 illustrates another embodiment of a semi-compact keyboard 7-7-5 type layout for Romanian language according to the present disclosure.
FIG. 54 illustrates another embodiment of a semi-compact keyboard 8-8-6 type layout for Romanian language according to the present disclosure.
FIG. 55 illustrates a usage frequency table of Greek alphabet.
FIG. 56 illustrates a preferred embodiment of a semi-compact keyboard 7-7-5 type layout for Greek language according to the present disclosure.
FIG. 57 illustrates a usage frequency table of Cebuano alphabet.
FIG. 58 illustrates preferred embodiments of semi-compact keyboard 7-7-5 type layout and 8-8-6 type layout for Cebuano language according to the present disclosure.
FIG. 59 illustrates a usage frequency table of Swahili alphabet.
FIG. 60 illustrates preferred embodiments of semi-compact keyboard 7-7-5 type layout and 8-8-6 type layout for Swahili language according to the present disclosure.
FIG. 61 illustrates a usage frequency table of Azerbaijani alphabet.
FIG. 62 illustrates preferred embodiments of a semi-compact keyboard 8-8-6 type layout for Azerbaijani language according to the present disclosure.
FIG. 63 illustrates a usage frequency table of Hungarian alphabet.
FIG. 64 illustrates preferred embodiments of semi-compact keyboard 7-7-5 type layout and 8-8-6 type layout for Hungarian language according to the present disclosure.
FIG. 65 illustrates a usage frequency table of Czech alphabet.
FIG. 66 illustrates preferred embodiments of semi-compact keyboard 7-7-5 type layout and 8-8-6 type layout for Czech language according to the present disclosure.
FIG. 67 illustrates a working principle of a variant character conversion key for Czech language.
FIG. 68 illustrates a usage frequency table of Serbian alphabet.
FIG. 69 illustrates a preferred embodiment of a semi-compact keyboard 7-7-5 type layout for Serbian language according to the present disclosure.
FIG. 70 illustrates a preferred embodiment of a semi-compact keyboard 8-8-6 type layout for Serbian language according to the present disclosure.
FIG. 71 illustrates a usage frequency table of Bulgarian alphabet.
FIG. 72 illustrates a preferred embodiment of a semi-compact keyboard 7-7-5 type layout for Bulgarian language according to the present disclosure.

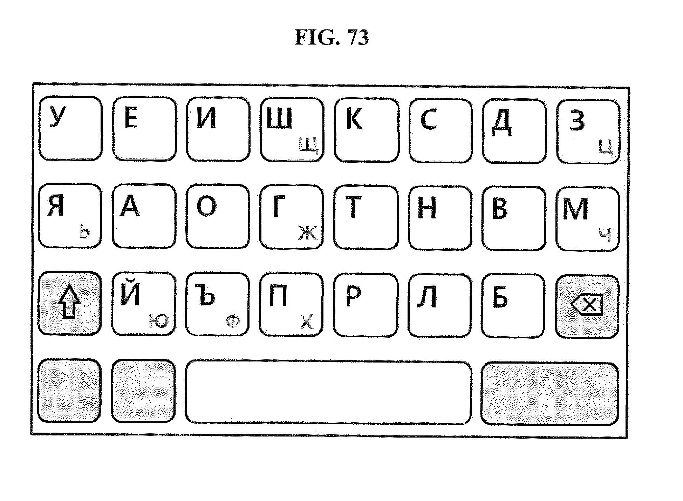

FIG. 73 illustrates a preferred embodiment of a semi-compact keyboard 8-8-6 type layout for Bulgarian language according to the present disclosure.
FIGS. 74, 75, and 76 illustrate various versions of a semi-compact keyboard for Bulgarian language according to the present disclosure.
FIG. 77 illustrates a usage frequency table of Swedish alphabet.
FIG. 78 illustrates a preferred embodiment of a semi-compact keyboard 8-8-6 type layout for Swedish language according to the present disclosure.
FIG. 79 illustrates a usage frequency table of Finnish alphabet.
FIG. 80 illustrates a preferred embodiment of a semi-compact keyboard 8-8-6 type layout for Finnish language according to the present disclosure.
FIG. 81 illustrates a usage frequency table of Roman alphabet for Japanese language input.
FIG. 82 illustrates a preferred embodiment of a semi-compact keyboard 7-7-5 type layout for Japanese language according to the present disclosure.
FIG. 83 illustrates an example of an English mode of the embodiment of FIG. 82.
FIG. 84 illustrates another embodiment of a semi-compact keyboard 7-7-5 type layout for Japanese language according to the present disclosure.
FIG. 85 illustrates an example of an English mode of the embodiment of FIG. 84.
FIG. 86 illustrates a preferred embodiment of a semi-compact keyboard 8-8-6 layout for Japanese language according to the present disclosure.
FIG. 87 illustrates an example of an English mode of the embodiment of FIG. 86.
FIG. 88 illustrates a preferred embodiment of a semi-compact keyboard 8-7-6 type layout for Japanese language according to the present disclosure.
FIG. 89 illustrates an example of an English mode of the embodiment of FIG. 88.
FIG. 90 illustrates another embodiment of a semi-compact keyboard 8-7-6 type layout for Japanese language according to the present disclosure.
FIG. 91 illustrates an example of an English mode of the embodiment of FIG. 90.
FIG. 92 illustrates an Urdu full keyboard layout.
FIG. 93 illustrates a usage frequency table of Urdu alphabet.
FIG. 94 illustrates a preferred embodiment of a semi-compact keyboard 7-7-5 type layout for Urdu language according to the present disclosure.

### MODE FOR CARRYING OUT THE INVENTION

The foregoing advantages and features and effects of the present disclosure, and methods for achievement thereof will become apparent from the following description of the principle of the present disclosure and the embodiments with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to one of ordinary skill in the art and the present disclosure is merely defined by the scope of the claims.

### <Definition of terms>

First, the terms are defined as below to help the description of the present disclosure.

The term 'full keyboard' represents a keyboard in which for each of characters to input, one character is placed on each key, and may be named QWERTY, QWERTZ, and AZERTY based on its arrangement.

The term 'compact keyboard' represents a keyboard in which a plurality of characters is placed on each key, and typically includes a 3*4 keypad for a telephone and a compact QWERTY keyboard.

The term 'semi-compact keyboard' represents a keyboard having, on the basis of a full keyboard layout, an optimum distribution of single keys and double keys, the single key on which one character with a high usage frequency is placed, the double key on which one character with a high usage frequency is placed with the addition of one subordinated character with a low usage frequency.

The term 'single key' represents a key with one character placed therein.

The term 'double key' represents a key with two characters placed therein.

The term 'first selection method' represents, in a key press method, one touch (or press), such as a gesture of releasing immediately after touching, without additional touches or time prolongation, or with no concurrent use of any gesture or function key.

The term 'second selection method' represents an input method such as a double touch, a long press, or a swipe, or a touch (or press) together with other function key.

The term 'unsubordinated character' represents a character inputted by a first selection method on a double key.

The term 'subordinated character' represents a character inputted by a second selection method on a double key.

The term 'variant character' represents a character created by attaching a pronunciation symbol or adding a stroke to an original character.

The term 'variant character conversion key' represents a function key for converting an inputted original character to a preset variant character when pressed with the original character together.

The term 'consecutive press' represents a method by which an unsubordinated character is inputted by a single press on a double key and a subordinated character is inputted by consecutive two presses, or a double press.

The term 'double click (or double touch)' represents an input event of consecutively inputting quickly at a preset time interval between two clicks or touches.

The term 'consecutive press conflict' represents an error such as an ambiguous interpretation of an input value when consecutively inputting characters placed on the same key in a compact keyboard supporting a consecutive press in which a plurality of characters is placed on each key.

### <Omission of known technology>

Furthermore, prior to the description of the present disclosure, note is taken of the following. In the implementation of a keyboard by those skilled in the art, keyboard implementation technology is well known in application programming interface (API) published from an operating system provider or a hardware provider, whether it is a physical keyboard or a virtual keyboard, and if there are differences between new keyboards and traditional keyboards, such differences will be differences in keyboard layout, arrangement of keys on the keyboard, and a method of processing a signal inputted through the keys. Thus, in the description of the present disclosure, a description of common technology related to a keyboard is omitted herein, and a distinguishing keyboard layout of the present disclosure, arrangement of keys on the keyboard, and a method of processing a signal inputted through the keys is described in detail.

### <Problem to be solved>

Generally, ten characters are placed on the first row, nine characters on the second row, and seven characters on the third row. Also, based on the arranged keys, keyboards are called QWERTY, QWERTZ, and AZERTY. Also, keyboards may include extra characters and unique characters for each language, e.g., Korean alphabet, Arabic alphabet, and Cyrillic alphabet, other than Roman alphabet, however because a computer is fundamentally based on English alphabet, all keyboards necessarily contain English alphabet, and for these characters, a number of keys and their arrangement are nearly similar to those of a QWERTY keyboard.

In small mobile terminals such as smart phones, keyboards are provided in the form of a touch screen, but due to a very small key area, mistyping occurs too frequently, causing inconvenience.

An existing compact keyboard or compact QWERTY is not suited to the specification of today's smart phone having a wider screen. Hence, the present disclosure aims to propose a semi-compact keyboard which is comparable to a full keyboard in terms of efficiency and provides a large key area enough not to mistype.

### <Analysis of problem>

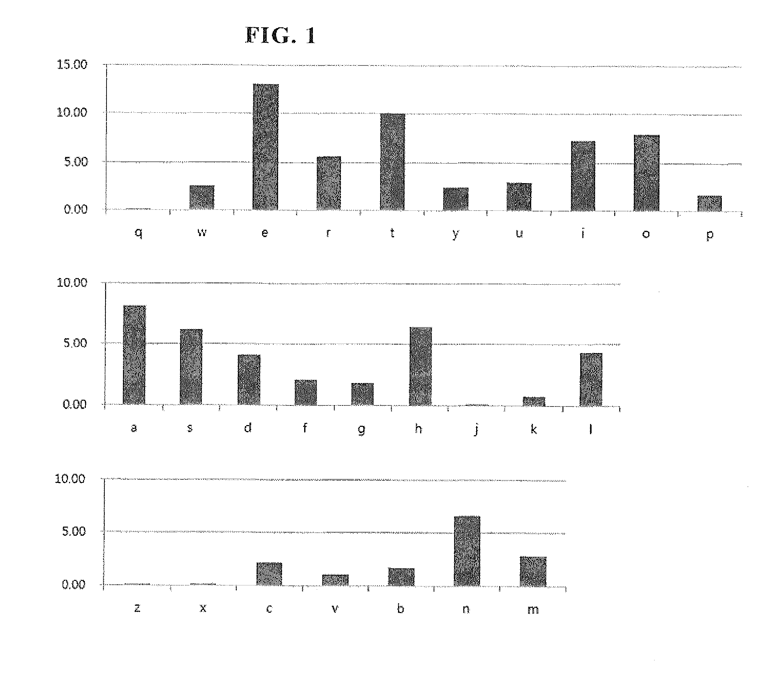

FIG. 1 illustrates a usage frequency table of English alphabet on a QWERTY keyboard.

The graph shows a data analysis result of an English version of The little prince from page 1 to page 10.

Seeing an existing full keyboard, it is found that a key with a lower usage frequency and a key with highest usage frequency occupy the same space. It does not matter with a computer keyboard not requiring consideration of the spatial limitation, but for a mobile terminal having a great spatial limitation, there is a need to solve the problem with efficiency.

### <Solution of the invention>

Therefore, the present disclosure allows a character with a high usage frequency to be directly inputted by a first selection method (e.g., a short single press), and a character with a low usage frequency to be inputted by a second selection method (e.g., a double click) on a double key on which the character with a low usage frequency is placed as a subordinated character together with a character with a higher usage frequency, thereby reducing a number of keys and as a consequence providing a larger key area, so an efficient semi-compact keyboard is implemented without a tradeoff between a key area and a number of key inputs.

### <Principle of the invention-key type>

A semi-compact keyboard according to the present disclosure has, on the basis of a full keyboard layout for a desired language, based on the provided keys and their arrangement, a 7-7-5 type (a number of keys on first to third rows is 7, 7, and 5, respectively), a 8-8-6 type (a number of keys on first to third rows is 8, 8, and 6, respectively), and a 8-7-6 type (a number of keys on first to third rows is 8, 7, and 6, respectively). As opposed to a compact QWERTY keyboard in which two characters are placed on a reduced number of keys in a sequential order, one or two characters are replaced for optimization of a number of key inputs.

### <Principle of the invention-basic character arrangement>

In the implementation of a semi-compact keyboard of the present disclosure, a method of replacing each character on a reduced number of keys compared to a full keyboard is as follows.

First, on the basis of a full keyboard layout for a desired language, as many as a reduced number of keys on each row, characters are replaced on other character keys as a subordinated character, and in this instance, on the same row with respect to an original position, characters with a below-average usage frequency are each replaced on an adjacent character key on the left or right side of the corresponding character as a subordinated character.

Second, among adjacent keys that may be used to form a double key, characters are each replaced on an adjacent key with a lower likelihood of a consecutive press conflict after combining.

Third, where other conditions are the same, (there is also an adjacent key on the left side) an adjacent key on the left side has a priority over a key on the right side. It produces an effect of naturally accepting a new layout by maintaining a position on an original full keyboard and its similarity.

Fourth, when making at least two double keys on a row, if consecutive characters in a group with a lowest usage frequency on the same row are disposed concentratively on any one of the left side and the right side of a keyboard, characters disposed on the opposite side may be used to form a double key even though the characters do not have a lowest usage frequency to maintain the balance between each key.

### <Principle of the invention-derivative character arrangement>

The above three are basic principles, but in the case of a language including variant characters, characters except the variant characters are replaced in accordance with the above principles while the variant characters are replaced by another method; variant characters may each form a double key with a left or right adjacent key through comparison by the above method or may remain as a single key, or alternatively, any one of the following two methods may be selected and applied.

First, each variant character is placed as a subordinated character of its original character to form a double key. This method is preferably applied when variant characters have a much lower usage frequency than other characters and they are less likely to conflict with their original characters due to a consecutive press.

Second, there is provided at least one function key (variant character conversion key) for converting a variant character to its original character when pressed together with the original character. For example, for characters with umlaut, a variant character conversion key for attaching the umlaut may be provided, and when pressed with an original character, attaches the umlaut to the original character. Here, pressing together with an original character may work in the same way as the Shift key on a computer, or includes pressing an original character and subsequently pressing an umlaut variant character conversion key. Similarly, this method may be applied when variant characters have a much lower usage frequency than other characters, and particularly, in the event of a conflict caused by a consecutive press on a double key consisting of an original character and its variant character.

### <Principle of the invention-key marking>

As another issue aside from the arrangement as described above, describing a method of marking characters on a keyboard, the principle for marking a character on a key for each of the two characters placed on a double key is to mark an unsubordinated character on the left side, and a subordinated character on the right side if characters of a corresponding language are written left to right, and otherwise, to mark an unsubordinated character on the right side.

Alternatively, marking an unsubordinated character with a larger size and a subordinated character with a smaller size helps being able to distinguish them, making a more frequently used character prominently visible, and provides a neat key design so that it looks as if only one character is placed on each key.

### <Principle of the invention-method for character selection and input on double key>

Hereinafter, a description of a method by which a user selects and inputs a desired character on a double key is provided.

First, the most traditional method is a consecutive press. An advantage of a consecutive press is that many users are familiar to this method, and like the present disclosure, when a character to be selected is any one of two characters, it is very convenient because of a very simple input and a remarkably reduced error ratio as opposed to a method for English input on an existing 3*4 keypad. To support a consecutive press, when a predetermined period of time passes after pressing a key, a period of time for confirming an inputted character is preferably given and until it reaches the period of time, when the same key is continuously pressed, the two characters placed on the double key are continuously switched alternately. Thus, if it is erroneously inputted, it is comparatively easy to correct the error. However, when consecutively inputting the characters placed on the double key, unfavorably, it is necessary to wait until a previously inputted character is confirmed, or otherwise, a separate function key (generally, an arrow mark) should be further provided to forcibly confirm the previously inputted character.

Next is a double click (double touch). As opposed to a single click involving only one pressing, a double click is an interface for clicking twice within a short time, and because it is necessary to determine if the consecutive two clicks result from doing a single click twice or doing a double click once, a time interval between the two clicks is set and when two clicks are done within the interval, it is determined as a double click, and otherwise, it is determined that a single click was done twice. When consecutively inputting characters placed on a double key, it take a shorter time to wait until a previously inputted character is confirmed than a consecutive press, and thus there is no need to additionally provide an arrow mark although it appears similar to a consecutive press, and only if a user gets accustomed to distinguishing a single click and a double click, non-ambiguous input values will provide convenience to the user.

Next is a method using the Alt key. In certain languages, if two characters are placed on a double key and a consecutive press or double click method is applied, there is a high probability that an input conflict will occur between the two characters. In such a case, when inputting a subordinated character, pressing the Alt key together will be a solution. Here, pressing the Alt key together may work in the same way as the Shift key on a computer, or includes pressing a character key and subsequently pressing the Alt key. Of course, only one of the two should be applied. This method needs a time for a user to get accustomed thereto even though a skillful user can avoid an input error and has a disadvantage of having to provide a separate Alt key.

Next is a variant character conversion key. Although it is similar to the above method using the Alt key, the Alt key is equally applied to all subordinated characters, while in this method, two characters on a double key not corresponding to a combination of an original character and a variant character are selected and inputted by a consecutive press or double click method, and this variant character conversion key is used to convert an original character only on a double key consisting of a combination of an original character and a variant character. Also, a variant character conversion key may be differently marked based on its function. For example, in the case where a pronunciation symbol as a variant character varies based on a type of a vowel as an original character, when a vowel is inputted while a user inputs a character, a variant character conversion key is differently marked based on a pronunciation symbol that may be applied to the vowel. As a more specific example, in a certain language including 'a' with a circumflex and 'u' with an umlaut, a variant character conversion key displays a circumflex immediately when 'a' is inputted and an umlaut when 'u' is inputted, to allow a user to intuitively recognize that the circumflex will be attached to 'a' when pressed after 'a' and the umlaut will be attached to 'u'. In the case where a variant character conversion key does not change in function based on a character that works together, it may be pressed concurrently with a character key like the Shift key, or may be pressed before or after a character key. Of course, only one of the two should be applied. However, in the case where a function changes based on a character that works together, it is necessary to press a character key and then press a variant character conversion key. If so, a function suitable for a previously pressed character is displayed as a key image. This variant character conversion key is applied well to a virtual keyboard from Apple iOS.

Next is a long press method. Generally, a long press method is often used when a target character or symbol is absent in a current input mode. For example, it is similar to a situation in which a number is inputted when a button is long pressed while a character is being inputted on a mobile phone. If a subordinated character is selected and inputted using a long press, an input error may be prevented. Also, because all subordinated characters correspond to characters with a low usage frequency in the present disclosure, a long press is not made too frequently.

Next is a long swipe method. For example, to input an unsubordinated character, a corresponding key is merely pressed and released, and to input a subordinated character, while a character key is being pressed, a swipe is made in a predefined direction among the up, down, left and right directions. Compared to a long press method, there is an advantage that a user can input more dynamically. This method has many application cases and its detailed description is omitted herein.

Next is a method in which a prediction function is applied, and a subordinated character is inputted only once. That is, a prediction function of recommending a word with a highest possibility using dictionary data is applied to this embodiment, and for all characters, only one input is allowed. This design having this arrangement according to the present disclosure and a prediction function has an effect of inputting a desired character by pressing a subordinated character only once. Because characters with a high usage frequency are uniformly dispersed all over the keys according to the present disclosure, there is a higher probability that a complete word is attained by inputting only once from a user.

### <Principle of the invention-method of applying auto-correction>

Hereinafter, a description of an auto-correction method according to the present disclosure is provided.

First, an auto-correction approach the present disclosure aims to pursue is described. In a semi-compact keyboard according to the present disclosure, an error to be corrected by an auto-correction function refers to an error caused by single-clicking a subordinated character designed to be selected by a double click. It is because the semi-compact keyboard according to the present disclosure has a wide key area to reduce a probability that an unwanted key will be pressed, and an error that may occur when unsubordinated characters overlap (an error occurring when a subordinated character is inputted by an unintended double click) is avoided by the key arrangement in which a character with a high overlap possibility is not placed as an unsubordinated character of a double key, and when two characters on the same key are consecutively inputted, a user recognizes it himself/herself when pressing the key and thus there is little or no error, however only an error caused by single-clicking, not double-clicking, a subordinated character is not resolved merely by character arrangement.

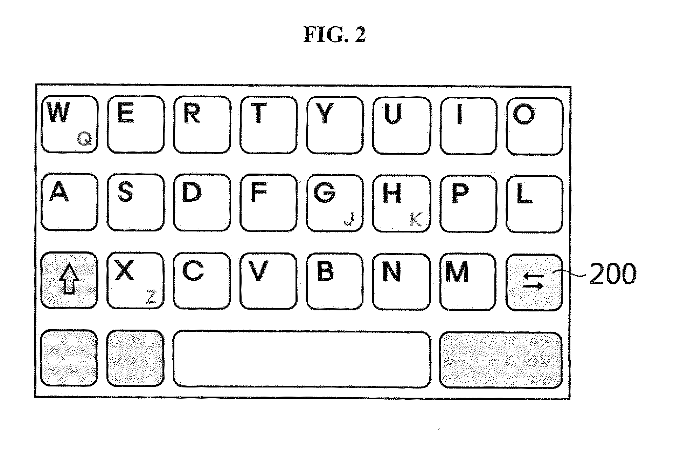

FIG. 2 illustrates an embodiment in which auto-correction according to the present disclosure is applied.

The embodiment illustrated in the drawing is an example of an English 8-8-6 type. On each key, large and bolded characters are unsubordinated characters on corresponding keys, and small characters on the corner of each key are subordinated characters.

A key 200 in yellow disposed at the right side as identified in the drawing is an auto-correction cancel key. It is an example in which after auto-correction is performed, the Delete key is temporarily used as an auto-correction cancel key, and after a need to cancel auto-correction disappears, the Delete key returns. That is, when auto-correction is performed on a keyboard according to the present disclosure keyboard but a resulting input value is not an input value desired by a user, the user can restore an original input value by pressing the auto-correction cancel key. The auto-correction cancel key preferably has a different shape from the Delete key to allow the user to intuitively recognize a function of the auto-correction cancel key, i.e., the function that does not cancel a character inputted now from the user and instead inputs the other character on a double key.

To provide an auto-correction function, dictionary data including a collection of words of a corresponding language is needed. Also, from the data, a usage frequency of each word is preferably identified.

When a word completed by a user using a double key at least once is absent in the provided dictionary data, it is regarded as mistyping caused by a click method error, and as there is a likelihood of a click method error, the dictionary data is searched for all combinable strings, and when at least one word is found, it is automatically corrected to a word with a highest priority. If all candidate strings are absent in the dictionary data, it continues to proceed.

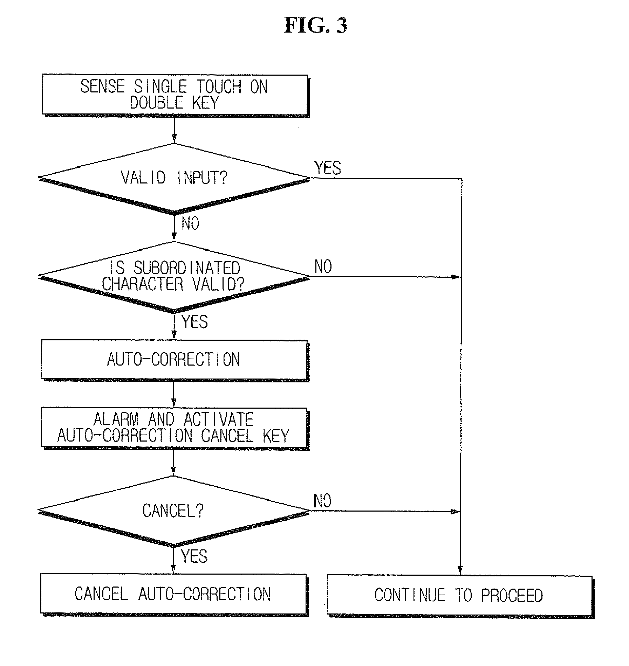

FIG. 3 is a flowchart illustrating an auto-correction method according to the present disclosure.

First, when a single touch on a double key is detected, search is conducted to determine if a word being currently formed from inputs so far is a final or intermediate form of a word present in dictionary data. In this instance, when it is determined as a form present in the dictionary data, it continues to proceed, and if it is determined as a form absent in the dictionary data, a subordinated character on a double key used is regarded as an intended input and the word being formed is re-combined and search is conducted to determine if it is a final or intermediate form of a word present in the dictionary data. In this instance, if it is determined as a form absent in the dictionary data, an original input value is regarded as an input intended by the user and it continues to proceed. If only one form is present in the dictionary data, it is automatically corrected to the corresponding form, and if at least two forms are present in the dictionary data, auto-correction is performed based on a priority (a usage frequency, etc.), a signal is outputted in the form of an alarm or vibration and the Delete key is changed to an auto-correction cancel key. Afterwards, when the user presses the cancel key, an automatically corrected word is restored to an original word, and when the user does not cancel, it continues to proceed. Also, afterwards, if the user does not press an auto-correction cancel key and continues to attach characters to a word being inputted, the cancel key is changed to the Delete key again.

While the basic principles of the present disclosure are described hereinabove, as embodiments to which they are applied, an example of an English keyboard is first described.

### <Particular embodiments>

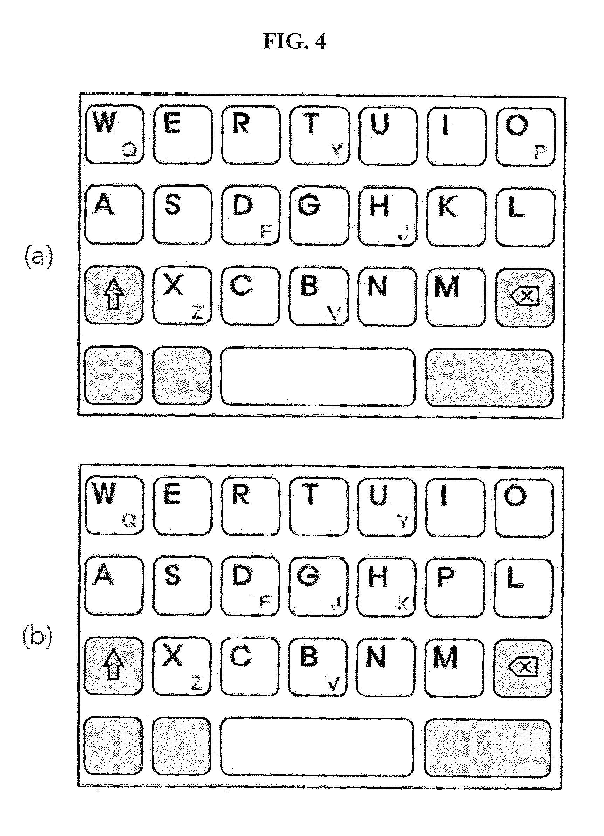

FIG. 4 illustrates preferred embodiments of a semi-compact keyboard 7-7-5 type layout for English language according to the present disclosure.

To configure a 7-7-5 type, ten keys currently arranged on the first row should be reduced by three. Referring to the diagram of FIG. 2, 'e', 'r', 't', 'u', 'i', and 'o' on the first row of the QWERTY keyboard have a very high usage frequency, while 'q', 'w', 'y', 'u', and 'p' has a lower usage frequency. Thus, three of the five are selected and replaced on adjacent keys on the left or right side as a subordinated character, resulting in three double keys. It is ideal to select three with a lowest usage frequency as a subordinated character, but a certain combination of two characters placed on the same key may have frequent conflict due to the consecutive press rule when inputting a word, and it is preferred to move to a closest position to a position occupied on the original full keyboard to minimize confusion of the user, but the present disclosure is not limited thereto.

Seeing the embodiment (a), 'q' with a lowest usage frequency on the first row is placed on its only adjacent key, a 'w' key, together as a subordinated character, 'p' is placed on its only adjacent key, a 'o' key, together as a subordinated character, and 'y' is placed on a 't' key together as a subordinated character. This arrangement rule has an effect of reducing the user confusion because replaced characters are moved to positions as close as possible to their positions in the original full keyboard, while maintaining efficiency in terms of a number of key inputs.

Seeing the second row, 'j' and 'k' have a lowest usage frequency on the diagram, and it can be seen, in the embodiment, 'f' and 'j' were moved to their adjacent keys. The reason is that if a number of keys is reduced to cause an unbalance between the left and right sides of the keyboard, a big difference between the moved positions and normal positions of the keys makes the user get confused, and therefore, each one is reduced from the side and right sides.

On the third row, adjacent 'z' and 'x' keys have a lowest usage frequency, but if the two are respectively moved to 'c' and 'v', the 'c' key and the 'v' key depart from their positions on the full keyboard, causing user confusion, so 'z' and 'v' become a subordinated character.

The embodiment of FIG. 3 described above may correspond to an embodiment suggesting that a position on the full original keyboard and similarity is important in the character arrangement as well as efficiency in terms of a number of key inputs.

However, this arrangement may actually put a user under a considerable input stress because there are a lot of English words containing -tt-, -ty-, -yt-, -oo-, -op-, -po-, and -pp-. If such words are inputted by a consecutive press method in this keyboard, their input values may be interpreted in many ways, a separate period of time or a function key such as a confirm key is needed to confirm an inputted character between each character, and otherwise, an unwanted error may occur, causing considerable stress. Of course, this embodiment will be more advantageous to products focusing on design benefits rather than efficiency.

Although it is difficult to avoid a consecutive press conflict due to the nature of the English language including lots of overlaps of the same character, the embodiment (b) shows an English semi-compact keyboard with the minimized likelihood of a conflict according to the present disclosure, and corresponds to an embodiment to which the second principle of key arrangement of the present disclosure described above is applied; "when a character with a lower usage frequency is moved to an adjacent left or right key with a higher usage frequency as a subordinated character to form a double key, the character is placed on a key with a lower probability that a conflict occurs between two characters placed together by a consecutive press".

An error that a user makes with a highest probability on a double key according to the present disclosure occurs when an unsubordinated character is inputted consecutively twice. That is, in the embodiment (a), to input "tt" or "oo", when a corresponding key is inputted consecutively twice, unintentionally "y" and "p" are inputted. In contrast, "ty", "yt", "op", "po", "yy", and "pp" have a reduced error in comparison to the former, and the reason is that at the time of inputting two characters of "ty", "yt", "op", and "po", under the precognition that the two characters intended to input are all placed on one key, the characters are carefully inputted in compliance with an input rule, and "yy" or "pp" has a reduction in error due to consecutive two double-clicks. This embodiment (b) corresponds to an embodiment that avoids a combination of unsubordinated characters inputted consecutively by the use of the principle.

In English language, there are a large number of words including "tt" or "oo", while words including "uu", "gg", or "hh" are very unusual. Considering this feature, in the embodiment (b), 'y' is replaced on a 'u' key, and 'p' is replaced to a 'k' key on the second row as a single key, hence, 'j' and 'k' are respectively placed as subordinated characters of a 'g' key and a 'h' key. 'd' on the second row and 'x' and 'b' on the third row hardly create words consisting of consecutive spelling.

Hereinafter, a description of display of a key image in this embodiment is provided.

In this embodiment, a subordinated character is not only displayed in different color on a different space from an unsubordinated character but also with a much smaller size than an unsubordinated character, and this display effect makes a keyboard look less complex. It looks as if only one character is placed on each key. Also, because of displaying with a very small size, when a subordinated character is pressed, a user can recognize that a character the user is now ready to press is a subordinated character more easily, and as a consequence, an input error reduces.

Also, this display has an effect of making a subordinated character look like a character to be inputted by a totally different method from an unsubordinated character, and thus is particularly suitable for a long press method, a swipe method, a press method using the Alt key. The lack of a consecutive press results, naturally, in freedom from a consecutive press error.

Hereinafter, a description of an English semi-compact keyboard 8-8-6 type according to the present disclosure is provided.

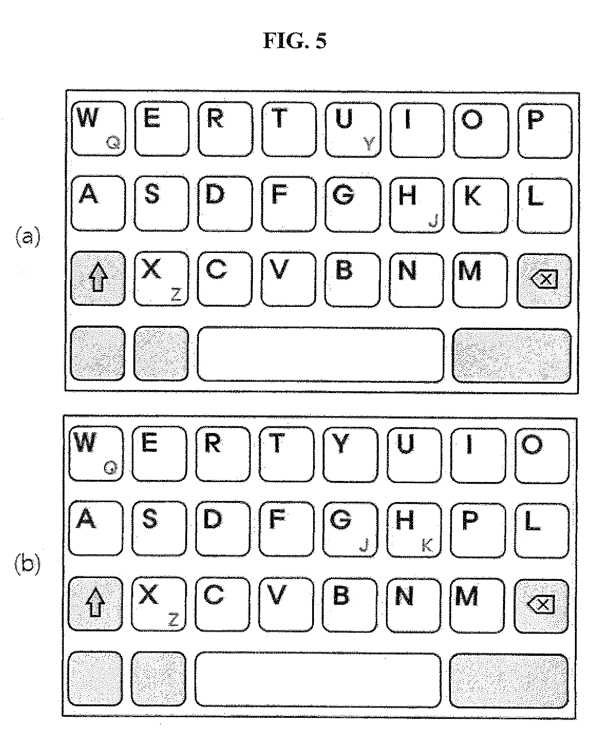

FIG. 5 illustrates embodiments of a semi-compact keyboard 8-8-6 type layout for English language according to the present disclosure.

These embodiments are available for a terminal with a wider display. (a) is an embodiment putting more weight on maintaining an original position of each character, and (b) is an embodiment focusing on efficiency. (a) is more advantageous in attracting a user than (b), and (b) provides higher satisfaction to a skillful user than (a).

First, the embodiment (a) is described. When compared to the above 7-7-5 type, 'p' on the first row is returned to an original position, 'f' on the second row, and 'v' on the third row. Because on the first row, 'p' has a more extraordinary position and a higher likelihood of conflict than 'y', it is more advantageous to move 'p' back to the original position than 'y'.

The embodiment (b) corresponds to the arrangement previously introduced when describing the auto-correction function above. Describing the arrangement principle in comparison to the embodiment (a), 'y' with a higher usage frequency is returned to an original position as a single key, and 'p' with a lower usage frequency is placed on a position of a'k' key on the second row. Thus, 'j' and 'k' are respectively replaced on the 'g' key and the 'h' key as a subordinated character. Here, 'p' is not placed as a subordinated character because it is often used in the form of 'pp'. This embodiment shows a more efficient arrangement with less likelihood of a consecutive press conflict than (a) although 'p' is placed on an extraordinary position, thereby producing an advantage of inputting without a risk of conflict.

Hereinabove, the key arrangement principle according to the present disclosure has been described together with the English semi-compact keyboard embodiment. Hereinafter, various embodiment suited to various languages are described. Some of the embodiments to be presented will describe a method of replacing a variant character that was not provided in the description of the English semi-compact keyboard because the English semi-compact keyboard is irrelevant.

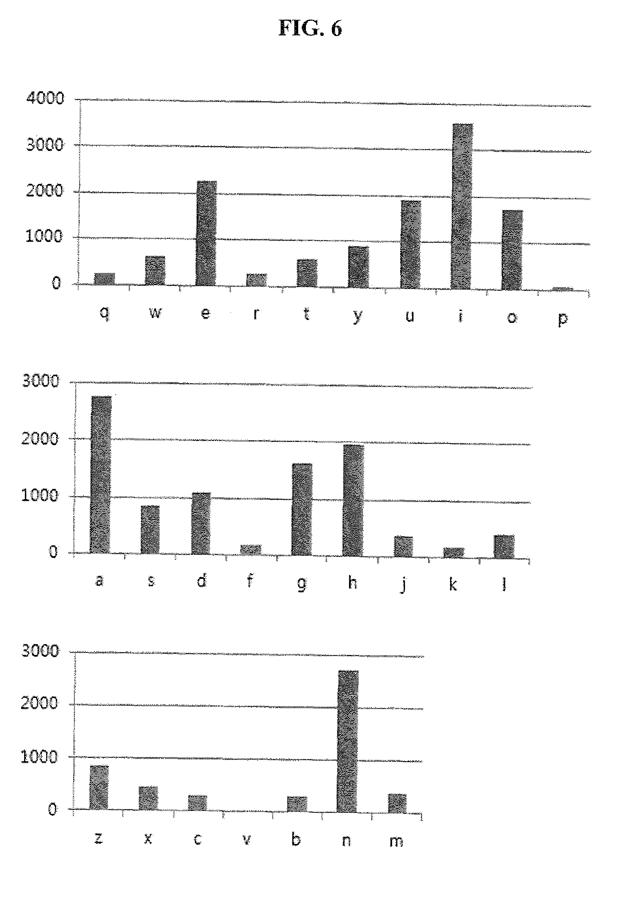

FIG. 6 illustrates a usage frequency graph of Roman alphabet (pinyin or Romanization system) for Chinese language input.

The drawing is a graph plotted by analyzing pinyin text data corresponding to 17,834 words in total. As can be seen from the graph, particularly 'q', 'r', 't', 'p', 'f', 'k', and 'c' have a low usage frequency except 'v' that is not used in Chinese language.

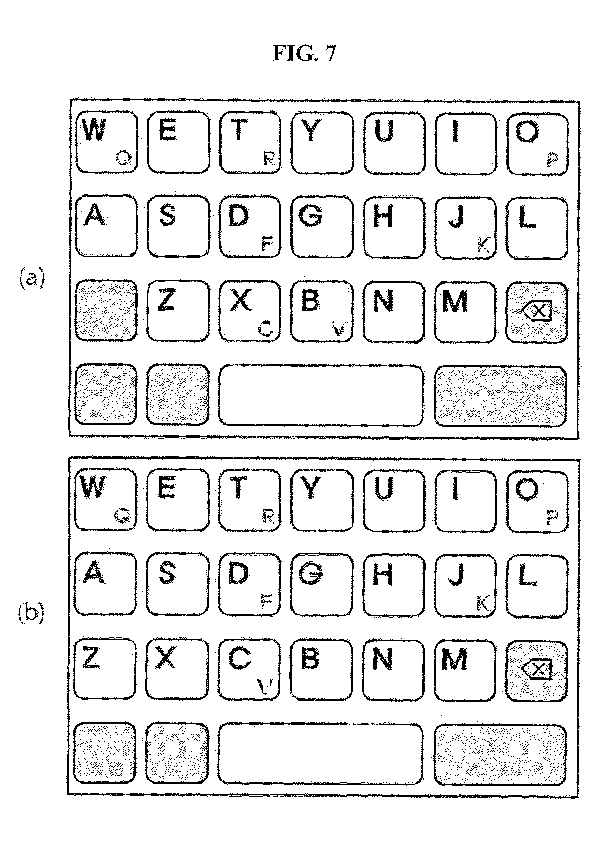

FIG. 7 illustrates preferred embodiments of a semi-compact keyboard 7-7-x type layout for Chinese language according to the present disclosure.

### (a) is an example of a 7-7-5 type.

'q', 'r', and 'p' with a lowest usage frequency on the first row are respectively placed on their adjacent keys, a 'w' key, a 't' key, and a 'o' key, as a subordinated character, 'f' and 'k' with a lowest usage frequency on the second row are respectively placed on their adjacent keys, a 'd' key and a 'j' key, as a subordinated character, and 'c' and 'v' with a lowest usage frequency on the third row are respectively placed on their adjacent keys, a 'x' key and a 'b' key, as a subordinated character.

Here, 'p' is placed together with 'o', which is a most preferred combination because a consecutive press conflict between the two characters is very rare in Chinese words.

### (b) is an example of a 7-7-6 type.

In the Chinese keyboard, when it comes to a keyboard for inputting traditional Chinese letters, Chinese characters, English alphabet is not an actual result a user intends to input and an actual result is Chinese characters, and alphabet is just a means for retrieving the Chinese characters from a database, so there is no need to distinguish capital and small letters and the Shift key is not necessary. Considering this feature, this embodiment corresponds to an example in which the Shift key is removed and instead 'z' occupies the position. Thereby there is an effect of making 'c' become independent as a single key.

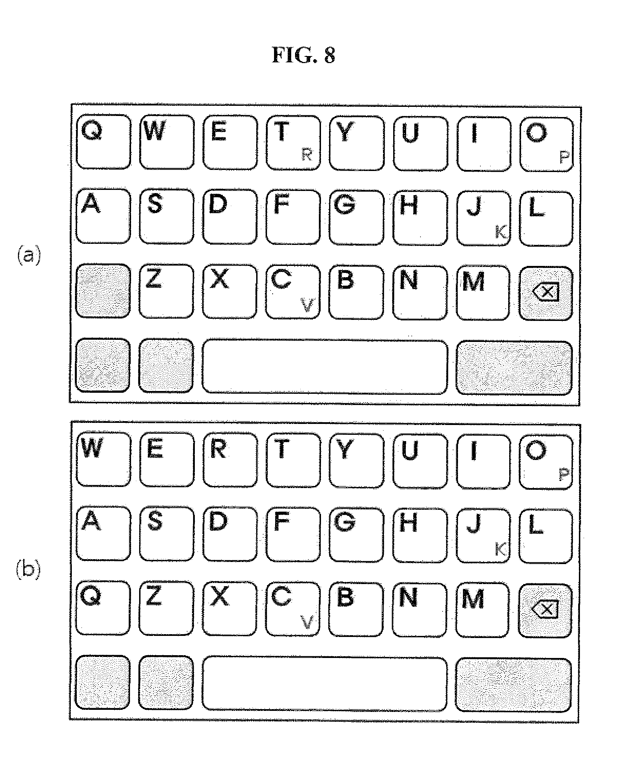

FIG. 8 illustrates preferred embodiments of a semi-compact keyboard 8-8-x type layout for Chinese language according to the present disclosure.

### (a) is an example of a 8-8-6 type.

This embodiment includes one more key each row as compared to a 7-7-5 type, and thus 'q', 'f', and 'c' each stand as a single key each row from the embodiment of FIG. 7 (a).

### (b) is an example of a 8-8-7 type.

This is also an embodiment in which the Shift key is removed and one more character key is present to which 'q' with a higher usage frequency than 'v' is moved from the first row as 'v' has a lowest usage frequency. Thereby, there is an effect of making 'r' become independent as a single key. Also, because 'q' is often placed together with 'z' in a telephone keypad, it was taken into consideration that users can associate and remember it without difficulty.

Here, the 7-7-6 type or 8-8-7 type is unsuitable as a keyboard for inputting pinyin itself without conversion to Chinese character. The reason is that if a sentence is inputted in pinyin, the Shift key should be provided to distinguish capital letters. Nevertheless, if this type is to be applied, a shift bar may be provided on a row containing a space bar, or a method that perceives a liftup-and-swipe gesture as soon as a character key is pressed and performs capitalization processing may be further provided.

Also, the 7-7-6 type or 8-8-7 type should provide the same English mode as a 7-7-5 type layout and a 8-8-6 type layout respectively when providing an English mode. This also should restore the Shift key. Alternatively, as previously described, a shift bar may be provided on a row containing a space bar, or a method that perceives a liftup-and-swipe gesture as soon as a character key is pressed and performs capitalization processing may be further provided.

Hereinafter, a description of an Indonesian semi-compact keyboard is provided.

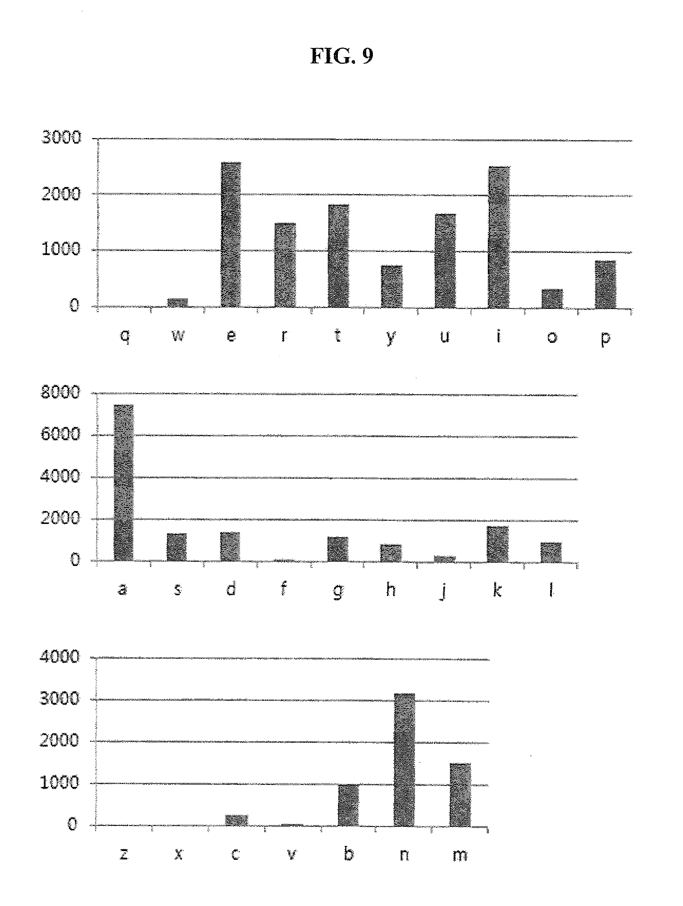

FIG. 9 illustrates a usage frequency table of Indonesian alphabet.

The graph shows a data analysis result of an Indonesian translation of an English version of The little prince from page 1 to page 10.

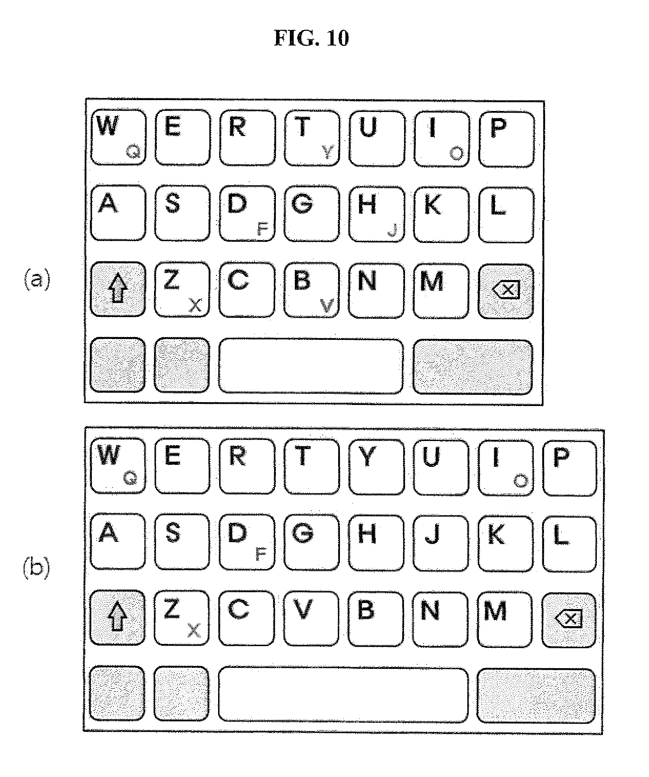

FIG. 10 illustrates preferred embodiments of semi-compact keyboard 7-7-5 type layout and 8-8-6 type layout for Indonesian language according to the present disclosure.

First, in (a), on the first row, considering a usage frequency and a location between keys, 'q', 'y', and 'o' are respectively placed on a 'w' key, a 't' key, and a 'o' key as a subordinated character, and on the second row, likewise, 'f' and 'j' with a lowest usage frequency are respectively placed on a 'd' key and a 'h' key as a subordinated character, and on the third row, likewise, 'z', 'x', and 'v' with a lowest usage frequency are placed such that 'z' is an unsubordinated character and 'x' is a subordinated character, resulting in a double key, and 'v' is placed on a 'b' key as a subordinated character, in consideration their locations.
(b) shows that 'y', 'j', and 'v' with a relatively high usage frequency each row in the arrangement of (a) are each independently placed as a single key on the corresponding row.

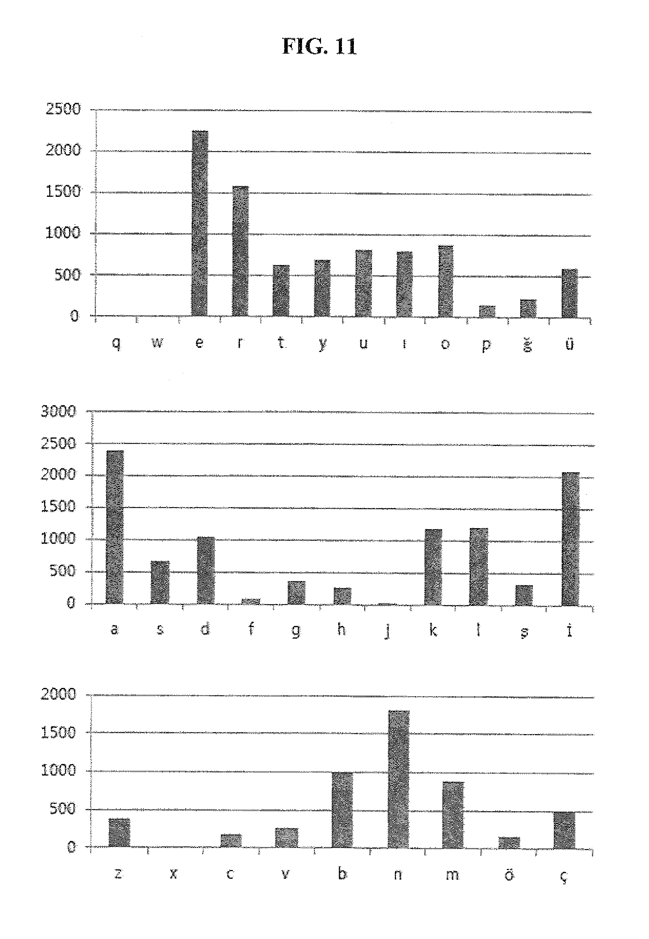

FIG. 11 illustrates a usage frequency table of Turkish alphabet.

The graph shows a data analysis result of a Turkish translation of an English version of The little prince from page 1 to page 10.

As can be seen from the graph, it can be seen that two more variant characters are present each row.

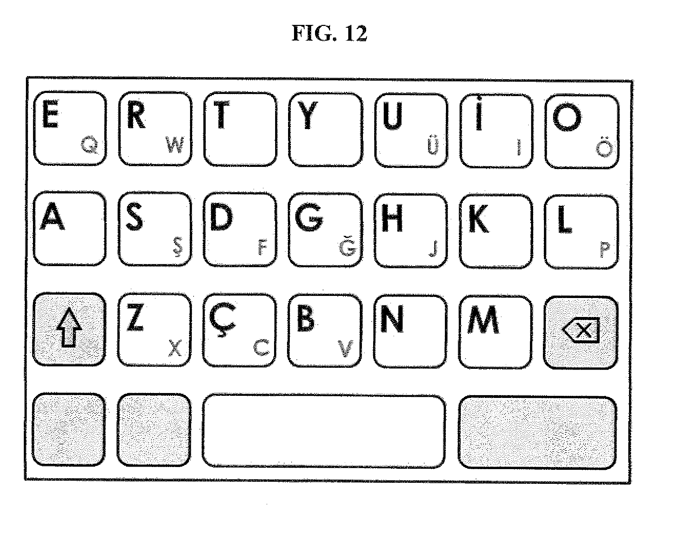

FIG. 12 illustrates a preferred embodiment of a semi-compact keyboard 7-7-5 type layout for Turkish language according to the present disclosure.

In the implementation of the Turkish keyboard, because 'Q', 'W', and 'X' are not an official Turkish character, they have a very low usage frequency and thus may be omitted. Also, Turkish characters further include variant characters created by attaching a pronunciation symbol (¨, ) to an original character ('u', 'o', 's', 'g', 'c') (in the present disclosure, `i' with no dot and 'i' with a dot are treated with the same relationship), and in the current English QWERTY keyboard, two more variant characters are present each row, and for this reason, a key area in a mobile device becomes narrower. This embodiment provides rearrangement in consideration of this feature of the Turkish keyboard.

First, variant characters additionally included on the right side each row as opposed to the QWERTY layout are placed on their original characters as a subordinated character, so a beginner user does not feel stressed at finding a new position, and the 7-7-5 type is completed with the remaining arrangement.

On the first row, 'q', 'w', and 'p' have a lowest usage frequency, and 'u', 'i', and 'o' should be placed together with variant characters, and thus 'q' and 'w' are respectively placed on a 'e' key and a 'r' key as a subordinated character, and 'p' is placed on a 'l' key on the second row as a subordinated character.

On the second row, because 'f and 'j' have a lowest usage frequency, they are respectively placed on a 'd' key and a 'h' key as a subordinated character. Also, it can be seen that 'p' moved down from the first row is placed on a 'l' key as a subordinated character.

On the third row, 'x' and 'c' have a lowest usage frequency, and thus 'x' is placed together with a 'z' key as a subordinated character, and 'c' is placed as a subordinated character while its variant character 'c' with cedilla having a higher usage frequency than 'c' is placed as an unsubordinated character together.

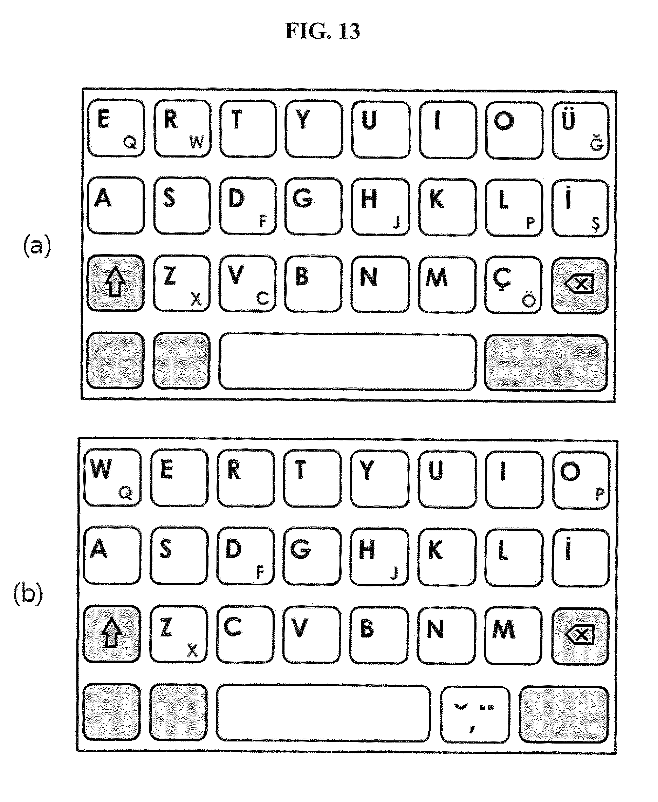

FIG. 13 illustrates preferred embodiments of a semi-compact keyboard 8-8-6 type layout for Turkish language according to the present disclosure.

First, seeing the embodiment (a) of the drawing, it can be seen that for each of variant characters on the right side of each row of the original keyboard, a double key is generated and placed using a character with a higher usage frequency as an unsubordinated character and a character with a lower usage frequency as a subordinated character.

When comparing a 7-7-5 type, another feature is that on the third row, 'c' forms a 'vc' double key with 'v' with a higher usage frequency than 'c' as an unsubordinated character.

In the embodiment (b), a variant character conversion key is provided on the right side of a space bar, and a variant character is inputted by pressing the variant character conversion key subsequently after pressing its original character. Thus, as shown in the drawing, each of original characters may be further placed as an unsubordinated character, and users will have less confusion caused by pressing too many characters by a double click.

Here, the variant character conversion key displays only each one pronunciation symbol that may be attached to a character able to create its variant character immediately when the corresponding character is pressed, and converts the inputted original character to the original character with the displayed pronunciation symbol when pressed.

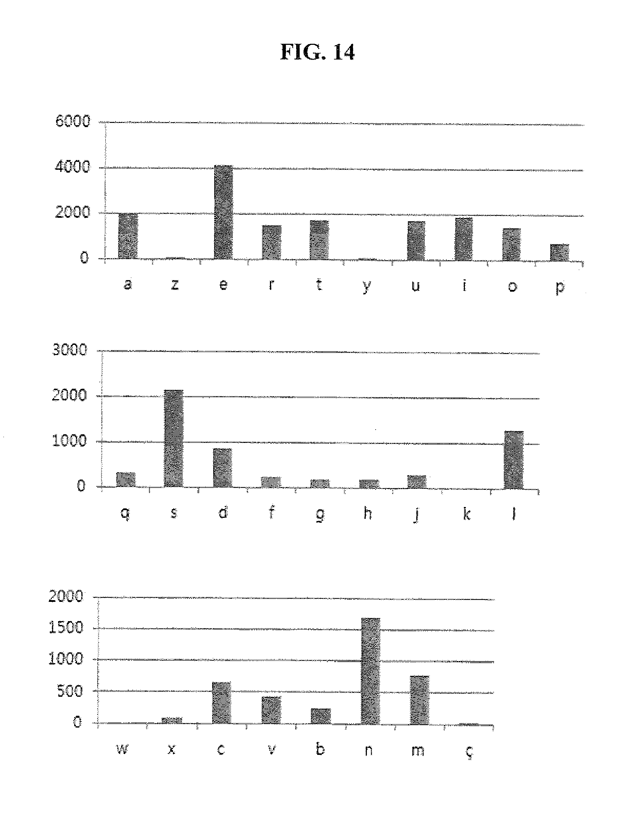

FIG. 14 illustrates a usage frequency table of French alphabet.

The graph shows a data analysis result of a French translation of an English version of The little prince from page 1 to page 10.

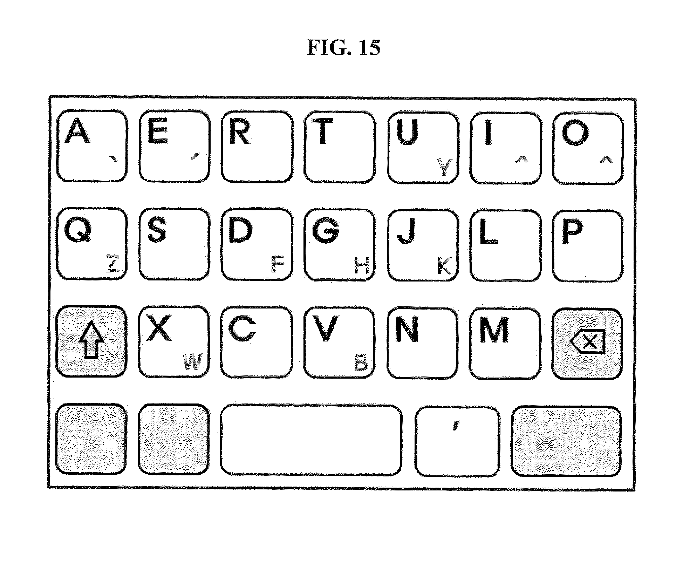

FIG. 15 illustrates a preferred embodiment of a semi-compact keyboard 7-7-5 type layout for French language according to the present disclosure.

French language is characterized in that vowels, 'a', 'e', `i', 'o', and 'u', all have various variant characters. Also, French language is characterized in that apostrophe(') is used a lot. The present disclosure proposes, in the implementation of the French keyboard, a distinct vowel input method to provide a wide key area and quick and convenient input. This is to quickly press a variant character of an original character by a consecutive press (or double click) only if the corresponding variant character has a high usage frequency and input a variant character with a low usage frequency using a variant character conversion key.

On the first row, among 'z', 'y', and 'p' with a lowest usage frequency, 'y' is placed as a subordinated character of a 'u' key, which is because spelling "tt" appears in French words a lot, a conflict may occur in the event of implementation by a consecutive press or double click method, and because 'u' with grave(') as a variant character of 'u' has a low usage frequency, it is inputted using a variant character conversion key. For the other vowels on the first row, their subordinated characters are set by their variant characters, so 'z' and 'p' are respectively placed the first key and the last key on the second row. 'z' is placed as a subordinated character of a 'q' key and 'p' is placed as a single key.

On the second row, because 'f', 'g', 'h', and 'k' have all a low usage frequency, they are placed as three double keys using combinations such as <df>, <gh>, and <jk> as shown in the drawing.

On the third row, 'w' is placed as a subordinated character of a 'x' key, and 'b' is placed as a subordinated character of a 'v' key. 'c' with cedilla is inputted by converting a 'c' key using a variant character conversion key.

A key with apostrophe as seen on the right side of a space bar in the drawing is a variant character conversion key.

On the first row, for each of 'a', `e`, 'i', and 'o' keys, a mark is further displayed to indicate a variant character that is inputted as a subordinated character. It helps to easily recognize a character that is inputted by a consecutive press (or double click) directly without using a variant character conversion key.

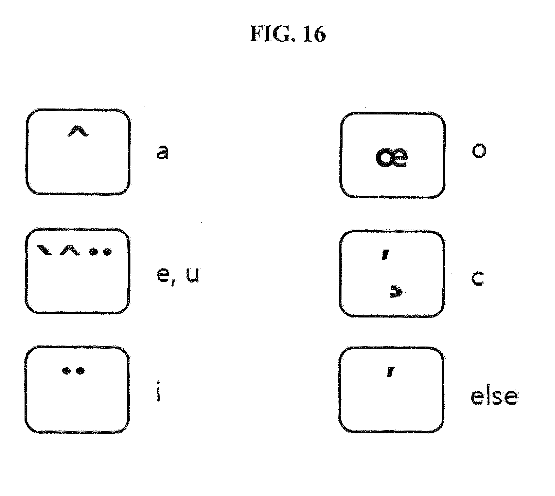

FIG. 16 illustrates a working principle of a variant character conversion key for French language.

When a user inputs 'a', a variant character conversion key displays the circumflex as shown in the drawing. That is, this variant character conversion key becomes a circumflex key. In this instance, when the user consecutively presses this key, the previously inputted 'a' is converted to 'a' with circumflex. It can be seen from the drawing that when 'o' is inputted, a function of converting to a character composed of 'o' and 'e' is displayed, and when 'i' is inputted, a function of converting to a character with umlaut is displayed. When 'e' and 'u' are inputted, conversion to three variant characters may be made, especially the grave, circumflex, and umlaut as shown in the drawing. Also, the variant character conversion key may continuously change these three functions by a consecutive press method. That is, when pressing the variant character conversion key once after pressing 'e', 'e' previously inputted is converted to 'e' with grave, and when subsequently pressing the variant character conversion key one more time, 'e' with grave is converted to 'e' with circumflex, and when subsequently pressing one more time, 'e' with circumflex is converted to 'e' with umlaut. Of course, when pressing one more time, it returns to a character with grave. When 'c' is inputted, 'c' with apostrophe and 'c' with cedilla are all possible, so two functions are provided distinguishably by a consecutive press as shown in the drawing. When pressing 'c' and then pressing the variant character conversion key once, conversion to 'c' with apostrophe is enabled, and when consecutively pressing twice, conversion to 'c' with cedilla is enabled.

In the cases other than 'a', 'e', 'i', 'o', 'u', and 'c' as described above, this variant character conversion key works as an apostrophe key.

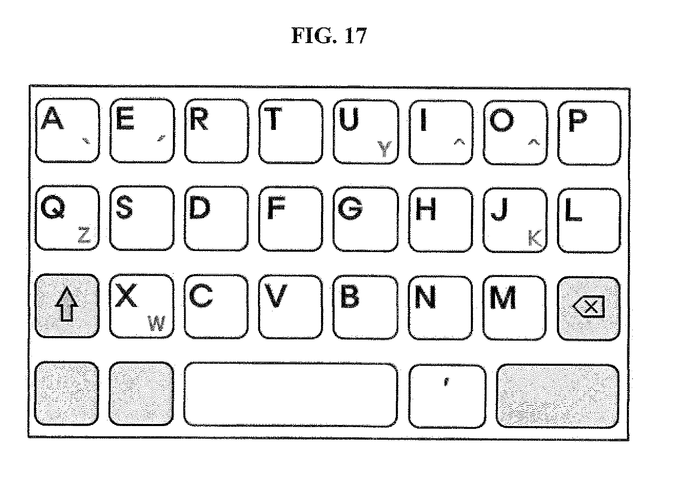

FIG. 17 illustrates a preferred embodiment of a semi-compact keyboard 8-8-6 type layout for French language according to the present disclosure.

There is a difference between the above 7-7-5 type and the 8-8-6 type in that 'p' is returned to the original position from the second row, <df> and <gh> are respectively restored to four single keys, and 'b' on the third row is provided as a single key. This 8-8-6 type is suitable for use in a device with a wider screen.

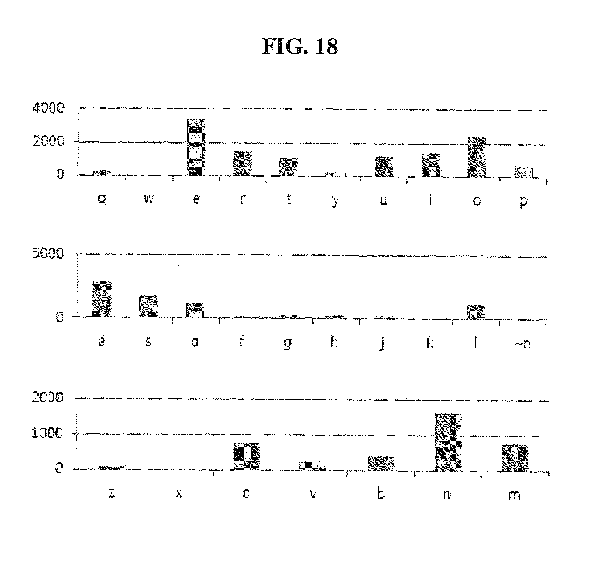

FIG. 18 illustrates a usage frequency table of Spanish alphabet.

The graph shows a data analysis result of a Spanish translation of an English version of The little prince from page 1 to page 10.

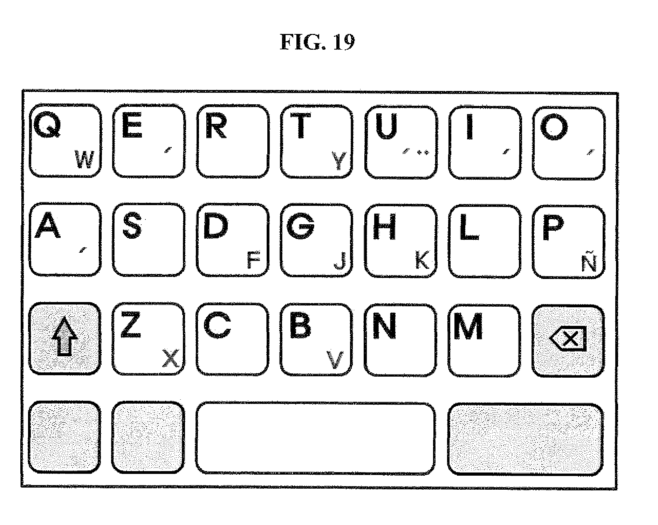

FIG. 19 illustrates a preferred embodiment of a semi-compact keyboard 7-7-5 type layout for Spanish language according to the present disclosure.

Spanish language includes a lot of variant characters with a pronunciation symbol for all of the vowels 'a', 'e', 'i', 'o', and 'u'.

In the embodiment according to the present disclosure embodiment, a variant character is inputted by a consecutive press method together with its original character. 'a', 'e', 'i', and 'o' are converted between an original character and a variant character with acute by a consecutive press (or double click) method, and a 'u' key further includes umlaut and allows selection and input of three characters by a consecutive press method.

On the first row, 'w' and 'y' with a low usage frequency are respectively placed on a 'q' key and a 't'' key as a subordinated character, and because a variant character is already placed on a 'o' key, 'p' is placed together with 'p' with tilt on the second row as an unsubordinated character.

On the second row, because 'f', 'g', 'h', 'j', and 'k' have a low usage frequency, they are grouped for each two and placed as three double keys. Providing in the form of <gj> and <hk> rather than <gh> and <jk> has an advantage of inputting "gh" being used frequency in an English mode more naturally. Of course, it is not necessarily essential.

On the third row, 'x' and 'v' are respectively placed as subordinated characters of a 'z' key and a 'b' key.

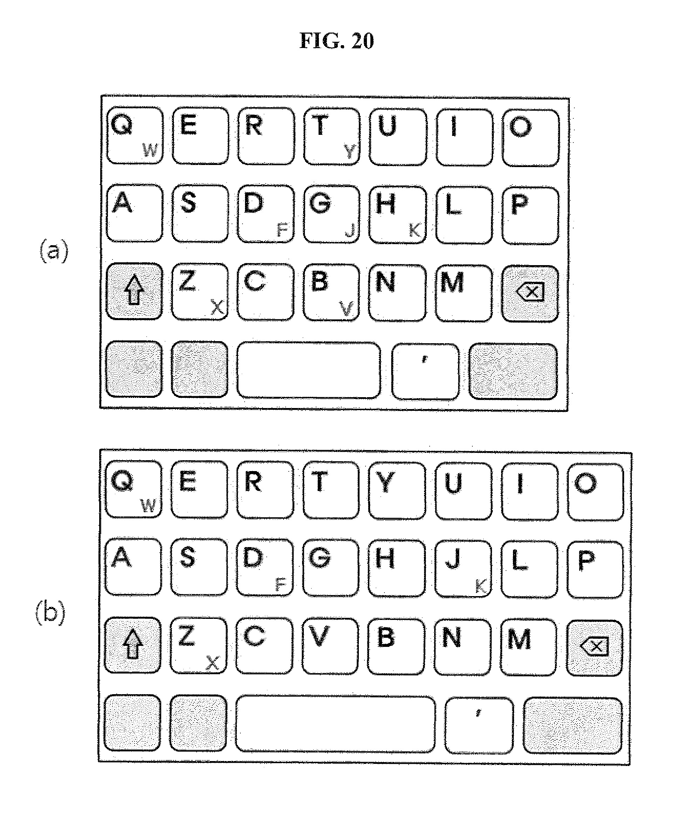

FIG. 20 illustrates another embodiment of semi-compact keyboard 7-7-5 type layout and 8-8-6 type layout for Spanish language according to the present disclosure.

These embodiments show an example of convenient input in both Spanish and English in one mode. In the previous embodiment, variant characters of vowels are inputted by a consecutive press, and thus it is susceptible to an error when entering "ee" or "oo" in English. According to these embodiments, because variant characters are inputted through conversion using a variant character conversion key provided on the right side of the space bar, it is possible to input "ee" or "oo" in English without any conflict.
(a) has the same layout as the embodiment of FIG. 19, and (b) is an embodiment of a 8-8-6 type. As compared to the 7-7-5 type, 'y', 'j', and 'v' are placed as a single key each row.

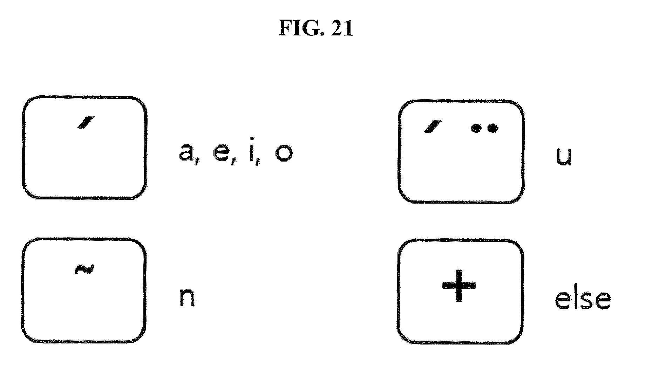

FIG. 21 illustrates a working principle of a variant character conversion key for Spanish language.

When a previously inputted character is 'a', 'e', 'i', and 'o', this variant character conversion key displays the acute as shown in the drawing, suggesting that it has a function of adding the acute to the previously inputted character when pressed. Also, when the variant character conversion key is consecutively pressed, the inputted 'a', 'e', 'i', and 'o' are respectively converted to 'a', 'e', 'i', and 'o' with acute.

When a previously inputted character is 'u', this variant character conversion key displays both the acute mark and the umlaut mark as shown in the drawing, suggesting that it has a function of adding the acute to the previously inputted 'u' when pressed once, and converting the inputted 'u' to u with acute when subsequently pressed once, and in the event of consecutive double press, converting to 'u' with acute when pressed first time and 'u' with umlaut when pressed second time.

When a previously inputted character is 'n', this variant character conversion key displays the tilt mark, suggesting that it has a function of adding the tilt to the previously inputted 'n' when pressed. Also, when the variant character conversion key is subsequently pressed, the inputted 'n' is converted to 'n' with tilt.

In other cases, a mark may be provided to indicate a variant character conversion key.

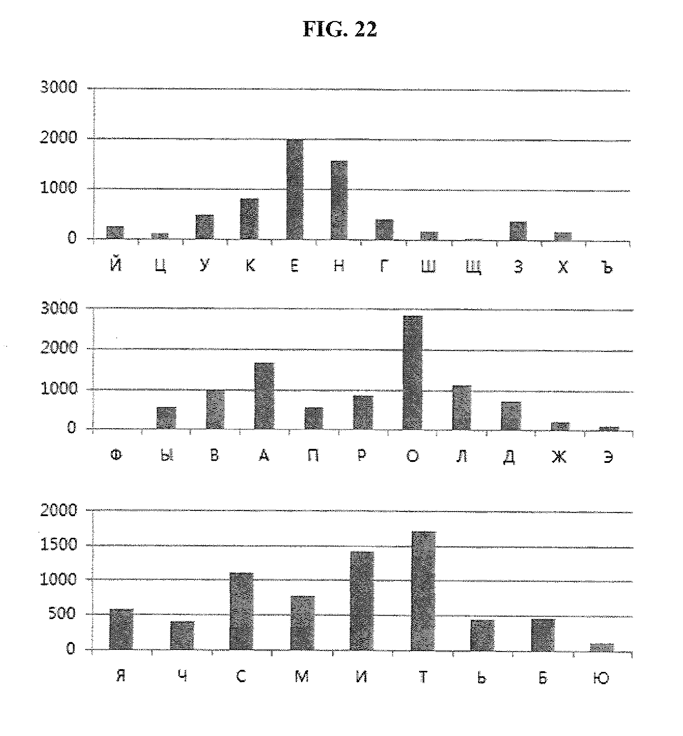

FIG. 22 illustrates a usage frequency table of Russian alphabet.

The graph shows a data analysis result of a Russian translation of an English version of The little prince from page 1 to page 10.

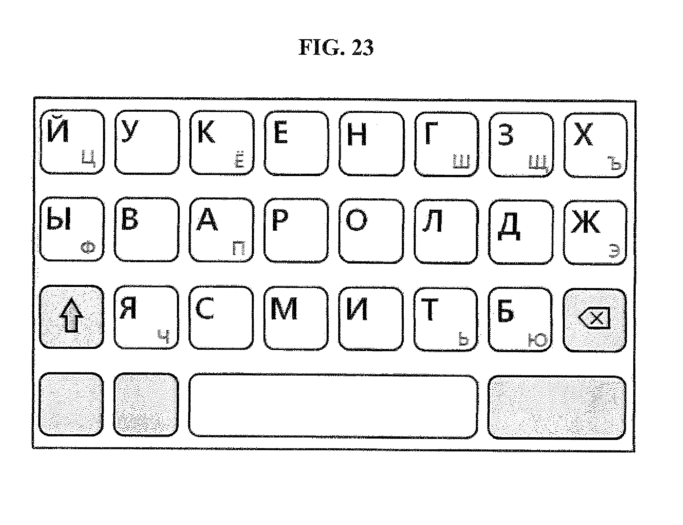

FIG. 23 illustrates a preferred embodiment of a semi-compact keyboard 8-8-6 type layout for Russian language according to the present disclosure.

The Russian full keyboard has a 12-11-9 type layout. That is, that many characters are placed thereon.

In this embodiment, on the first row, 'II' is placed as a subordinated character of a ' 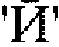 ' key, 'Ë' as a subordinated character of a ' 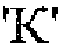 ' key, 'III' as a subordinated character of a ' 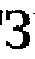 ' key, ' 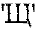 ' as a subordinated character of a '3' key, and ' 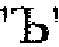 ' as a subordinated character of a 'X' key. Because on the first row, characters with a high usage frequency are rare, any combination does not make a big difference, but it is preferred to find a combination that avoids departing away from an original position while not causing a conflict, and provide it as a double key.

On the second row, 'Φ' is placed on a ' 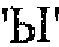 ' key, 'II' on a 'A' key, and ' 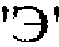 ' on a ' 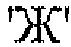 ' key' as a subordinated character, respectively.

On the third row, 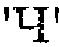 ' is placed on a ' 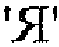 ' key, ' 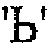 ' on a'T' key, and ' 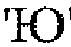 ' on a ' 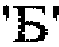 ' key.

This arrangement may cause a slight conflict in the event of a consecutive press, but such a case may be minimized, and its effectiveness will be sufficient in that input is enabled by a 8-8-6 type with a reduced layout compared to the 12-11-9 type keyboard.

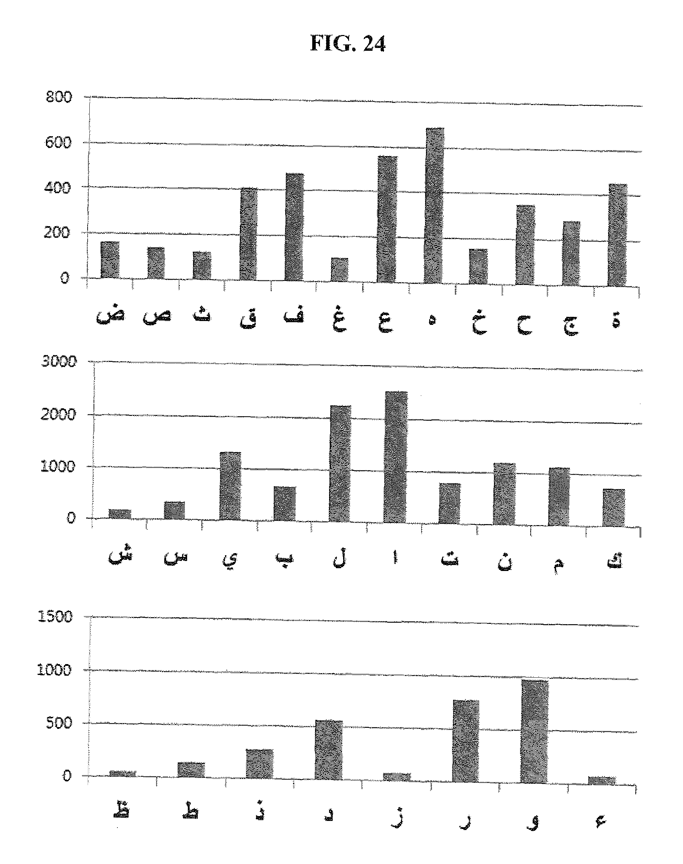

FIG. 24 illustrates a usage frequency table of Arabic alphabet.

The graph shows a data analysis result of an Arabic translation of an English version of The little prince from page 1 to page 10.

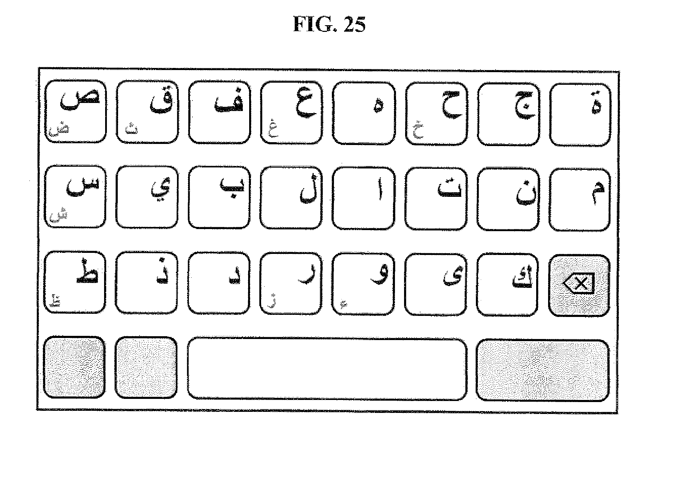

FIG. 25 illustrates a preferred embodiment of a semi-compact keyboard 8-8-7 type layout for Arabic language according to the present disclosure.

As the Shift key is unnecessary in an Arabic mode, it is characterized in that a character key occupies the position. Also, because Arabic language is written from right to left, it is further characterized in that a character disposed on the right side on each double key is an unsubordinated character.

The arrangement is made as shown in the drawing based on the usage frequency table of FIG. 24. Surprisingly, a character that should have been placed at the rightmost on the second row is moved down to the third row, but it is not generally difficult for a user to memorize a new arrangement. Also, characters placed as a subordinated character are nearly variant characters of their unsubordinated characters, which makes a user easily memorize the subordinated characters.

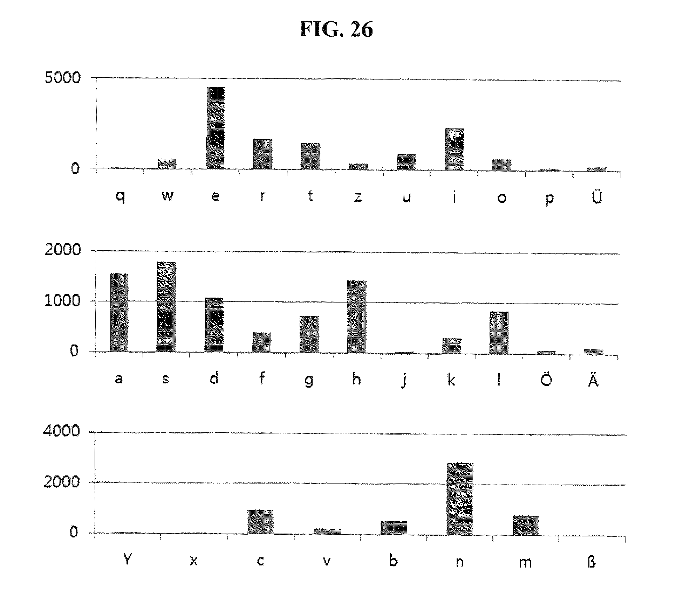

FIG. 26 illustrates a usage frequency table of German alphabet.

The graph shows a data analysis result of a German translation of an English version of The little prince from page 1 to page 10.

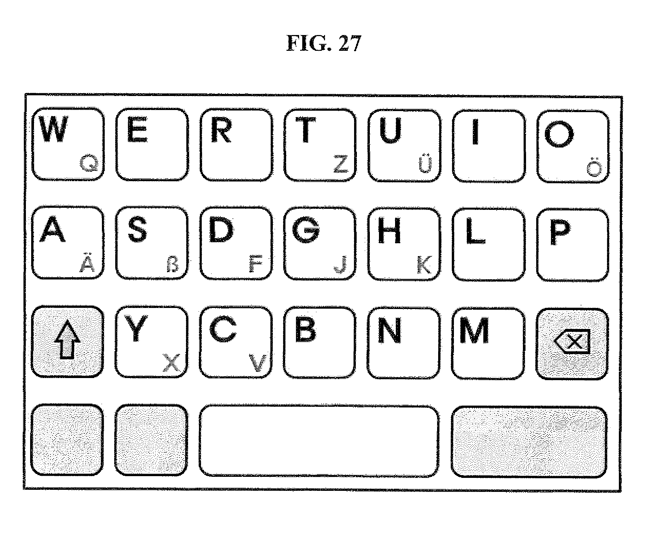

FIG. 27 illustrates a preferred embodiment of a semi-compact keyboard 7-7-5 type layout for German language according to the present disclosure.

The German keyboard has a 11-11-7 type further including three more variant character keys with umlaut for each of 'a', 'o', and 'u'. However, there is the Eszett on the upper row, and substantially it is a 12-11-9 type keyboard.

In this embodiment, variant characters with a low usage frequency are all placed as subordinated characters of original characters. The Eszett looks like beta, but preferably is placed together with 's'.

Accordingly, on the first row, 'q' and 'z' are respectively placed as subordinated characters of a 'w' key and a 't' key, but because 'o' with umlaut is already placed on a 'o' key, 'p' is moved down to the second row.

On the second row, 'f', 'j', and 'k' with a low usage frequency are respectively placed on a 'd' key, 'g' key, 'h' key as a subordinated character.

On the third row, 'x' and 'v' are respectively placed on a 'y' key and a 'c' key as a subordinated character.

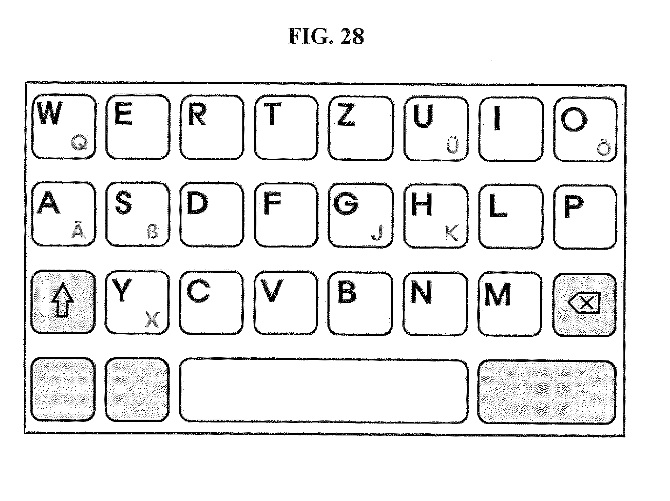

FIG. 28 illustrates a preferred embodiment of a semi-compact keyboard 8-8-6 type layout for German language according to the present disclosure.

The above embodiment increases the burden due to an increased number of key inputs and has a likelihood of conflict such as "tz", and thus a certain user may prefer a 8-8-6 type of this embodiment. A difference between the 7-7-5 type and the 8-8-6 type is that three double keys, <tz>, <df>, and <cv>, are return to their original positions as single keys. Its resulting effect is that there is a reduction in the increased number of key inputs and the likelihood of conflict.

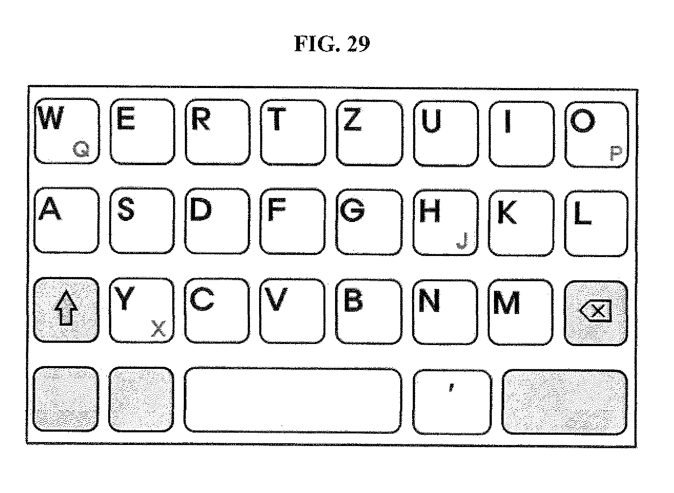

FIG. 29 illustrates another embodiment of a semi-compact keyboard 8-8-6 type layout for German language according to the present disclosure.

This embodiment relates to a method of inputting variant characters with umlaut using a variant character conversion key. The variant character conversion key (a key disposed on the right side of the space bar in the drawing) of this embodiment becomes a key for attaching umlaut as soon as 'a', 'o', and 'u' are inputted. That is, the umlaut is displayed on the shape of the key, and the key attaches the umlaut to the previously inputted 'a', 'o', and 'u' when pressed. To input the Eszett, this variant character conversion key is pressed following 's' to convert 's' to Eszett. That is, when 's' is inputted, the shape of this variant character conversion key is changed to the shape of Eszett or a shape indicative of it, and when pressed, converts the inputted 's' to Eszett.

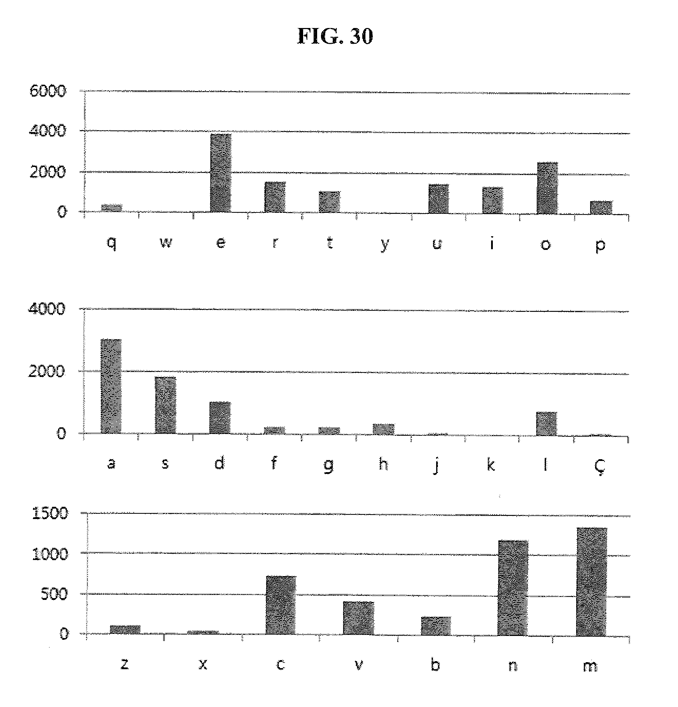

FIG. 30 illustrates a usage frequency table of Portuguese alphabet.

The graph shows a data analysis result of a Portuguese translation of an English version of The little prince from page 1 to page 10.

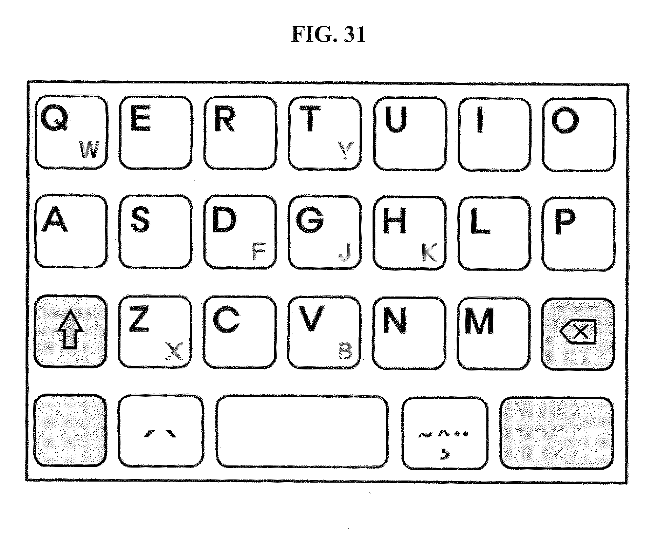

FIG. 31 illustrates a preferred embodiment of a semi-compact keyboard 7-7-5 type layout for Portuguese language according to the present disclosure.

As the Portuguese language has a lot of variant characters of vowels, this embodiment provides two separate variant character conversion keys. In the drawing, each one is placed on the left and right sides of the space bar.

On the first row, for original characters, 'w' and 'y' are respectively placed as subordinated characters of a 'q' key and a 't' key based on their usage frequency, and 'p' is moved down to the second row and placed as a single key, and on the second row, 'f', 'j', and 'k' with a low usage frequency are respectively placed as subordinated characters of a 'd' key, a 'g' key, and a 'h' key, and on the third row, 'x' and 'b' with a usage frequency are respectively placed as subordinated characters of a 'z' key and a 'v' key.

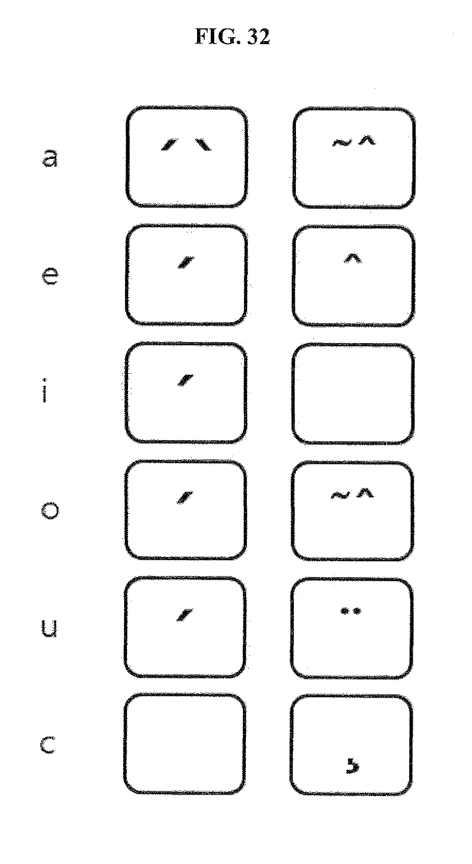

FIG. 32 illustrates a working principle of a variant character conversion key for Portuguese language.

For the variant character conversion key of this embodiment, these two variant character conversion keys are changed as soon as each of 'a', 'e', 'i', 'o', 'u', and 'c' is inputted as can be seen from the drawing. In the drawing, a key disposed on the left side of each row is a left variant character conversion key and a key disposed on the right side is a right variant character conversion key.

Describing how the variant character conversion key of this embodiment works with reference to the key in the drawing, when 'a' is inputted, the left variant character conversion key displays the acute and grave, and the right variant character conversion key displays the tilt and circumflex. Also, when a user consecutively presses the left variant character conversion key once, the acute is attached to 'a', when the user presses one more, the character is converted to 'a' with grave. When 'a' is pressed and then the right variant character conversion key is pressed once, the tilt is attached to 'a', and when pressed one more, the character is converted to 'a' with circumflex.

The variant character conversion keys on the both sides are preferably implemented to convert to a character suited to their function any time while 'a' is inputted using a character key. For example, 'a' is converted 'a' with acute by pressing 'a' and then pressing the left variant character conversion key once, and instantly when the right variant character conversion key is pressed, the character is converted to 'a' with tilt.

In the cases of'e', 'i', 'o', 'u', and 'c', how they work can be seen from the drawing.

Also, for this variant character conversion key, when 'a', 'e', 'i', 'o', 'u, and 'c' are not inputted, as shown in FIG. 31, preferably the left variant character conversion key displays the acute and grave, and the right variant character conversion key displays all the tilt, circumflex, umlaut and cedilla to let a user know which keys are placed on each key before the user presses them.

Also, it is obvious that the variant character conversion key of this embodiment may slightly vary in arrangement depending on what is pursued by those skilled in the art.

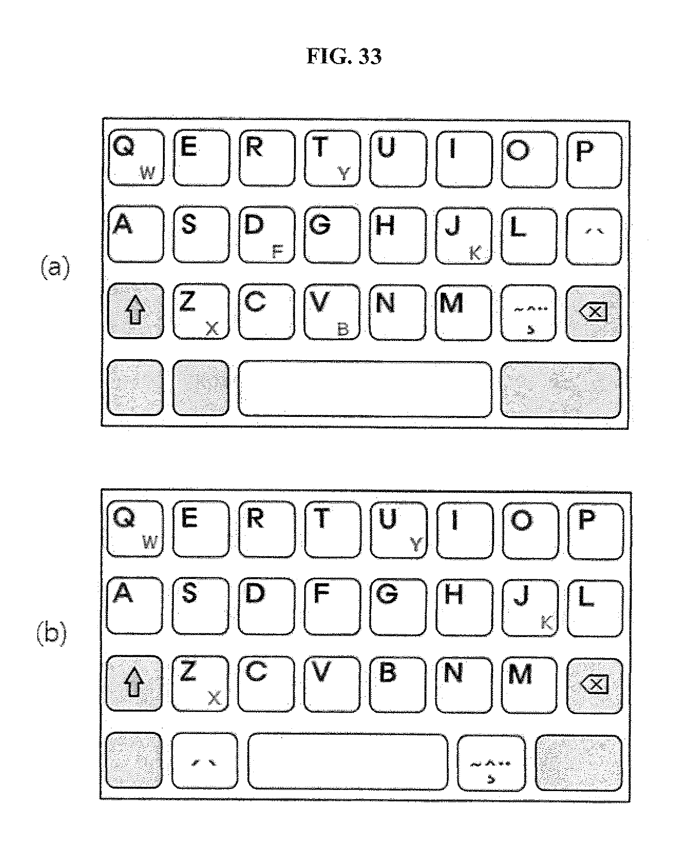

FIG. 33 illustrates preferred embodiments of a semi-compact keyboard 8-8-6 type layout for Portuguese language according to the present disclosure.
(a) is different from the 7-7-5 type in that a 'p' key is returned to the first row, and three double keys gathered in the middle of the second row are reduced by one so that each of 'g' and 'h' is placed on their original positions as single keys, and two variant character conversion keys are respectively placed on the rightmost of the second row and the third row.
(b) is different from (a) in that the variant character conversion keys are placed on the both sides of the space bar, and on the first row, 'y' is moved to a 'u' key, and each of'f of the second row and 'b' of the third row is placed as a single

This 8-8-6 layout is suitable for use in a device with a wider screen as compared to the 7-7-5 type, thereby allowing quicker and more convenient input on the device.

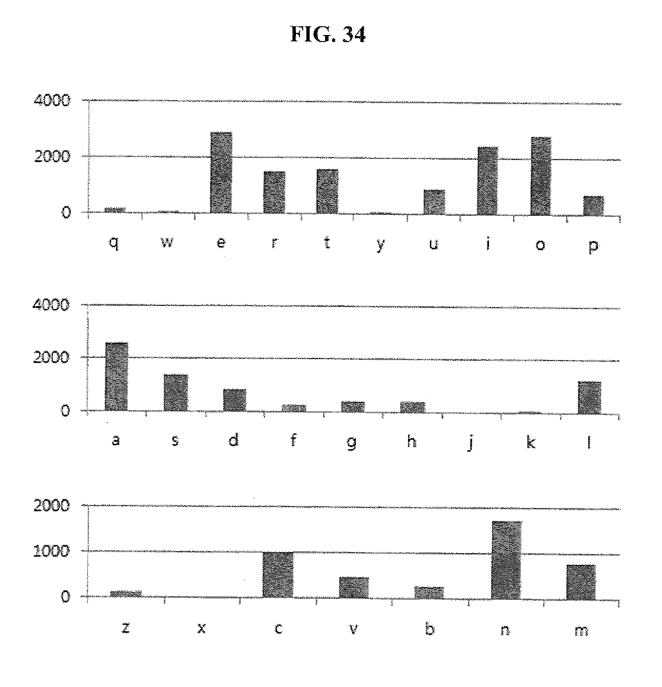

FIG. 34 illustrates a usage frequency table of Italian alphabet.

The graph shows a data analysis result of an Italian translation of an English version of The little prince from page 1 to page 10.

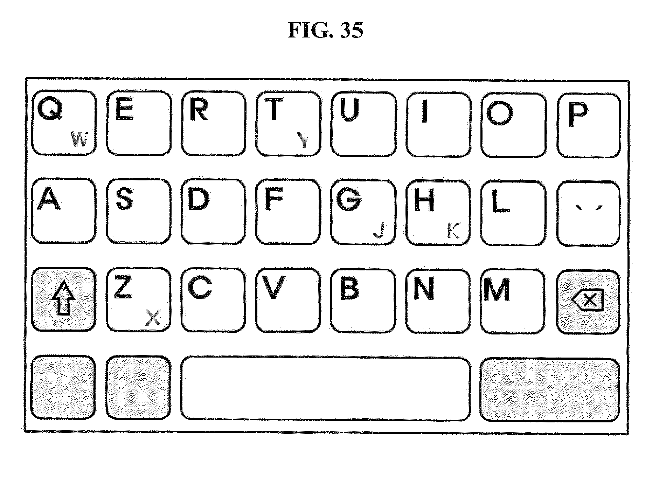

FIG. 35 illustrates a preferred embodiment of a semi-compact keyboard 8-8-6 type layout for Italian language according to the present disclosure.

Italian language has also a lot of vowels with pronunciation symbols as a variant character. They are the grave and the acute, and the acute is attached only to 'e' and the grave is attached to all the vowels. This embodiment provides a variant character conversion key on the rightmost of the second row, so that a desired shape as converted is inputted by pressing this variant character conversion key after pressing each vowel key.

The shape of the variant character conversion key displays the grave and acute as shown in the drawing, and when 'e' is inputted, the grave and acute are inputted alternately in a sequential order by a consecutive press, and when the remaining vowel is inputted, only the grave is displayed and attached to the inputted vowel.

Seeing the rearrangement of characters, on the first row, 'w' and 'y' with a low usage frequency are respectively placed on a 'w' key and a 't' key as a subordinated character, on the second row, 'j' and 'k' are respectively placed as subordinated characters of a 'g' key and a 'h' key, and on the third row, 'x' is placed as a subordinated character of a 'z' key.

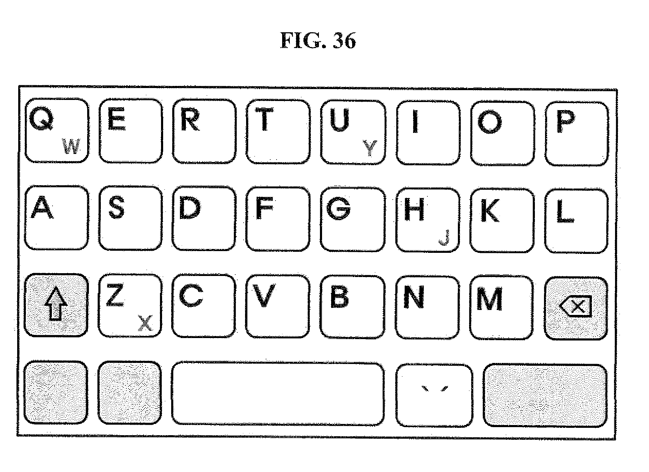

FIG. 36 illustrates another embodiment of a semi-compact keyboard 8-8-6 type layout for Italian language according to the present disclosure.

This embodiment is characterized in that 'w', 'y', 'j', and 'x', not Italian alphabet, are all placed on each key as a subordinated character, and Italian alphabet is all placed on each key as an unsubordinated character. Thus, the keyboard of this embodiment records the same number of key inputs as the full keyboard when inputting Italian language.

The variant character conversion key is provided next to the space bar.

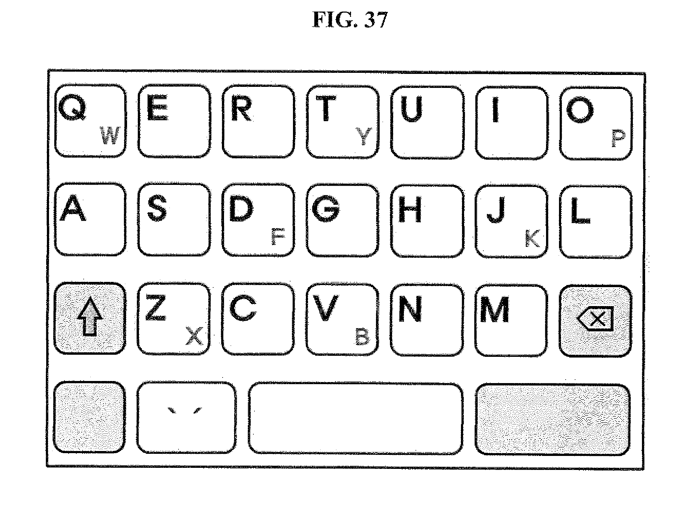

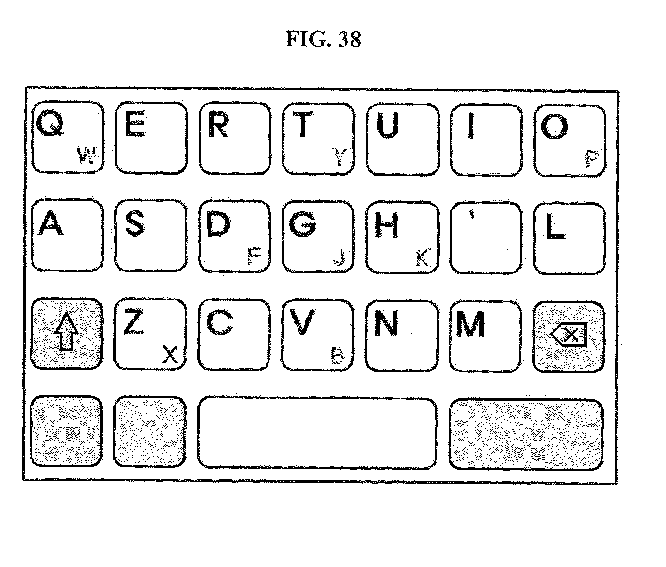

FIGS. 37 and 38 illustrate embodiments of a semi-compact keyboard 7-7-5 type layout for Italian language according to the present disclosure.

Each of keys with a low usage frequency is moved to form a double key together with its adjacent key. The embodiment of the 7-7-5 type has a disadvantage of a conflict phenomenon occurring in Italian language, but has advantage of the sufficiently optimized number of key inputs and being suitable for a smaller device.

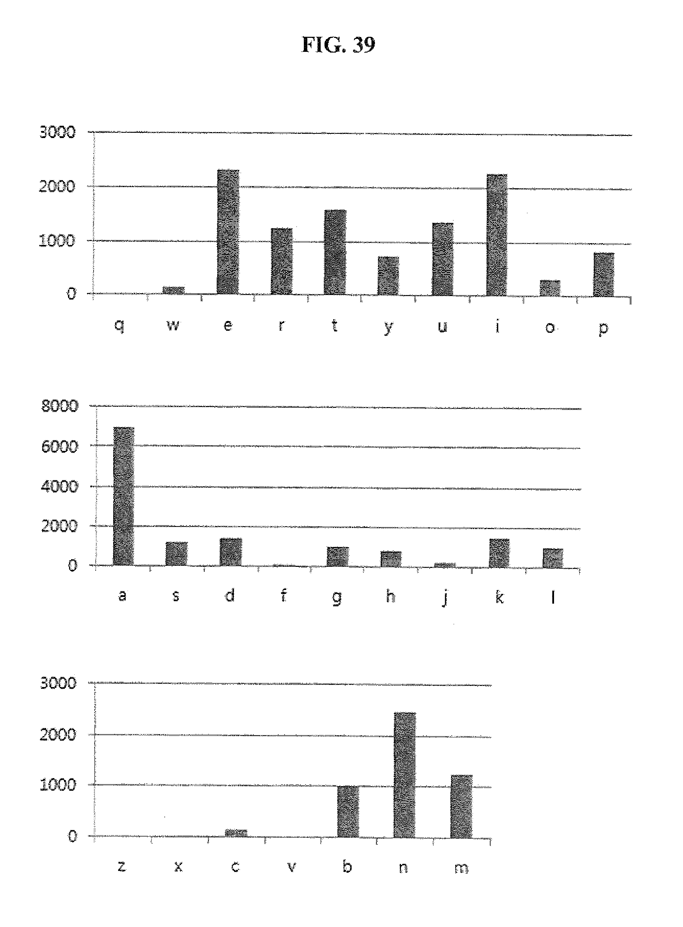

FIG. 39 illustrates a usage frequency table of Malay alphabet.

The graph shows a data analysis result of a Malay translation of an English version of The little prince from page 1 to page 10.

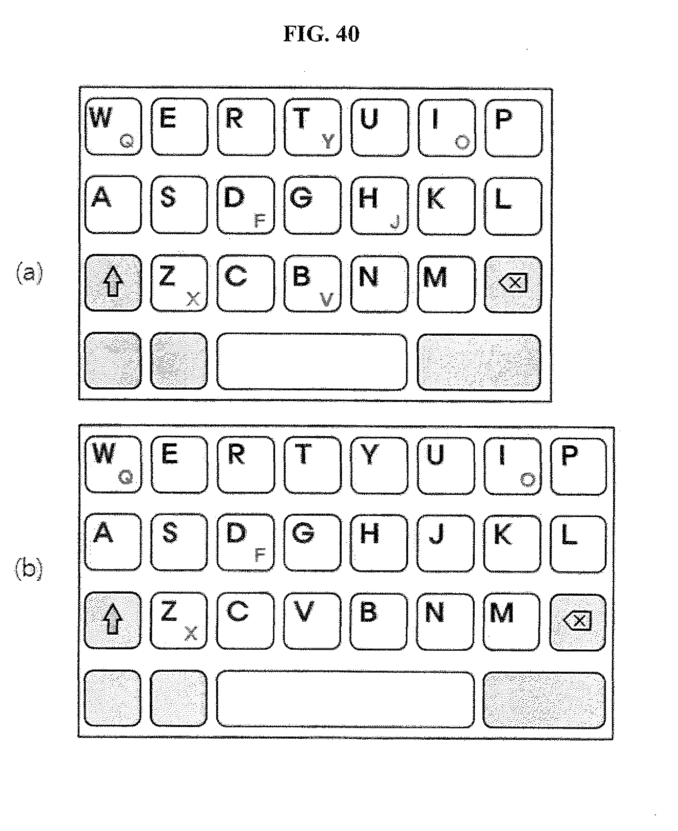

FIG. 40 illustrates preferred embodiments of semi-compact keyboard 7-7-5 type layout and 8-8-6 type layout for Malay language according to the present disclosure.
(a) is a 7-7-5 type. As can be seen from the usage frequency table, on the first row, 'q', 'y', and 'o' with a lowest usage frequency are respectively placed on a 'w' key, a 't' key, and a 'i' key as a subordinated character in consideration of a position and a conflict phenomenon, and on the second row, 'f' and 'j' are respectively placed on a 'd' key and a 'h' key as a subordinated character, and on the third row, 'x' and 'v' are respectively placed on a 'z' key and a 'b' key as a subordinated character.
(b) is a 8-8-6 type, and there is a difference between the embodiment (a) and the embodiment (b) in that each of 'y', 'j', and 'v' is restored and placed as a single key on each row.

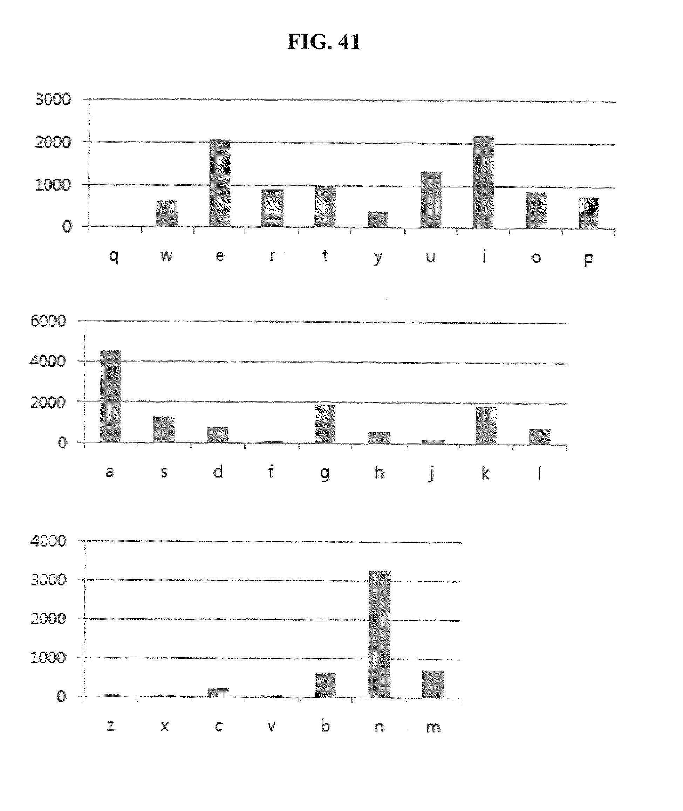

FIG. 41 illustrates a usage frequency table of Javanese alphabet.

The graph shows a data analysis result of a Javanese translation of an English version of The little prince from page 1 to page 10.

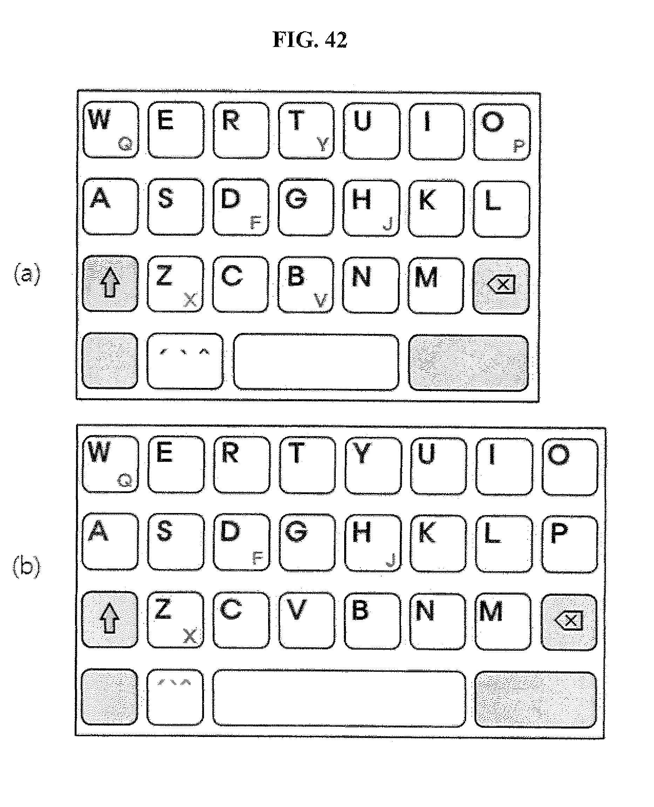

FIG. 42 illustrates preferred embodiments of semi-compact keyboard 7-7-5 type layout and 8-8-6 type layout for Javanese language according to the present disclosure.
(a) is a 7-7-5 type. As can be seen from the usage frequency table, on the first row, 'q', 'y', and 'p' with a lowest usage frequency are respectively placed on a 'w' key, a 't' key, and a 'o' key as a subordinated character in consideration of a position and a conflict phenomenon, and on the second row, 'f' and 'j' are respectively placed on a 'd' key and a 'h' key as a subordinated character, and on the third row, 'x' and 'v' are respectively placed on a 'z' key and a 'b' key as a subordinated character.
   Also, a variant character conversion key is provided next to the space bar, so that when 'e' is inputted, the acute, grave, and circumflex may be each attached to 'e' using the variant character conversion key by a consecutive press.
(b) is a 8-8-6 type, and there is a difference between the embodiment (a) and the embodiment (b) in that on the first row, each of 'y' and 'o' is restored as a single key, and instead, 'p' is moved down to the second row, and on the third row, 'v' is restored and placed as a single key.

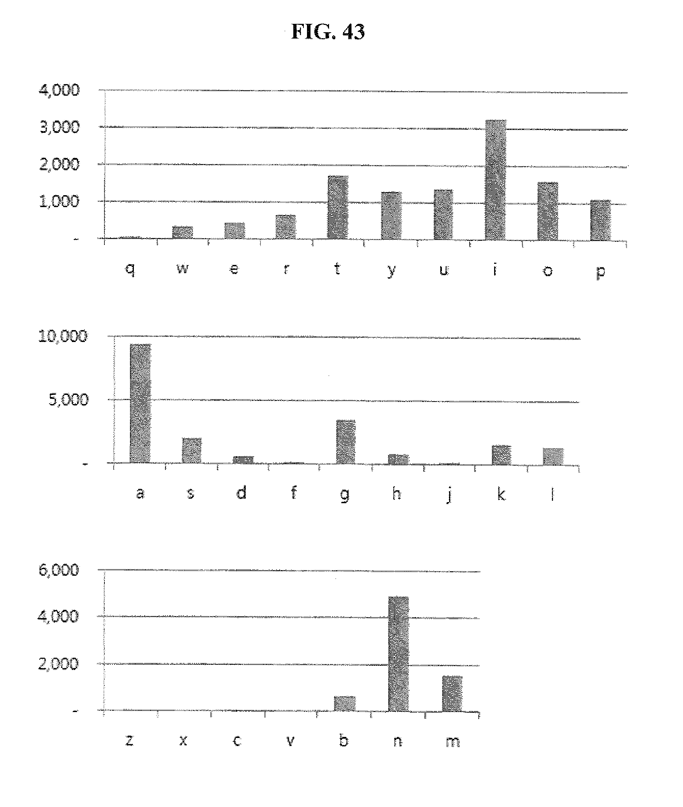

FIG. 43 illustrates a usage frequency table of Filipino alphabet.

The graph shows a data analysis result of a Filipino translation of an English version of The little prince from page 1 to page 10.

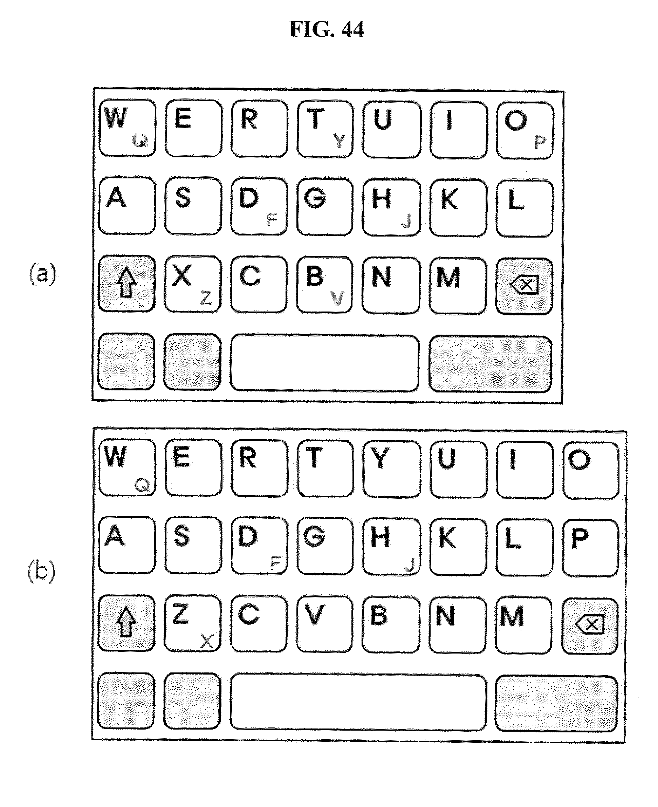

FIG. 44 illustrates preferred embodiments of semi-compact keyboard 7-7-5 type layout and 8-8-6 type layout for Filipino language according to the present disclosure.
(a) is a 7-7-5 type. Seeing the usage frequency table, on the first row, 'w' and 'e' have a lower usage frequency than 'y' or 'p' but when 'q', 'w', and 'e' consecutively placed are all attached to different keys, positions of each key are too different from the existing full keyboard, resulting in reduced efficiency, and thus, such rearrangement is avoided. Accordingly, in this embodiment, on the first row, 'q', 'y', and 'p' are respectively placed on a 'w' key, a 't' key, and a 'o' key as a subordinated character in consideration of a position and a conflict phenomenon. Also, on the second row, 'f and 'j' are respectively placed on a 'd' key and a 'h' key as a subordinated character, and on the third row, 'x' and 'v' are respectively placed on a 'z' key and a 'b' key as a subordinated character.
(b) is a 8-8-6 type, and there is a difference between the embodiment (a) and the embodiment (b) in that on the first row, each of 'y' and 'o' is restored as a single key, and instead, 'p' is moved down to the second row, and on the third row, 'v' is restored and placed as a single key.

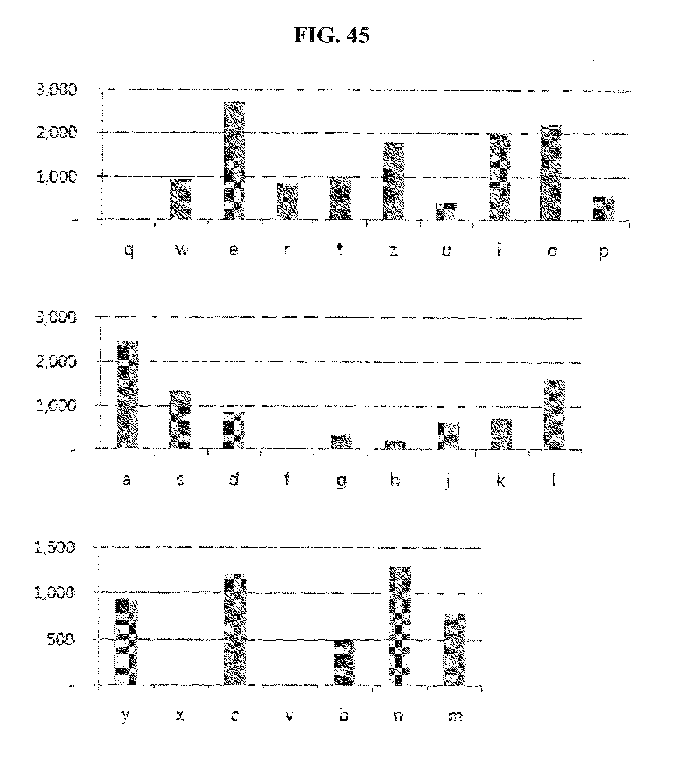

FIG. 45 illustrates a usage frequency table of Polish alphabet.

The graph shows a data analysis result of a Polish translation of an English version of The little prince from page 1 to page 10.

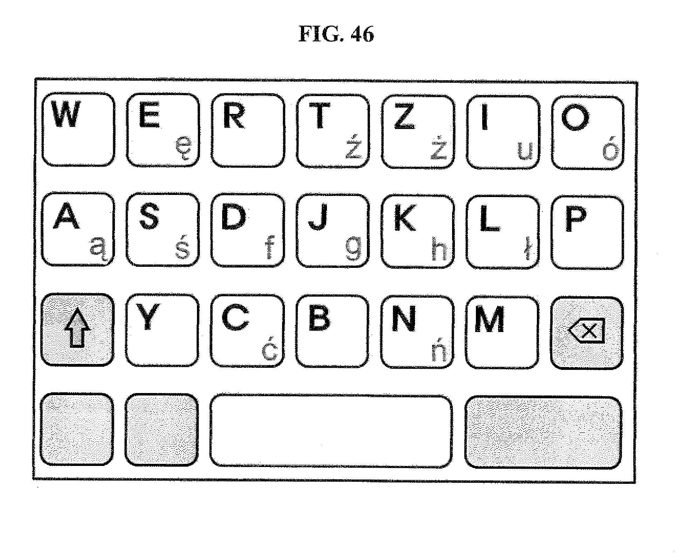

FIG. 46 illustrates a preferred embodiment of a semi-compact keyboard 7-7-5 type layout for Polish language according to the present disclosure.

Polish language further has various variant characters as can be seen from the drawing. These many variant characters are respectively placed on keys of their original characters as a subordinated character, so it is preferred to separately provide an English mode because it is inconvenient to use this keyboard without an English mode. Thus, in this embodiment, 'q', 'x', and 'v' not used in Polish language are not placed. Of course, they may be placed and used at a time by those skilled in the art.

On the first row, 'u' with a low usage frequency is placed on a 'i' key as a subordinated character, 'p' is moved down to the second row and placed on the rightmost as a single key. On the second row, 'f', 'g', and 'h' with a low usage frequency are respectively placed on a 'd' key, a 'j' key, and a 'k' key as a subordinated character. On the third row, 'x' and 'v' not used are omitted to fit the number of keys.

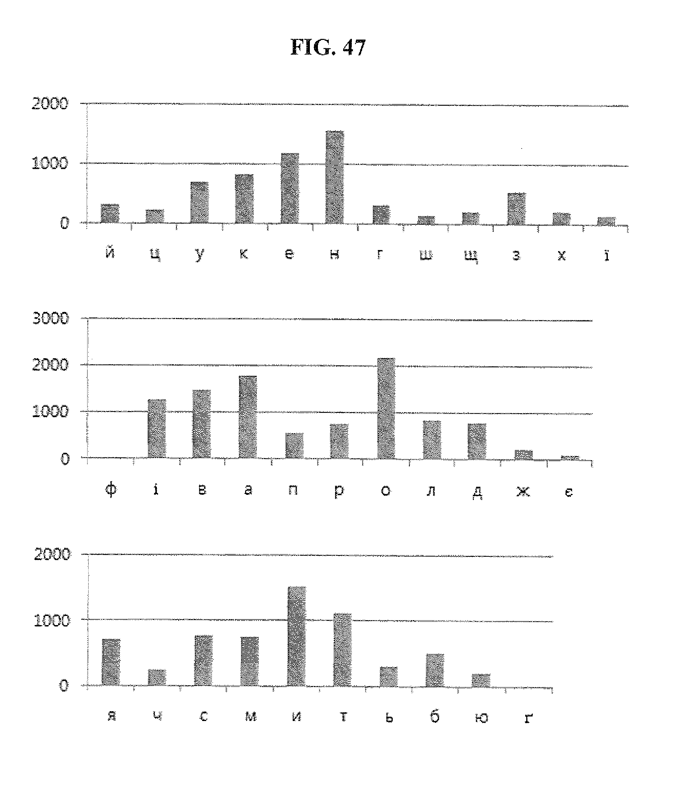

FIG. 47 illustrates a usage frequency table of Ukrainian alphabet.

The graph shows a data analysis result of a Ukrainian translation of an English version of The little prince from page 1 to page 10.

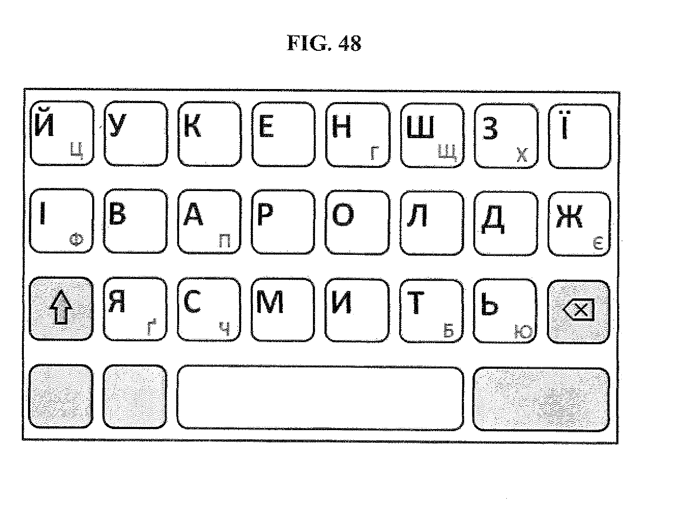

FIG. 48 illustrates a preferred embodiment of a semi-compact keyboard 8-8-6 type layout for Ukrainian language according to the present disclosure.

In Ukrainian language, when a character with a lowest usage frequency is moved to another, a conflict occurs too frequently, and thus, in this embodiment, a key with a usage frequency as low as possible is placed as a subordinated character to avoid a conflict. On the first row, ' 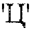 ' is placed on a ' 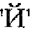 ' key, 'Γ' on a 'H' key, 'III' on a 'III' key, and 'X' on a '3', respectively, as a subordinated character, and on the second row, 'Φ' is placed on a `I' key, 'II' on a 'A' key, '∈' on a ' 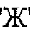 ' key, respectively, as a subordinated character, and on the third row, T' is placed on a '' key, ' 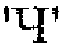 ' on a 'C' key, ' 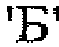 ' on a 'T' key, ' 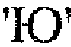 ' on a ' 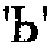 ' key, respectively, as a subordinated character.

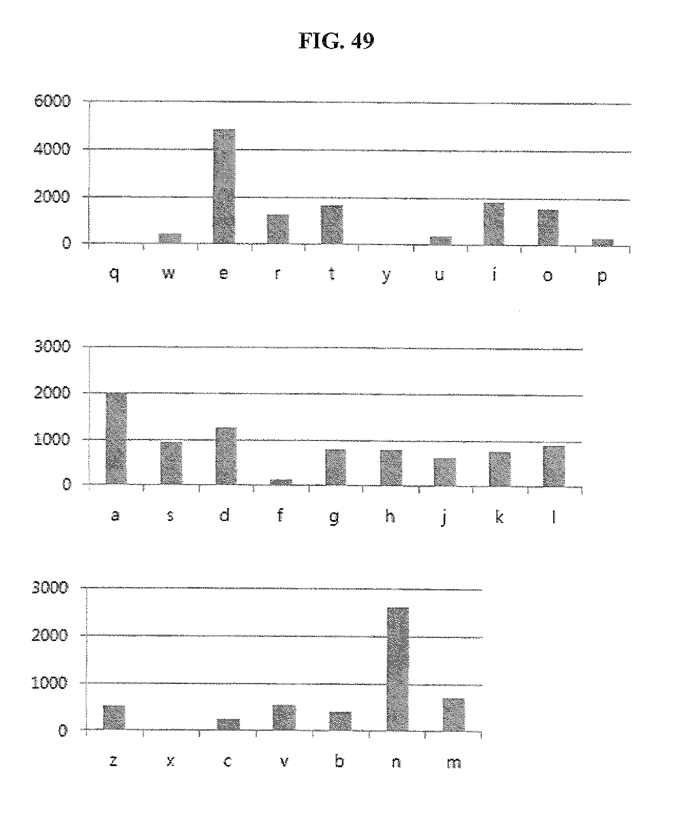

FIG. 49 illustrates a usage frequency table of Dutch alphabet.

The graph shows a data analysis result of a Dutch translation of an English version of The little prince from page 1 to page 10.

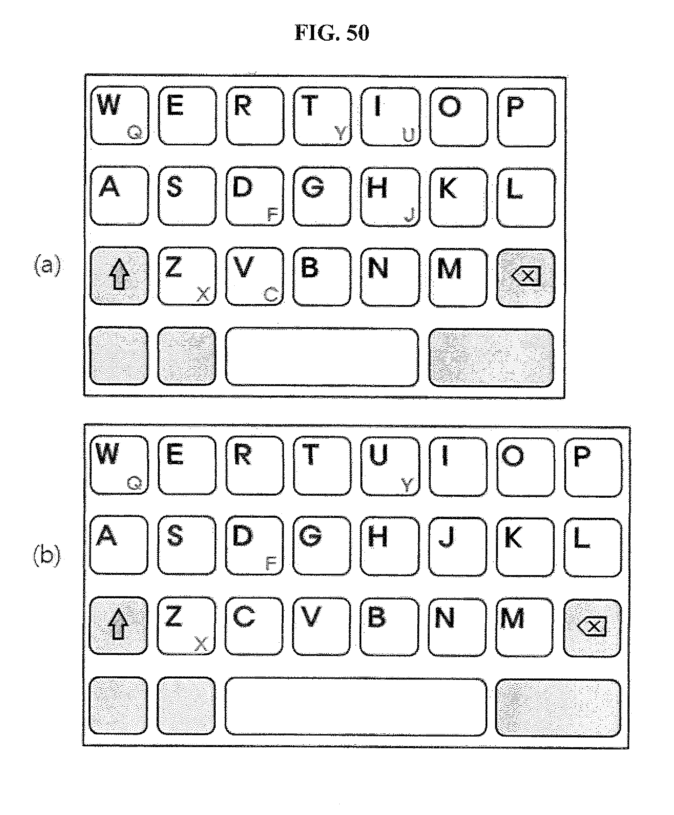

FIG. 50 illustrates preferred embodiments of semi-compact keyboard 7-7-5 type layout and 8-8-6 type layout for Dutch language according to the present disclosure.
(a) is a 7-7-5 type. As can be seen from the usage frequency table, on the first row, 'q', 'y', and 'p' with a lowest usage frequency are respectively placed on a 'w' key, a 't' key, and a 'o' key as a subordinated character in consideration of a position and a conflict phenomenon, and on the second row, 'f and 'j' are respectively placed on a 'd' key and a 'h' key as a subordinated character, and on the third row, 'x' and 'c' are respectively placed on a 'z' key and a 'v' key as a subordinated character.
(b) is a 8-8-6 type, and there is a difference between the embodiment (a) and the embodiment (b) in that on the first row, 'u' is restored as a single key and 'y' is moved to a subordinated character of 'u', and 'j' on the second row and 'c' on the third row are restored and placed as a single key.

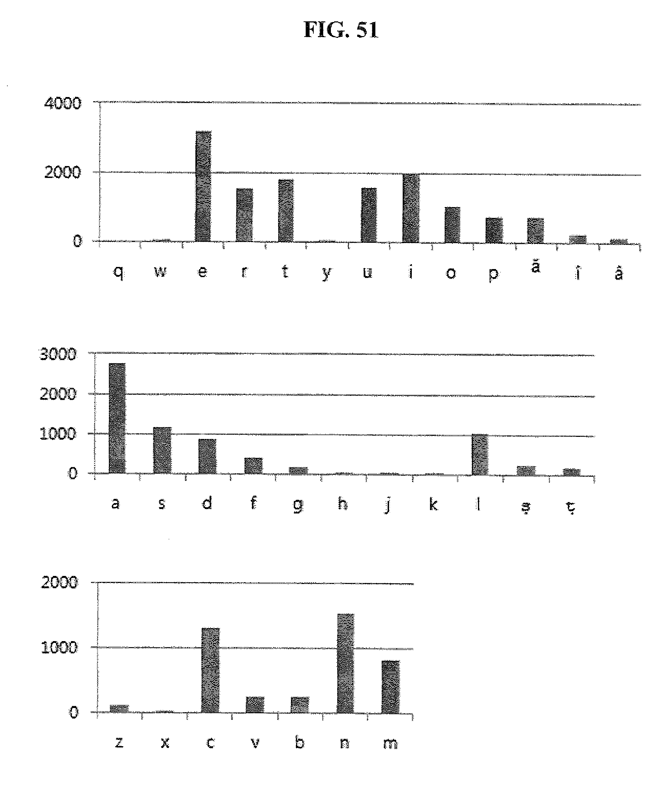

FIG. 51 illustrates a usage frequency table of Romanian alphabet.

The graph shows a data analysis result of a Romanian translation of an English version of The little prince from page 1 to page 10.

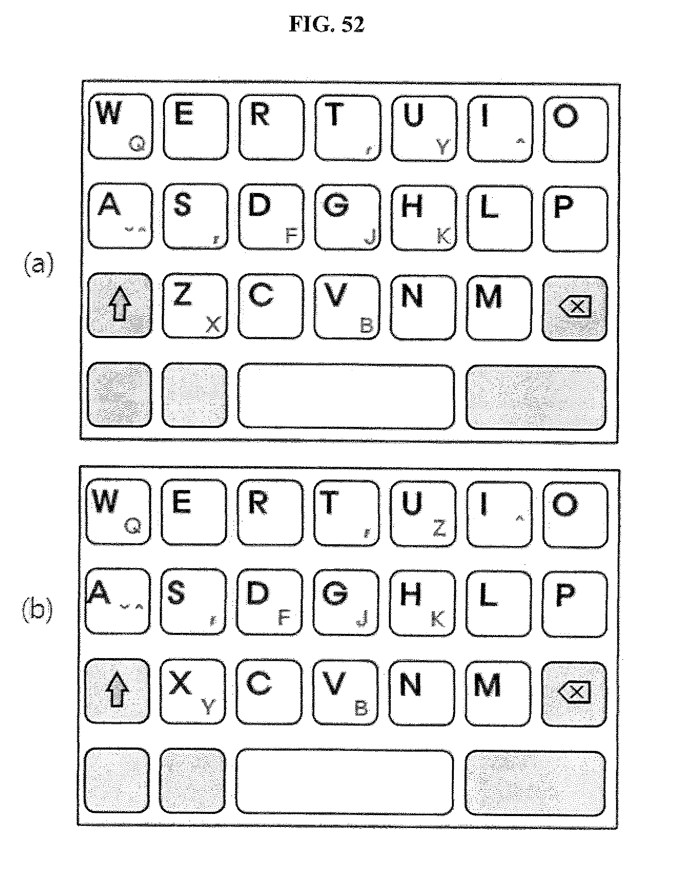

FIG. 52 illustrates preferred embodiments of a semi-compact keyboard 7-7-5 type layout for Romanian language according to the present disclosure.

As can be seen from the usage frequency table, Romanian language further has various variant characters. In this embodiment, these variant characters are placed on their original characters as their subordinated characters, and rearrangement of the original characters is as follows.
(a) is on the basis of the qwerty layout. As can be seen from the usage frequency table, on the first row, 'q' and 'y' with a lowest usage frequency are respectively placed on a 'w' key and a 'u' key as a subordinated character in consideration of a position and a conflict phenomenon, and 'p' is moved down to the second row and placed on the rightmost as a single key because its usage frequency is not too low.
   On the second row, 'h', 'j', and 'k' have a lowest usage frequency, but to keep the key position from differing from the full keyboard, 'h', 'j', and 'k' are respectively placed on a 'd' key, a 'g' key, and a 'h' key as a subordinated character, and similarly, on the third row, 'x' and 'b' are respectively placed on a 'z' key and a 'v' key as a subordinated character. Here, as comparing 'w' and 'q' is worthless in terms of their usage frequency, 'qw' as placed in an original order may be contemplated.
(b) is an embodiment for a user using the QWERTZ keyboard, and only 'z' and 'y' are changed in their position.

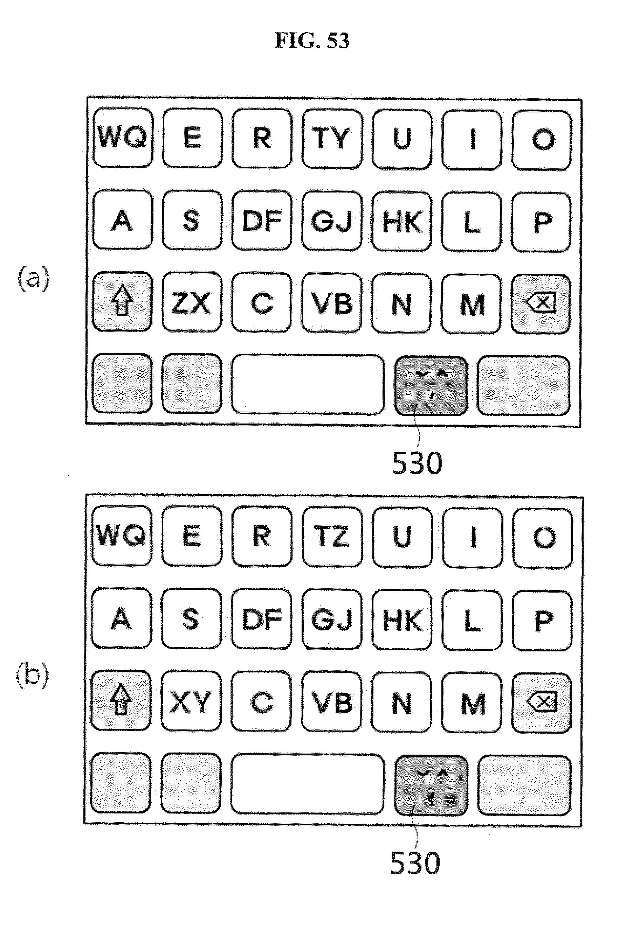

FIG. 53 illustrates another embodiment of a semi-compact keyboard 7-7-5 type layout for Romanian language according to the present disclosure.

These embodiments correspond to an embodiment in which a variant character conversion key 530 (space bar as shown on the right side) for input of variant characters is applied. Two versions for use in the QWERTY and QWERTZ keyboards are introduced.

When the variant character conversion key meets 'a', the shape of the key changes to a shape representing the breve and circumflex, and in this instance, a symbol may be inputted by a consecutive press (or double click) method, and when the symbol is inputted, the previously inputted 'a' is converted to 'a' with the corresponding symbol, respectively. Also, when the variant character conversion key meets 'i', the shape of the key changes to the circumflex, and when pressed after 'i', the circumflex is attached to the inputted 'i'. Also, when the variant character conversion key meets 's' or 't', the shape of the key changes to a shape indicating the comma, and in this instance, when pressed, this key converts the previously inputted 's' or 't' to 's' or't' with comma.

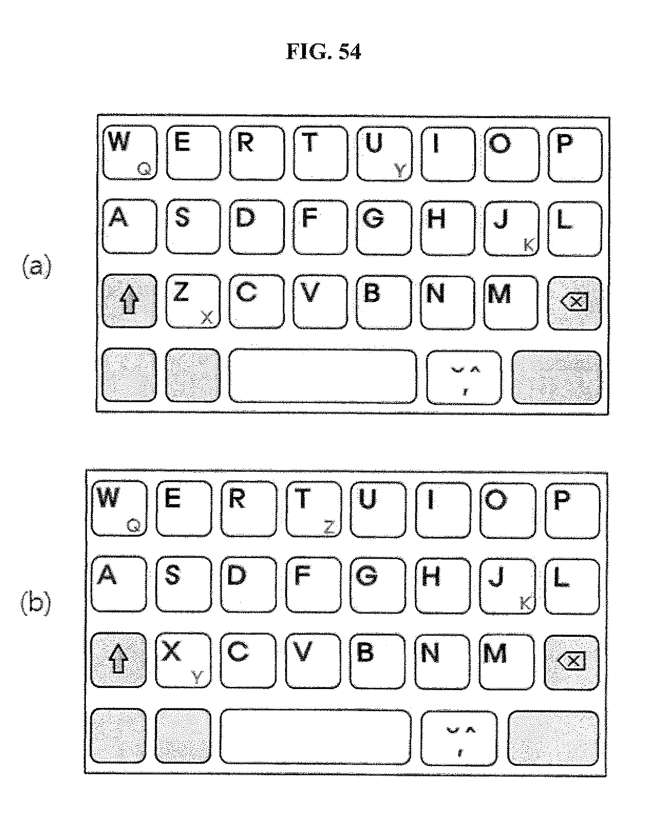

FIG. 54 illustrates another embodiment of a semi-compact keyboard 8-8-6 type layout for Romanian language according to the present disclosure.

As compared to the 7-7-5 type, on the first row, 'p' placed on the second row is moved up again, and on the second row, 'f' and 'j' are replaced as a single key, and on the third row, 'b' is replaced as a single key. (a) is the qwerty layout, and (b) is on the basis of the qwertz layout, showing that there is a slight change due to a relationship with a surrounding character as its position changes.

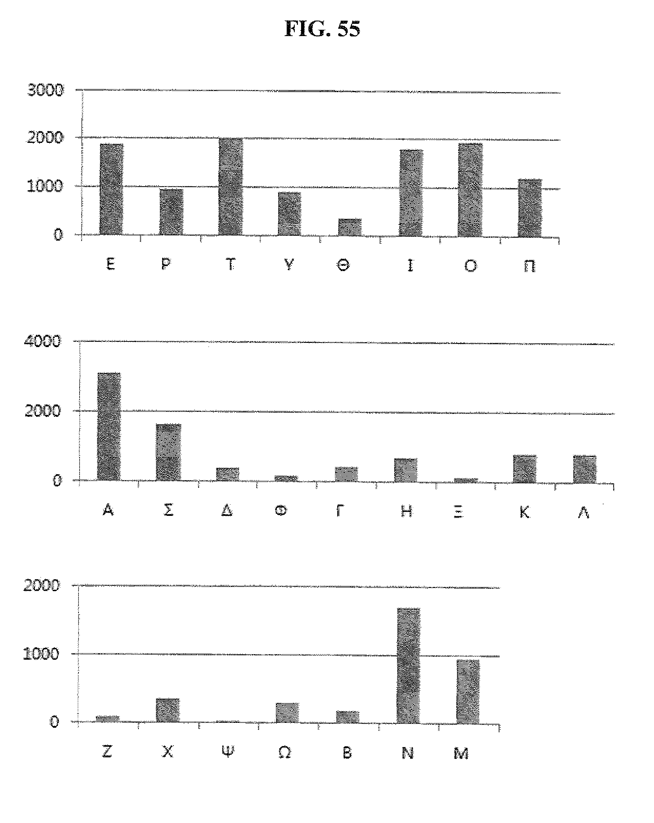

FIG. 55 illustrates a usage frequency table of Greek alphabet.

The graph shows a data analysis result of a Greek translation of an English version of The little prince from page 1 to page 10.

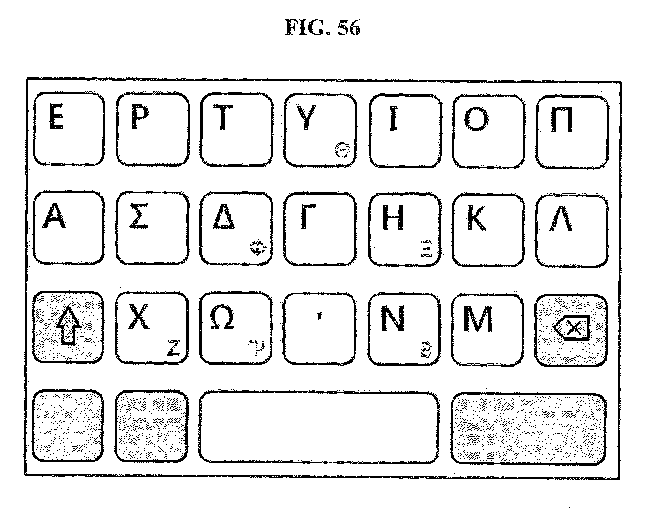

FIG. 56 illustrates a preferred embodiment of a semi-compact keyboard 7-7-5 type layout for Greek language according to the present disclosure.

In Greek language, the acute symbol may be attached to E, Y, I, O, A, H, and Ω, and two or three points may be attached to Y and I. To input these characters, in this embodiment, a variant character conversion key (a key disposed at the center above the space bar in the drawing) is applied. After a corresponding character is inputted, this variant character conversion key is then pressed, and when pressed once, attaches the acute symbol, and when pressed twice, attaches two points, and when pressed three times, attaches three points.

For the rearrangement of character keys, as can be seen from the usage frequency table, on the first row, Θ with a lowest usage frequency is placed on a Y key as a subordinated character in consideration of a position and a conflict phenomenon, and on the second row, Φ and Ξ are respectively placed on a Δ key and a H key as a subordinated character, on the third row, Z, Ψ, and B are respectively placed on a X key, a Ω key, and a N key as a subordinated character.

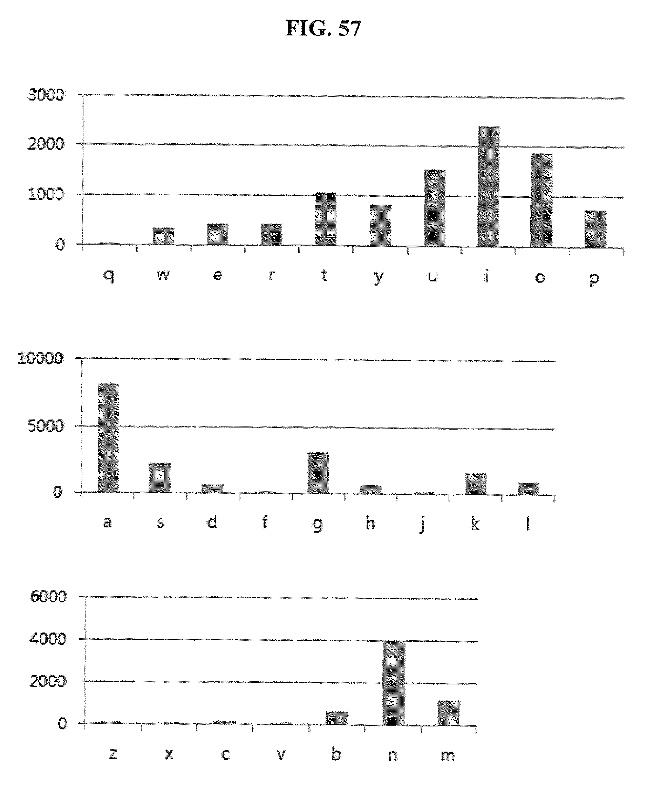

FIG. 57 illustrates a usage frequency table of Cebuano alphabet.

The graph shows a data analysis result of a Cebuano translation of an English version of The little prince from page 1 to page 10.

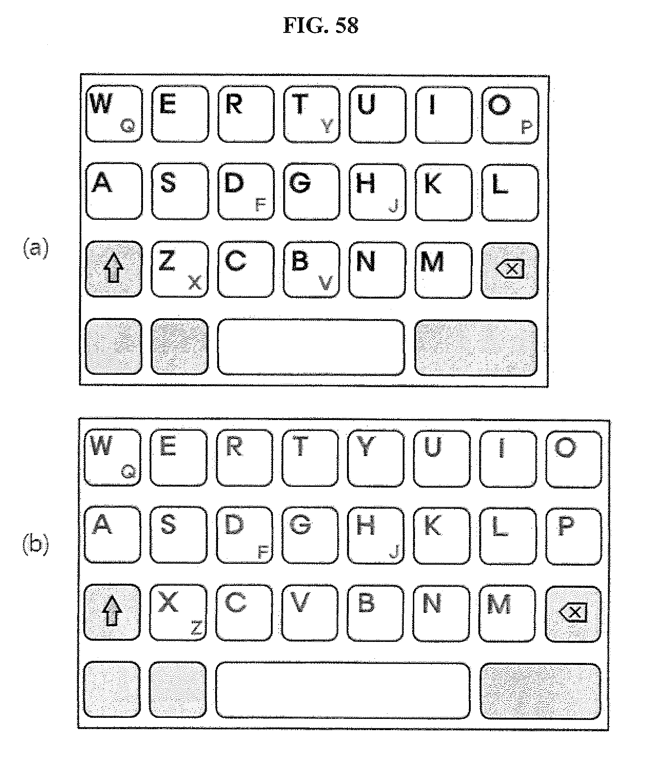

FIG. 58 illustrates preferred embodiments of semi-compact keyboard 7-7-5 type layout and 8-8-6 type layout for Cebuano language according to the present disclosure.
(a) is a 7-7-5 type embodiment. Seeing the usage frequency table first row, on the first row, 'w' and 'e' have a lower usage frequency than 'y' or 'p' but when 'q', 'w', and 'e' consecutively placed are all attached to different keys, positions of each key are too different from the existing full keyboard, resulting in reduced efficiency, and thus, such rearrangement is avoided. Accordingly, in this embodiment, on the first row, 'q', 'y', and 'p' are respectively placed on a 'w' key, a 't' key, and a 'o' key as a subordinated character in consideration of a position and a conflict phenomenon. Also, on the second row, 'f' and 'j' are respectively placed on a 'd' key and a 'h' key as a subordinated character, and on the third row, 'x' and 'v' are respectively placed on a 'z' key and a 'b' key as a subordinated character.
(b) is a 8-8-6 type embodiment, and as compared to the 7-7-5 type, on the first row, 'y' is restored as a single key, 'p' is replaced as a single key on the rightmost of the second row, and on the third row, 'v' is restored as a single key.

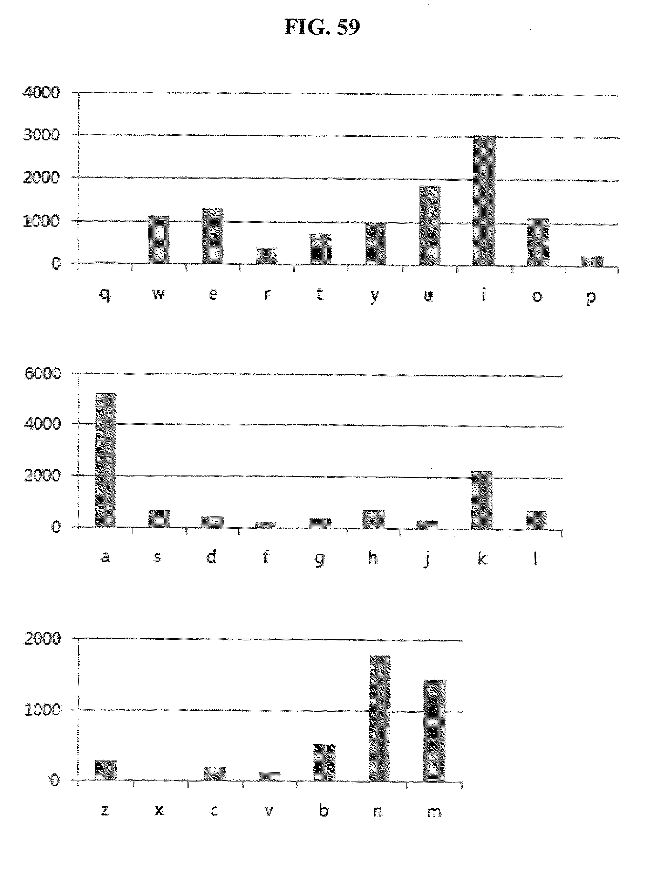

FIG. 59 illustrates a usage frequency table of Swahili alphabet.

The graph shows a data analysis result of a Swahili translation of an English version of The little prince from page 1 to page 10.

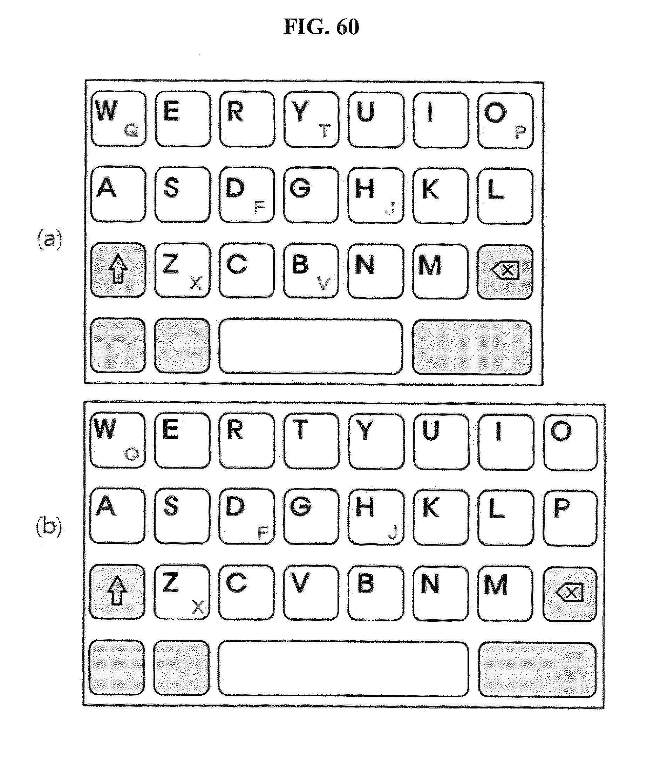

FIG. 60 illustrates preferred embodiments of semi-compact keyboard 7-7-5 type layout and 8-8-6 type layout for Swahili language according to the present disclosure.
(a) is a 7-7-5 type embodiment. On the first row, in consideration of a usage frequency, position of keys, and the likelihood of conflict by a consecutive press, 'q', 't', and 'p' are respectively placed on a 'w' key, a 'y' key, and a 'o' key as a subordinated character, and on the second row, 'f and 'j' are respectively placed on a 'd' key and a 'h' key as a subordinated character, and on the third row, 'x' and 'v' are respectively placed on a 'z' key and a 'b' key as a subordinated character.
(b) is a 8-8-6 type embodiment, and as compared to the 7-7-5 type, on the first row, 't' is restored as a single key, 'p' is replaced as a single key on the rightmost of the second row, and on the third row, 'v' is restored as a single key.

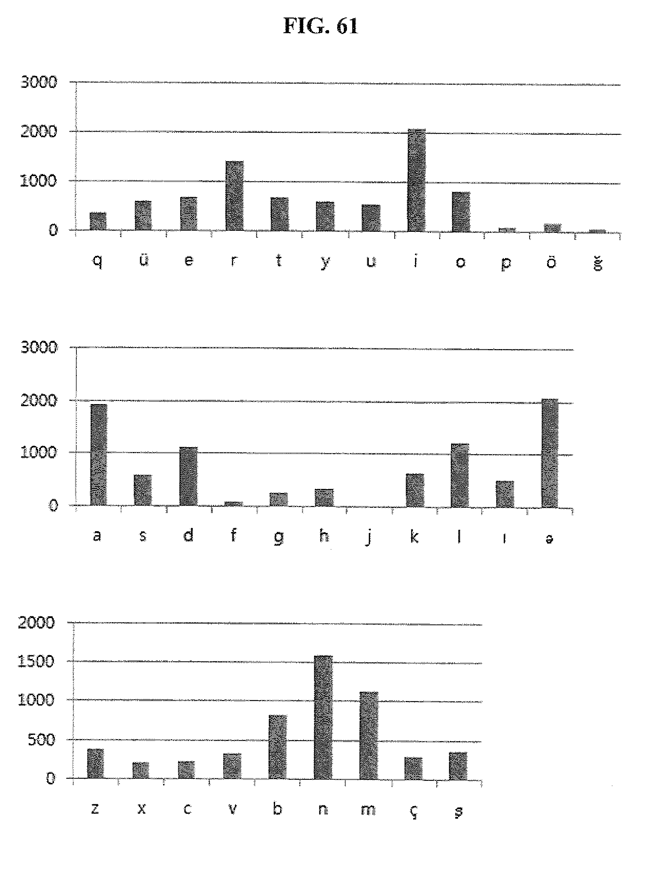

FIG. 61 illustrates a usage frequency table of Azerbaijani alphabet.

The graph shows a data analysis result of an Azerbaijani translation of an English version of The little prince from page 1 to page 10.

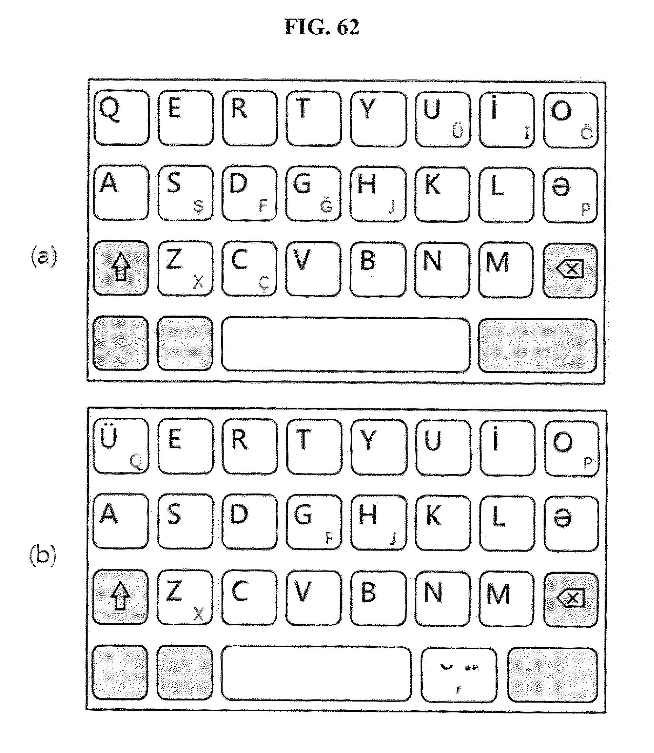

FIG. 62 illustrates preferred embodiments of a semi-compact keyboard 8-8-6 type layout for Azerbaijani language according to the present disclosure.

Azerbaijani characters further include a variant character created by attaching a pronunciation symbol(¨, 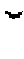 ) to an original character (u, o, s, g, c) (in the present disclosure, 'i' with dot and 'i' with no dot are treated with the same relationship), and to place these variant characters, two more keys are placed each row based on the current English QWERTY, keyboard, and for this reason, a key area in a mobile device becomes narrower. This embodiment provides rearrangement in consideration of this feature of the Azerbaijani keyboard.
(a) is an embodiment not using a variant character conversion key. Variant characters are placed on their original characters as a subordinated character, so a beginner user does not feel stressed at finding a new position, and the 8-8-6 type is completed with the remaining arrangement.
   On the first row, 'p' is placed on a key on the rightmost of the second row as a subordinated character, and on the second row, because 'f' and 'j' have a lowest usage frequency, they are respectively placed on a 'd' key and a 'h' key as a subordinated character. Also, it can be seen that 'p' moved down from the first row is placed on a key together as a subordinated character. On the third row, 'x' is placed on a 'z' key together as a subordinated character.
(b) is an embodiment using a variant character conversion key. Describing in comparison to the embodiment (a), there is a difference in that 'u' with umlaut is placed on the foremost of the first row as an unsubordinated character of a double key with 'q' as a subordinated character with respect to the position in the original keyboard, 'p' is placed on a 'o' key absent a variant character as a subordinated character, and variant characters other than 'u' with umlaut are not separately placed. Also, the variant character conversion key provided on the right side of the space bar displays only each one pronunciation symbol that may be attached to a character able to create its variant character immediately when the corresponding character is pressed, and converts the inputted original character to the original character with the displayed pronunciation symbol when pressed.

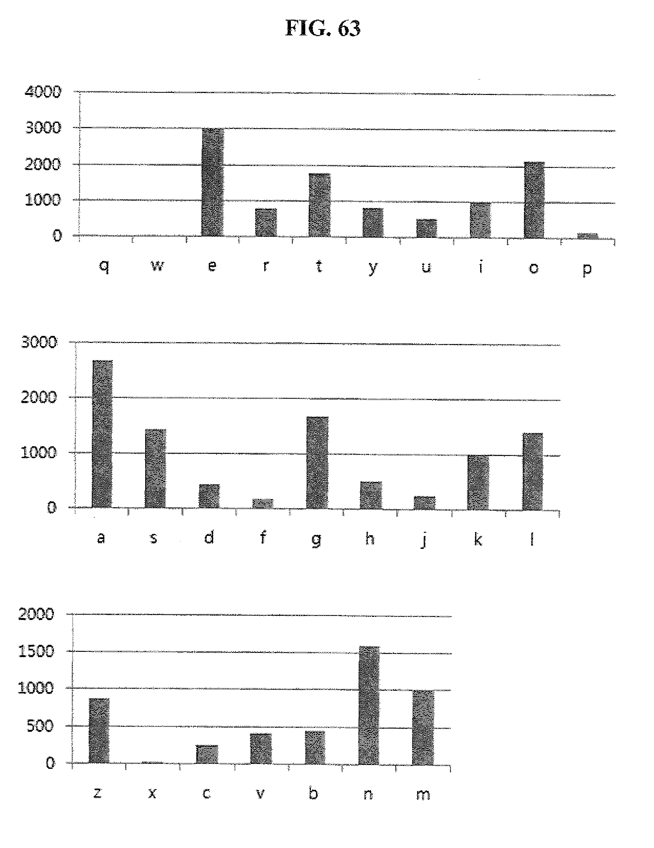

FIG. 63 illustrates a usage frequency table of Hungarian alphabet.

The graph shows a data analysis result of a Hungarian translation of an English version of The little prince from page 1 to page 10.

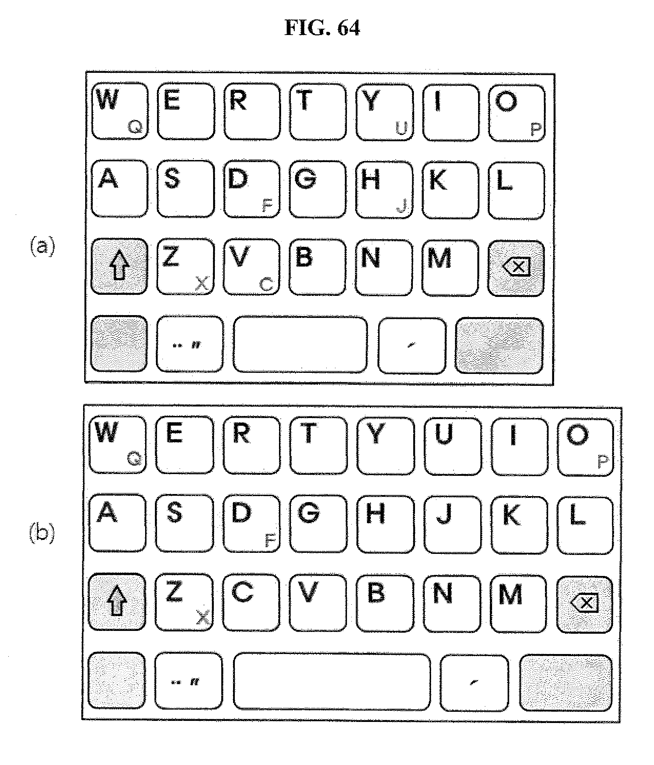

FIG. 64 illustrates preferred embodiments of semi-compact keyboard 7-7-5 type layout and 8-8-6 type layout for Hungarian language according to the present disclosure.

In Hungarian language, the umlaut, acute, and double acute are used to distinguish the pronunciation of vowels. To this end, in this embodiment, a right variant character conversion key is provided on the right side of the space bar to attach the acute to a character when pressed in such a state that 'a', 'e', 'i', 'o', and 'u' are inputted, and a left variant character conversion key is provided on the left side of the space bar to attach the umlaut when pressed once and the double acute when pressed twice in such a state that 'o' and 'u' are inputted.

Also, the rearrangement of different character keys based on a keyboard layout is as follows.
(a) is a 7-7-5 type embodiment. As can be seen from the usage frequency table, on the first row, 'q', 'u', and 'p' with a lowest usage frequency are respectively placed on a 'w' key, a 'y' key, and a 'o' key as a subordinated character in consideration of a position and a conflict phenomenon, and on the second row, 'f and 'j' are respectively placed on a 'd' key and a 'h' key as a subordinated character, and on the third row, 'x' and 'c' are respectively placed on a 'z' key and a 'v' key as a subordinated character. Here, as comparing 'w' and 'q' is worthless in terms of their usage frequency, 'qw' as placed in an original order may be contemplated.
(b) is a 8-8-6type embodiment, and describing in comparison to the 7-7-5 type, 'u', 'j', and 'c' are respectively replaced as a single key each row.

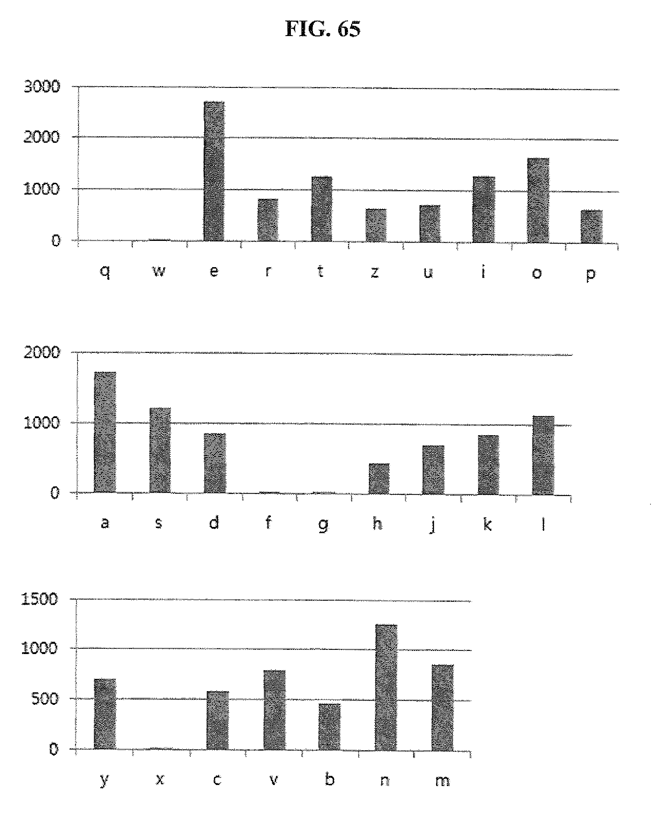

FIG. 65 illustrates a usage frequency table of Czech alphabet.

The graph shows a data analysis result of a Czech translation of an English version of The little prince from page 1 to page 10.

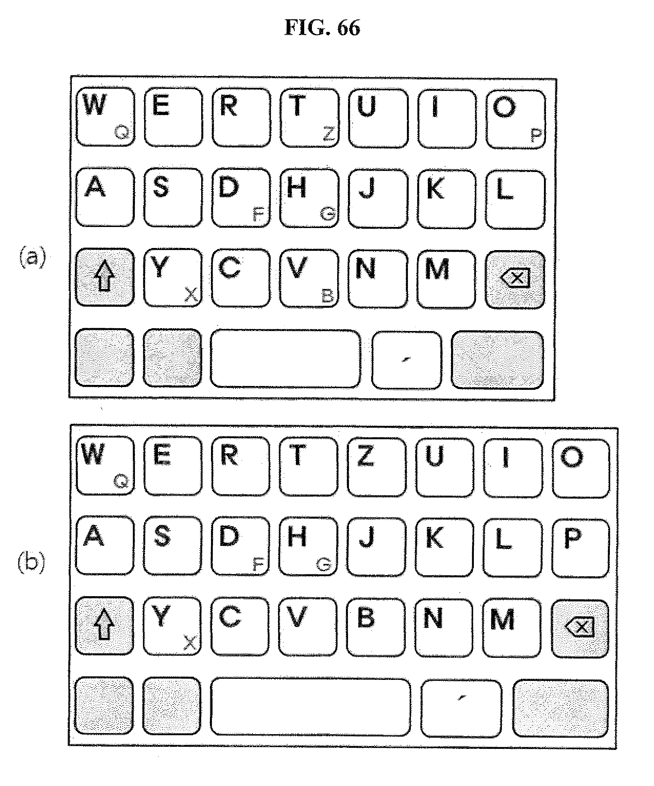

FIG. 66 illustrates preferred embodiments of semi-compact keyboard 7-7-5 type layout and 8-8-6 type layout for Czech language according to the present disclosure.

Czech language is used with the addition of many pronunciation symbols. To this end, this embodiment provides a variant character conversion key (shown on the right side of the space bar in the drawing). Its description will be provided together with the drawings.

First, a description of rearrangement of different character keys according to embodiments is provided as below.
(a) is a 7-7-5 type embodiment. As can be seen from the usage frequency table, on the first row, 'q', 'z', and 'p' with a lowest usage frequency are respectively placed on a 'w' key, a 't' key, and a 'o' key as a subordinated character in consideration of a position and a conflict phenomenon, and on the second row, 'f' and 'g' are respectively placed on a 'd' key and a 'h' key as a subordinated character, and on the third row, 'x' and 'b' are respectively placed on a 'y' key and a 'v' key as a subordinated character. Here, as comparing 'w' and 'q' is worthless in terms of their usage frequency, 'qw' as placed in an original order may be contemplated.
(b) is a 8-8-6 type embodiment, and describing in comparison to the 7-7-5 type, on the first row, 'z' is replaced as a single key, 'p' is replaced as a single key on the rightmost of the second row, and on the third row, 'b' is replaced as a single key.

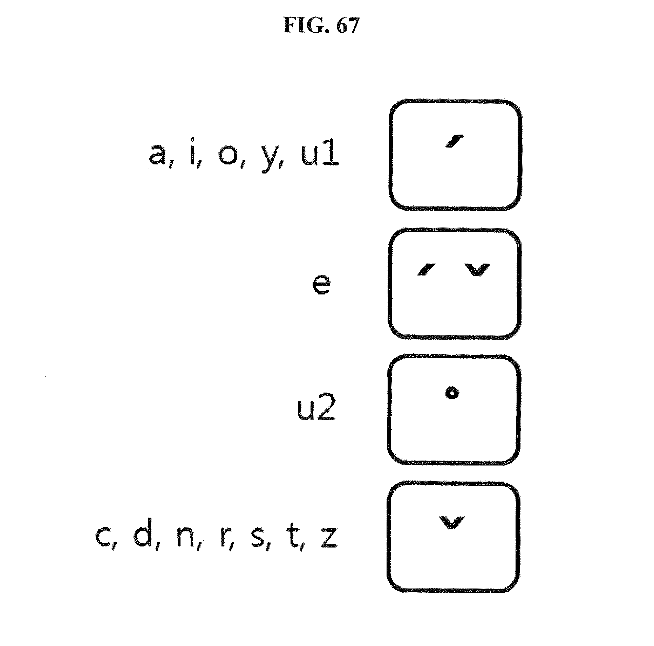

FIG. 67 illustrates a working principle of a variant character conversion key for Czech language.

The variant character conversion key of this embodiment becomes a function key of attaching the acute to an inputted character immediately after 'a', 'i', 'o', and 'y' are inputted and immediately after 'u' while a word is being inputted. The diagram in the drawing represents the shape of the variant character conversion key then. Also, the variant character conversion key becomes a function key of attaching, to an inputted character, the acute when pressed once immediately after 'e' is inputted and the breve when pressed twice. The diagram in the drawing represents the shape of the variant character conversion key then. Also, the variant character conversion key becomes a function key of attaching a ring to 'u' after 'u' is inputted at the beginning of a word. The diagram in the drawing represents the shape of the variant character conversion key then. Also, the variant character conversion key becomes a function key of attaching the breve to an inputted character immediately after 'c', 'd', 'n', 'r', 's', 't', and 'z' are inputted. The diagram in the drawing represents the shape of the variant character conversion key then.

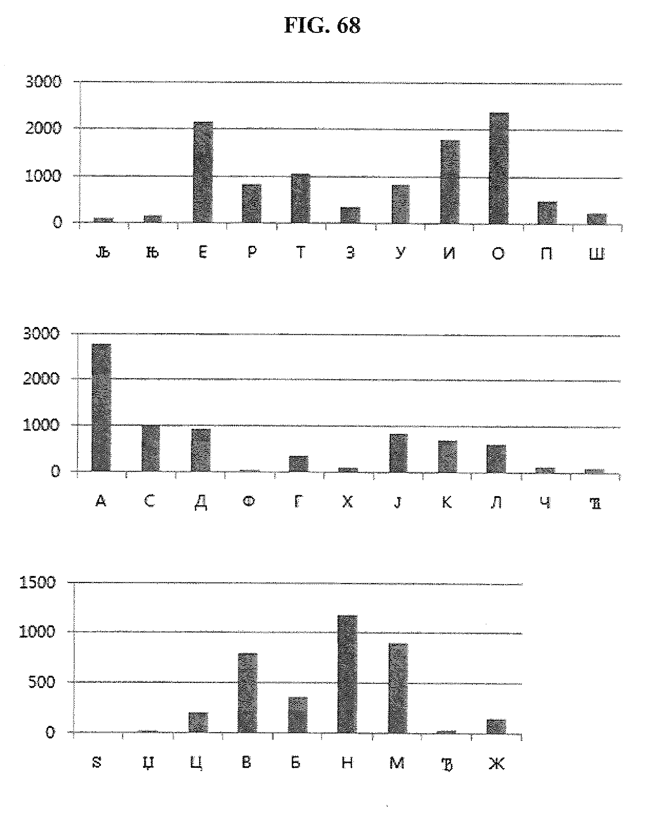

FIG. 68 illustrates a usage frequency table of Serbian alphabet.

The graph shows a data analysis result of a Serbian translation of an English version of The little prince from page 1 to page 10.

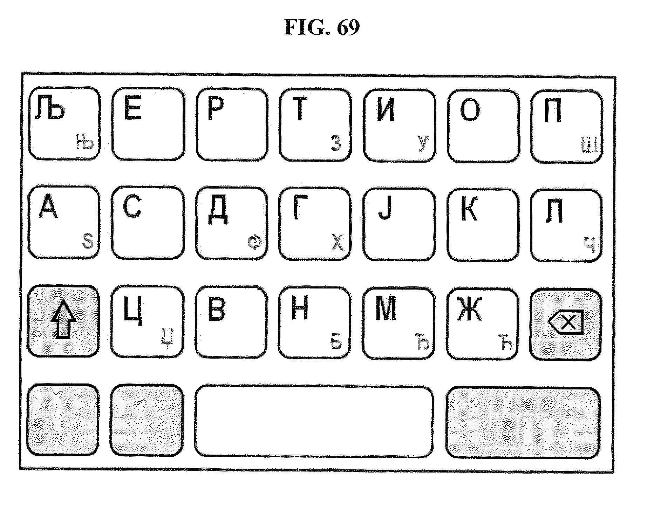

FIG. 69 illustrates a preferred embodiment of a semi-compact keyboard 7-7-5 type layout for Serbian language according to the present disclosure.

The rearrangement of characters is as follows. On the first row, a double key may be formed using characters with a lowest usage frequency in an original order or an order shown in the drawing. Subsequently, '3' and 'III' with a low usage frequency are respectively placed on a 'T' key and a 'Π' key as a subordinated character. On the second row, 'Φ' and 'X' with a lowest usage frequency are respectively placed on a 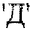 '' key and a 'Γ' key as subordinated character. Here, 'S' moved from the third row is further placed on a 'A' key as a subordinated character, and a character placed on the rightmost is placed on a ' 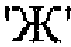 ' key on the third row as a subordinated character.

On the third row, similarly, characters with a low usage frequency, ' 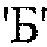 ', are respectively placed on a ' 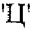 ' key, a 'H' key, and a 'M' key as a subordinated character. Also, 'S' originally placed on the third row is placed on a 'A' key on the second row as a subordinated character.

The arrangement is suited to reduce an increasing number of key inputs, and reduce a possibility that a conflict will occurs within the same key.

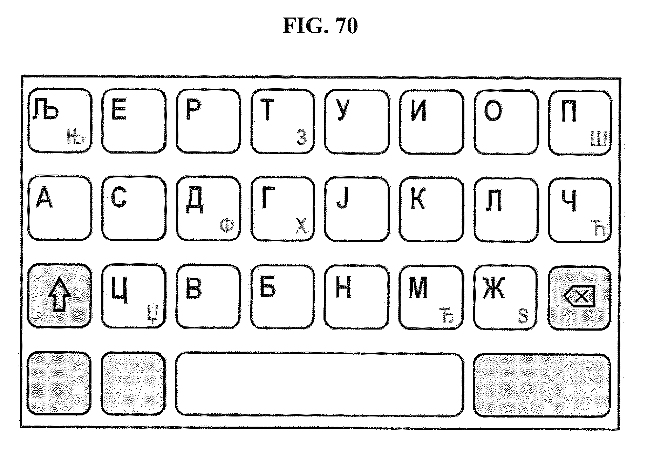

FIG. 70 illustrates a preferred embodiment of a semi-compact keyboard 8-8-6 type layout for Serbian language according to the present disclosure.

The 8-8-6 type shows arrangement in which characters placed away from the original row in the 7-7-5 type described above are returned to their original position, and a conflict phenomenon is further reduced while further reducing an increasing number of key inputs. A reference is made to the drawing.

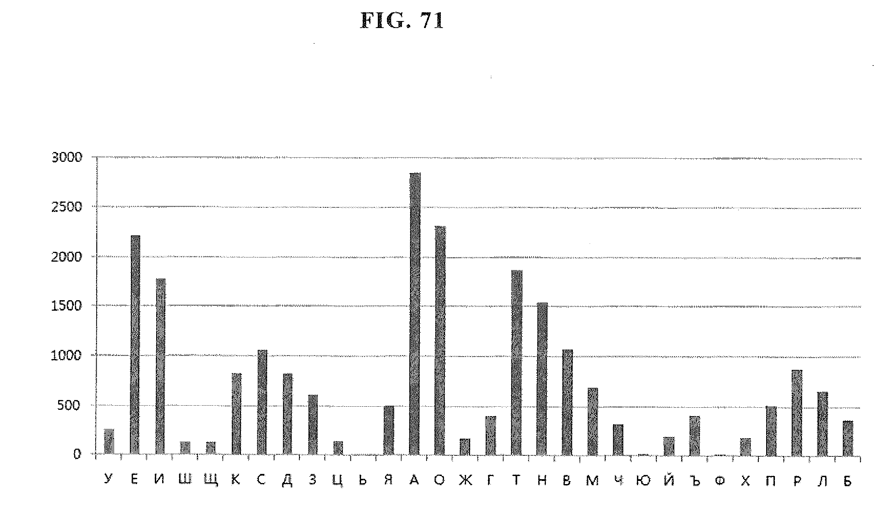

FIG. 71 illustrates a usage frequency table of Bulgarian alphabet.

The graph shows a data analysis result of a Bulgarian translation of an English version of The little prince from page 1 to page 10.

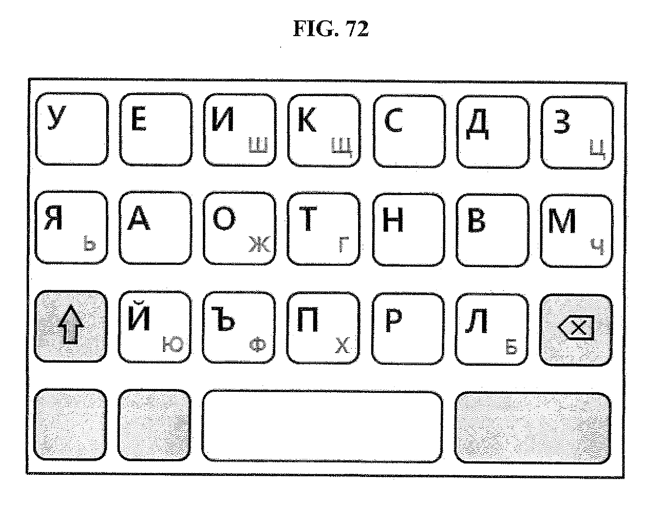

FIG. 72 illustrates a preferred embodiment of a semi-compact keyboard 7-7-5 type layout for Bulgarian language according to the present disclosure.

As can be seen from the usage frequency table, on the first row, ' 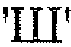 ', ' 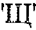 ', and ' 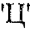 ' with a lowest usage frequency are respectively placed on a ' 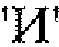 ' key, a 'K' key, and a '3' key as a subordinated character in consideration of a position and a conflict phenomenon, and on the second row, 'b', ' 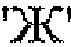 ', 'Γ', and ' 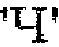 ' are respectively placed on a ' 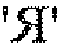 ' key, a 'O' key, a 'T' key, and a 'M' key as a subordinated character, and on the third row, ' 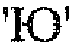 ', 'Φ', 'X', and ' 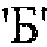 ' are respectively placed on a 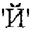 '' key, a ' 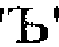 ' key, a 'Π' key, and a ' 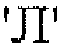 ' key as a subordinated character in consideration of a position.

FIG. 72 illustrates a preferred embodiment of a semi-compact keyboard 7-7-5 type layout for Bulgarian language according to the present disclosure.

This embodiment also applies to the Bulgarian standard keyboard layout.

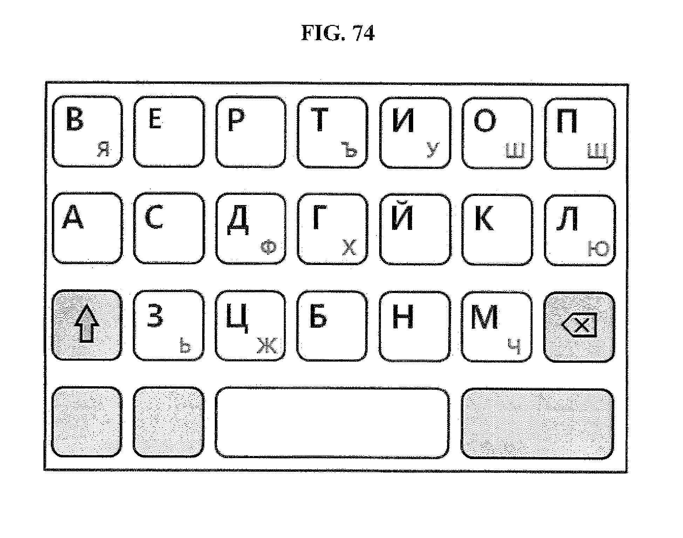

FIGS. 74, 75, and 76 illustrate various versions of a semi-compact keyboard for Bulgarian language according to the present disclosure.

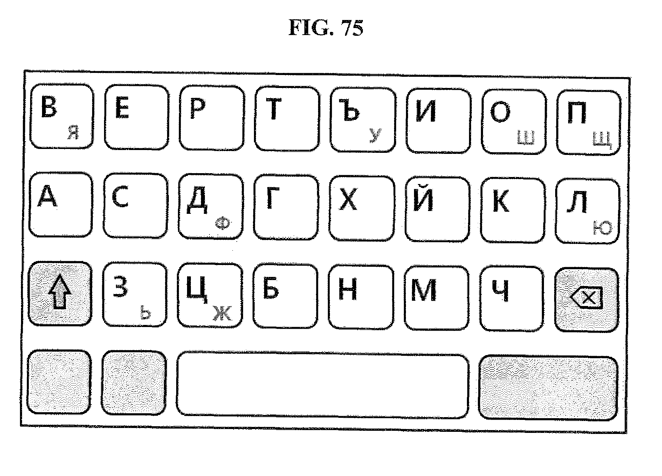

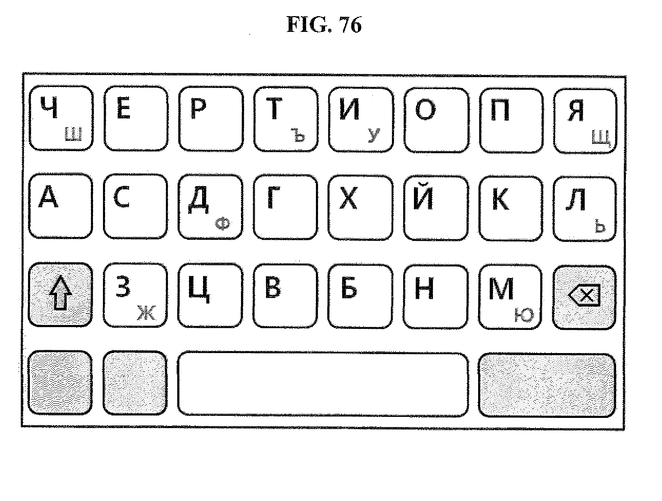

The arrangement of FIGS. 74 and 75 is a version for use in the Bulgarian keyboard layout, and the arrangement of FIG. 76 is for use in the Bulgarian phonetic keyboard layout.

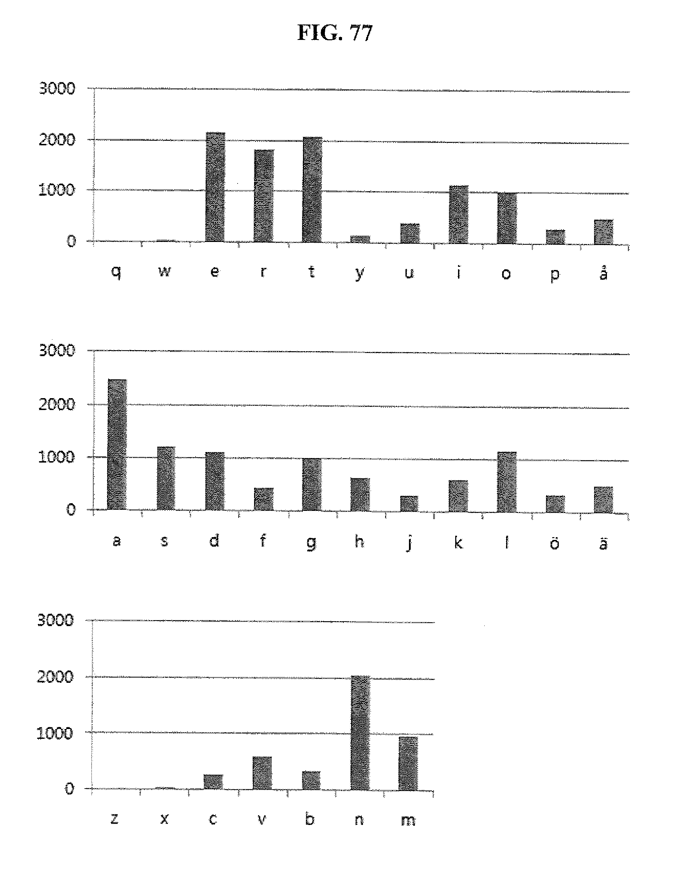

FIG. 77 illustrates a usage frequency table of Swedish alphabet.

The graph shows a data analysis result of a Swedish translation of an English version of The little prince from page 1 to page 10.

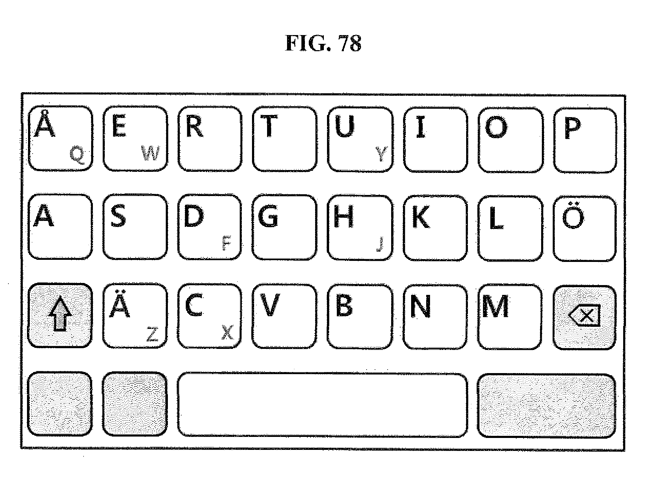

FIG. 78 illustrates a preferred embodiment of a semi-compact keyboard 8-8-6 type layout for Swedish language according to the present disclosure.

Swedish alphabet further includes 'a' with a ring, 'a' with umlaut, and 'o' with umlaut, and these characters are placed as separate keys in a keyboard. They are all placed on the rightmost in the keyboard, but in this embodiment, they are replaced in a direction in which each original character is placed. That is, a variant character of 'a' is placed on the left side of the position of 'a', and a variant character of 'o' is placed on the right side of the position of 'o'. Here, the rearrangement of the other characters is as follows.

As can be seen from the usage frequency table, on the first row, 'q', 'w', and 'y' with a lowest usage frequency are respectively placed on a ring key, a 'e' key, and a 'u' key as a subordinated character, and on the second row, 'f' and 'j' are respectively placed on a 'd' key and a 'h' key as a subordinated character, and on the third row, 'z' and 'x' are respectively placed on a umlaut key and a 'c' key as a subordinated character.

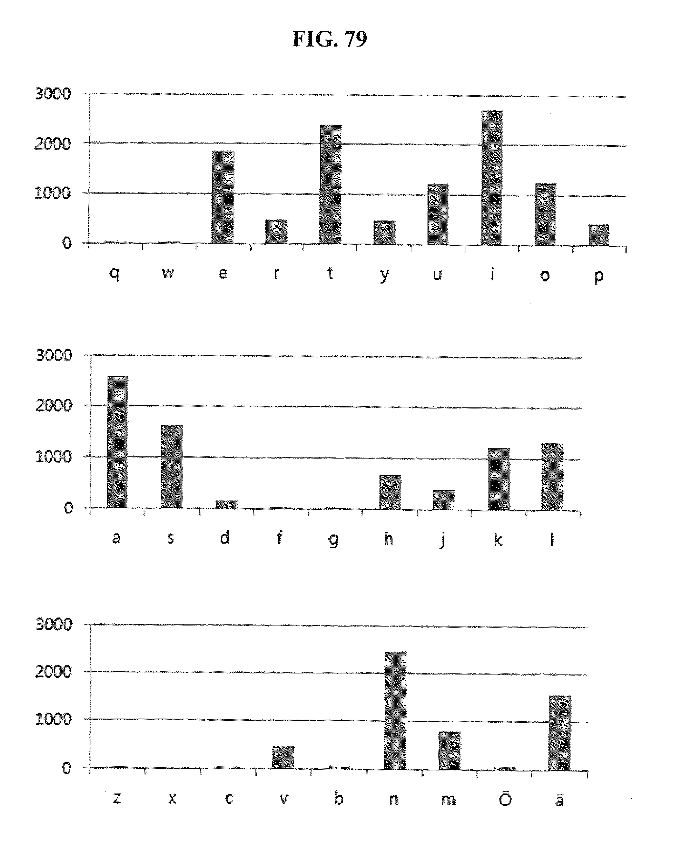

FIG. 79 illustrates a usage frequency table of Finnish alphabet.

The graph shows a data analysis result of a Finnish translation of an English version of The little prince from page 1 to page 10.

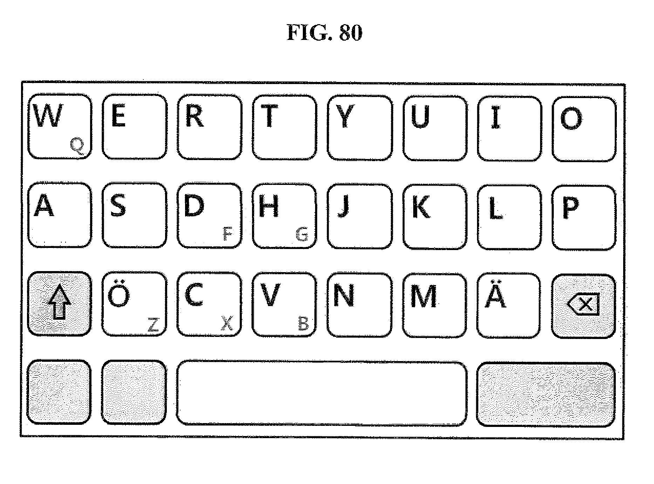

FIG. 80 illustrates a preferred embodiment of a semi-compact keyboard 8-8-6 type layout for Finnish language according to the present disclosure.

Finnish alphabet further includes 'a' with umlaut and 'o' with umlaut, and these characters are placed as separate keys in a keyboard. They are all placed on the rightmost of the third row, but in this embodiment, 'o' with umlaut with a lower usage frequency is moved to the left. This is to prevent the key position imbalance because 'z', 'x', and 'c' on the same row have a low usage frequency.

Here, the rearrangement of the other characters is as follows. As can be seen from the usage frequency table, on the first row, a combination of 'q' and 'w' with a lowest usage frequency forms a double key (although the drawing shows that 'w' is an unsubordinated character, 'q' may be an unsubordinated character because a difference is negligible), and the remaining characters are not suitable for a double key because many words may cause a conflict, and thus, 'p' is moved to the second row. On the second row, 'f' and 'j' with a lowest usage frequency are respectively placed on a 'd' key and a 'h' key as a subordinated character, and on the third row, 'z', 'x', and 'b' are respectively placed on a 'o' umlaut key, a 'c' key, and a 'v' key as a subordinated character.

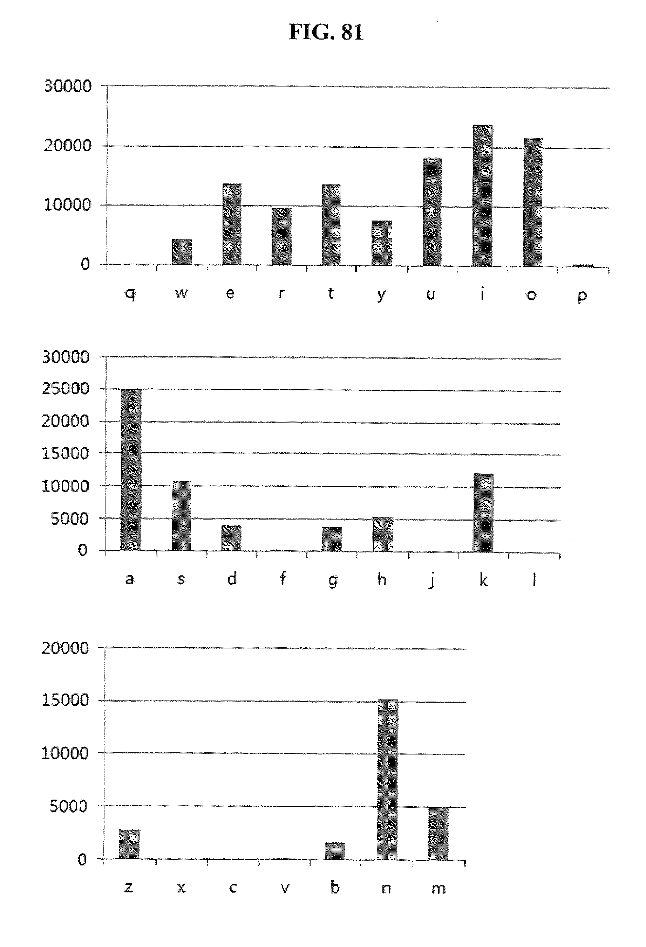

FIG. 81 illustrates a usage frequency table of Roman alphabet for Japanese language input.

This graph is prepared based on information found on the Internet site (http://www7.plala.or.jp/dvorakjp/hinshutu.htm).

A Japanese input method being currently used best is an input method using Roman alphabet, and it is possible input Japanese language using all the Roman letters but this follows the overlap writing rule and all the Japanese letters may be inputted without using characters such as 'q', 'j', 'c', 'l', and 'x'. Thus, the above characters remarkably reduce in usage frequency.

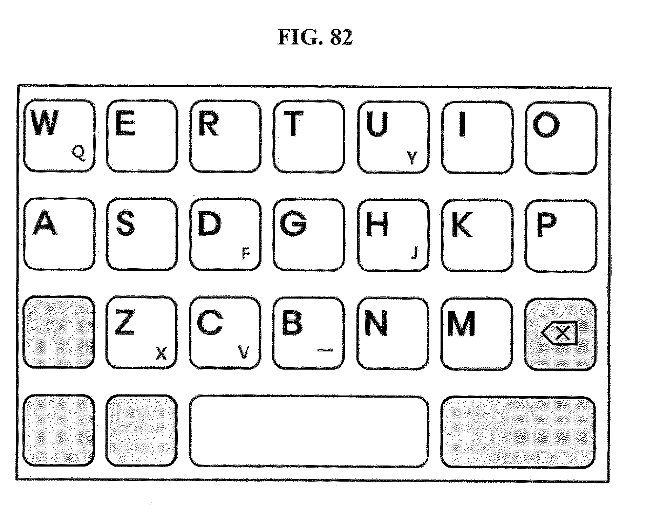

FIG. 82 illustrates a preferred embodiment of a semi-compact keyboard 7-7-5 type layout for Japanese language according to the present disclosure.

In the drawing, 'l' is not placed at all, and in Japanese input, 'l' is used to change to small letters and it does not matter because its operation is exactly the same as that of 'x'.

In Japanese language, as gemination ( 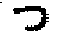 ) is inputted by overlapping 't', 's', 'k', and 'p', for example, 'tt', 'ss', 'kk', 'pp', the other characters are not placed on these four keys to prevent a consecutive press conflict. Also, 'p' originally placed on the first row is replaced on the second row, because any characters on the first row are not easy to combine with other characters, but 'p' has a lowest usage frequency and is placed at the end, so it will be recognizable by a user even if 'p' is moved down. For 'y' position, 'y' should be placed on an adjacent key 't' or 'u', and according to analysis of Japanese language data, placing 'y' together with 'u' causes less consecutive press conflict than placing 'y' together with 't', so 'y' is placed as a subordinated character of'u'.

This arrangement exhibits very good performance in terms of efficiency because in the input of Japanese language, only 'y' increases in the number of key inputs.

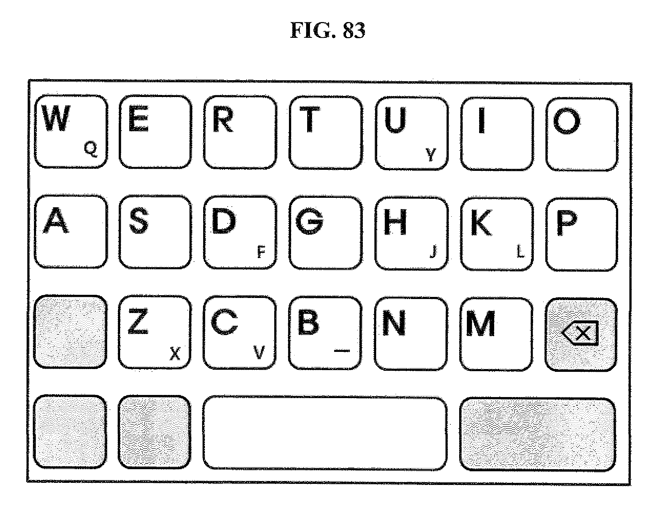

FIG. 83 illustrates an example of an English mode of the embodiment of FIG. 82.

To input English language, it is necessary to restore the eliminated 'l', and in this embodiment, 'l' is placed as a subordinated character of a 'k' key as shown in the drawing. This is because combining with 'k' causes a less consecutive press conflict than combining with 'p'.

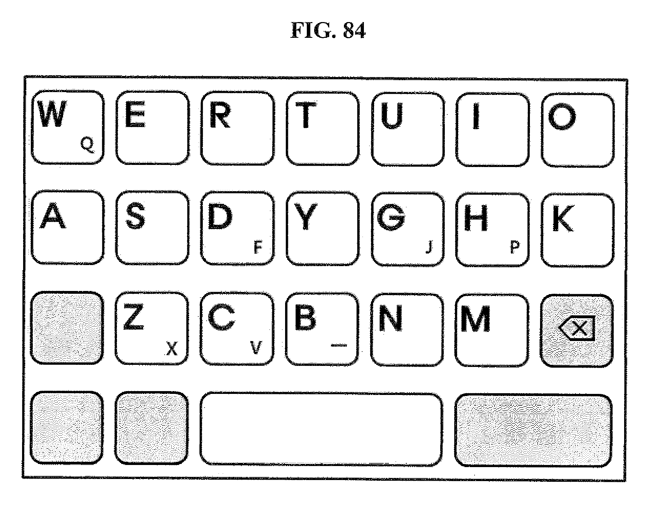

FIG. 84 illustrates another embodiment of a semi-compact keyboard 7-7-5 type layout for Japanese language according to the present disclosure.

This embodiment is an embodiment in which the 'y' position problem of the embodiment of FIG. 82 is solved by moving down 'y' in the vertical direction and placing it on the second row. Thus, 'p' gives place to 'k' and is placed as a subordinated character of a 'h' key. This embodiment is an embodiment in which the position of 'y' and 'p' is somewhat extraordinary, but once a user starts to use it, the user will get accustomed to the position soon, and in terms of effects, optimization is achieved with an inappreciable increase in the number of key inputs, and the user will be satisfied well because there is little consecutive press conflict phenomenon.

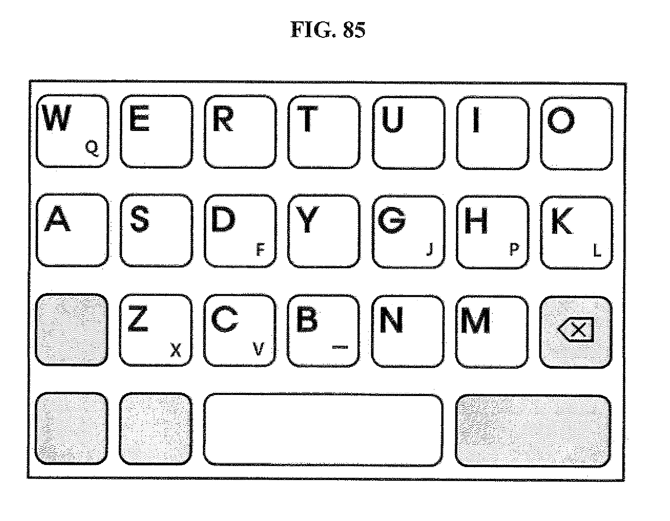

FIG. 85 illustrates an example of an English mode of the embodiment of FIG. 84.

To input English character, it is necessary to restore the eliminated 'l', and in this embodiment, 'l' is placed as a subordinated character of a'k' key as shown in the drawing.

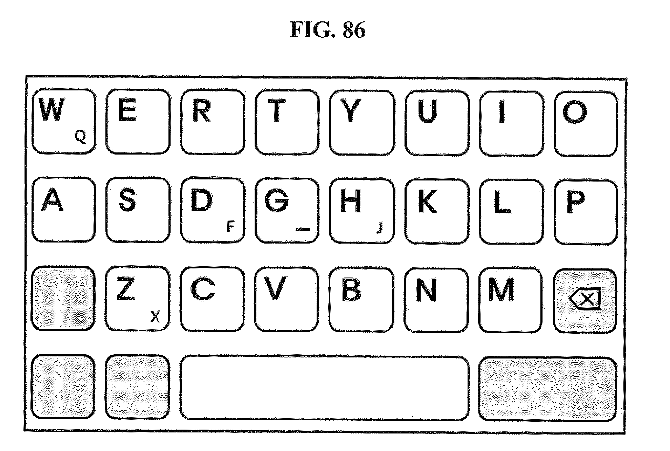

FIG. 86 illustrates a preferred embodiment of a semi-compact keyboard 8-8-6 layout for Japanese language according to the present disclosure.

This embodiment is an embodiment in which 'y' used as a subordinated character in the 7-7-5 type is restored as a single key. This embodiment has a biggest advantage that all the Japanese letters can be inputted only by an unsubordinated character. Another feature is that a long syllable symbol for Katakana input is placed as a subordinated character of a 'g' key, but it is possible to place it as an unsubordinated character of a 'v' key through the design modification by those skilled in the art.

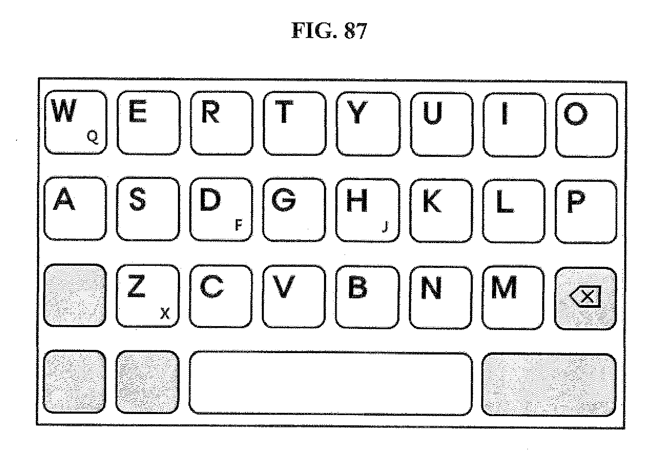

FIG. 87 illustrates an example of an English mode of the embodiment of FIG. 86.

Except a long syllable symbol, the layout is the same as that of an English mode, producing an effect of minimizing user confusion.

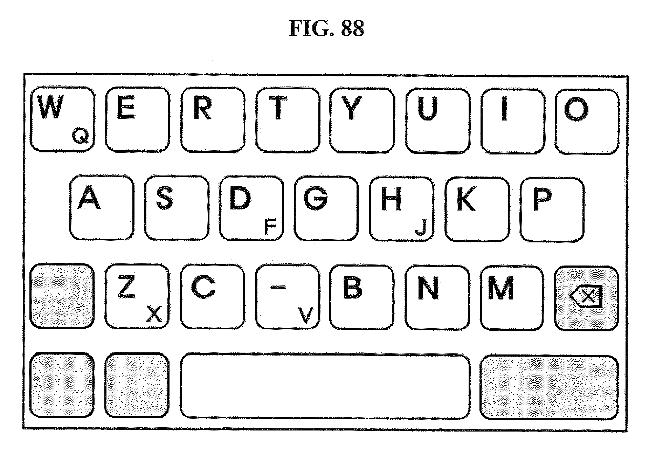

FIG. 88 illustrates a preferred embodiment of a semi-compact keyboard 8-7-6 type layout for Japanese language according to the present disclosure.

In the 8-8-6 type, 'j' with a low usage frequency is placed as a single key, but like this embodiment, when 'j' is placed on a 'h' key as a subordinated character, a number of keys on the second row is reduced by one and a 8-7-6 type is thus provided, with advantages of better position of the keys and looking less tight.

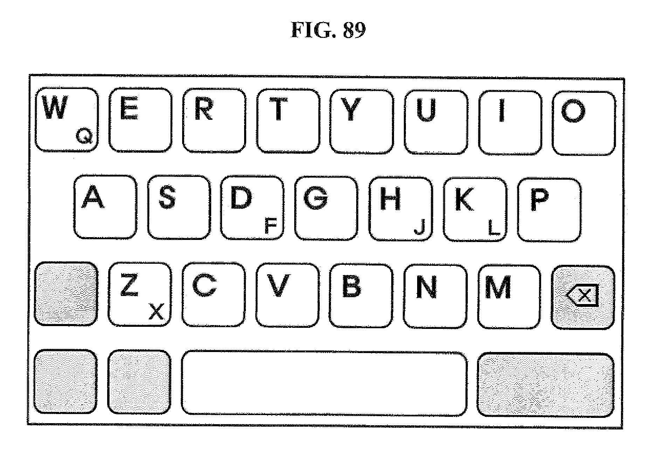

FIG. 89 illustrates an example of an English mode of the embodiment of FIG. 88.

To input English language, it is necessary to restore the eliminated 'l', and in this embodiment, 'l' is placed as a subordinated character of a 'k' key as shown in the drawing. This is because combining with 'k' causes a less consecutive press conflict than combining with 'p'.

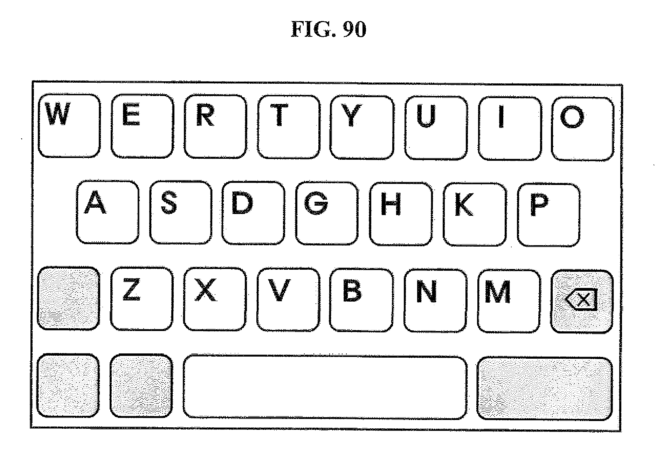

FIG. 90 illustrates another embodiment of a semi-compact keyboard 8-7-6 type layout for Japanese language according to the present disclosure.

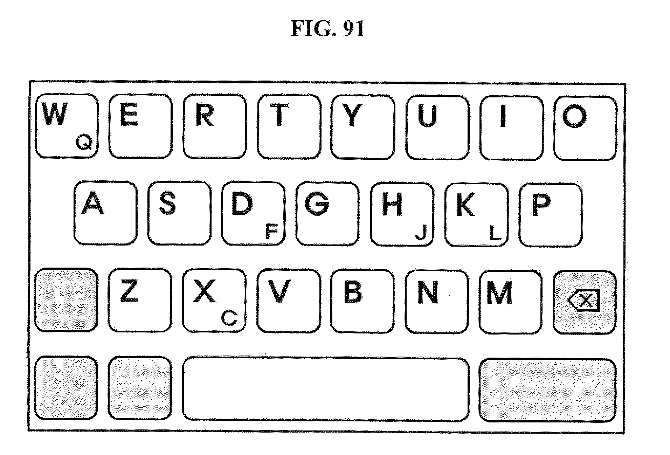

FIG. 91 illustrates an example of an English mode of the embodiment of FIG. 90.

This embodiment is an embodiment in which only characters necessarily essential for inputting Japanese language are placed, and for all the keys, each one character is placed. Thus, this embodiment is an embodiment in which there is no double key that is an essential feature of the present disclosure, but it is by virtue of omission, and in an English mode, the omitted characters all appear again and form double keys as shown in the drawing.

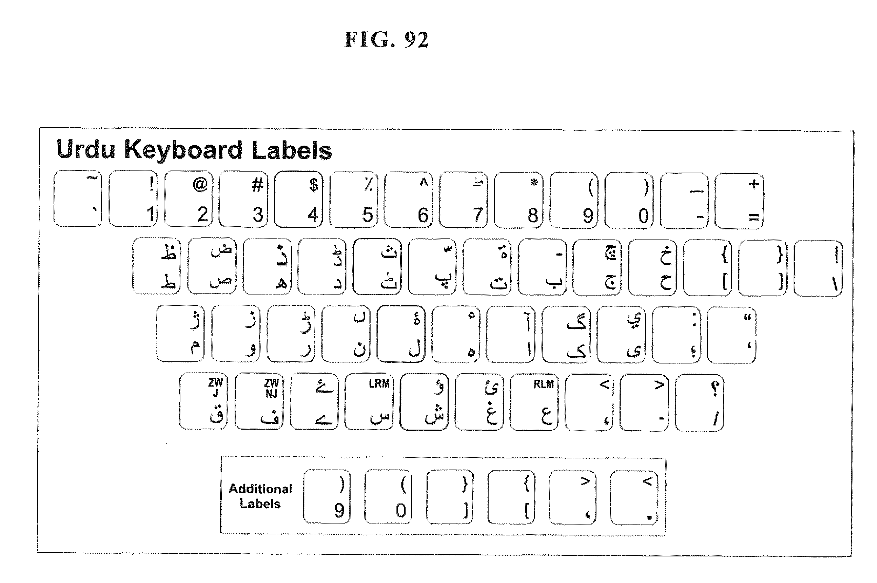

FIG. 92 illustrates an Urdu full keyboard layout.

Urdu alphabet uses Arabic characters, but further includes characters derived from Arabic language but not used in Arabic language, and thus, Urdu language includes more consonants than Arabic language. Accordingly, as shown in the drawing, there are a considerable number of characters to be inputted together with the Shift key in the full keyboard. The embodiment according to the present disclosure is designed in consideration of this point.

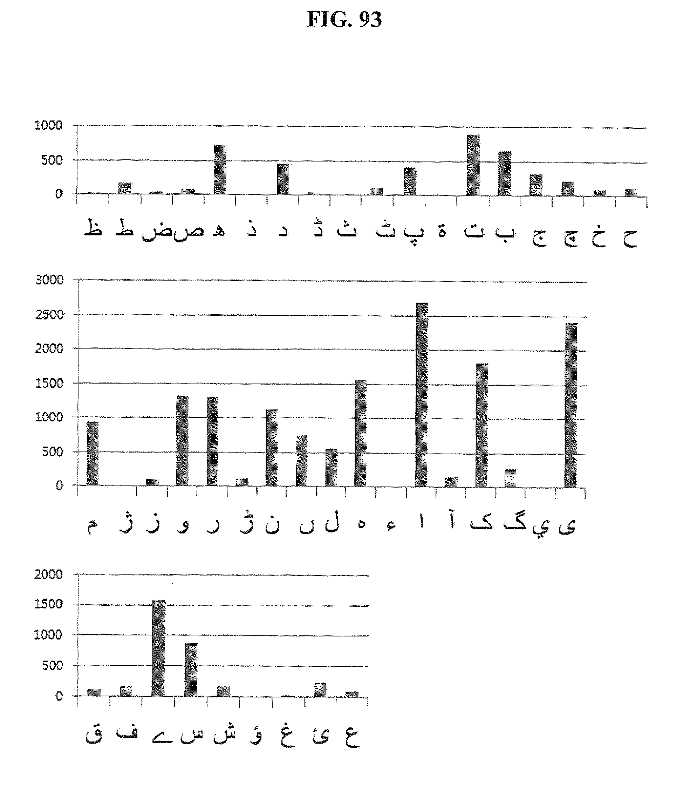

FIG. 93 illustrates a usage frequency table of Urdu alphabet.

The graph shows a data analysis result of an Urdu translation of an English version of The little prince from page 1 to page 10.

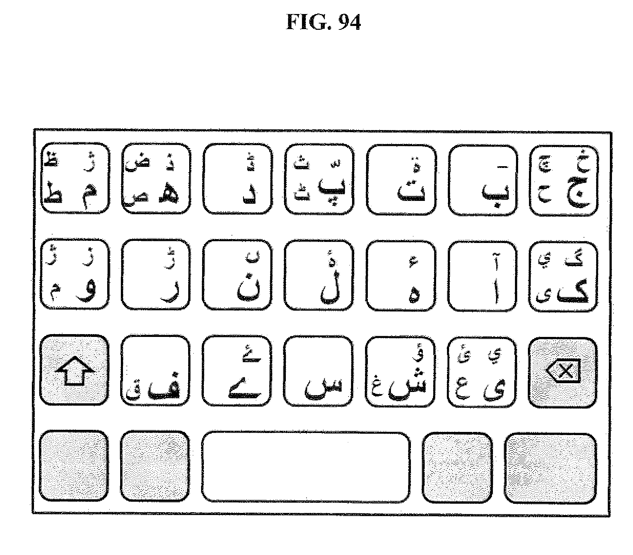

FIG. 94 illustrates a preferred embodiment of a semi-compact keyboard 7-7-5 type layout for Urdu language according to the present disclosure.

Referring to the usage frequency table, it can be seen that Urdu alphabet has a uniform usage frequency of characters on the second row in the full keyboard. That is, to make a semi-compact keyboard, it is necessary to reduce a number of keys by at least two, but there is no candidate that will be replaced as a subordinated character of other key. Thus, in the present disclosure, mim ( 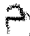 ) placed on the leftmost of the second row is replaced as an unsubordinated character of the leftmost key of the first row, and choti yeh ( 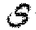 ) placed on the rightmost of the second row is replaced as an unsubordinated character of the rightmost key of the third row.

Also, the mim ( 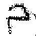 ) and choti yeh ( 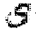 ) are left on their original position as subordinated characters of the keys, to allow a user to continuously input them by an input method of a subordinated character even if the user makes a mistake in input. Of course, it is not necessarily essential.

Seeing the drawing of the embodiment, it can be seen that all of the characters placed on the Shift key are each placed on their original position. This may minimize confusion caused by new arrangement. The characters placed on other keys as a subordinated character are all characters with a relatively low usage frequency. Also, it can be seen that the characters placed on the Shift key are moved together.

A method of inputting characters placed on the keyboard is now described. Taking a key on the rightmost of the first row as an example, four characters in total are placed on the key; two characters disposed at a lower part are characters that are inputted directly without the Shift key, and two characters disposed at an upper part are characters that are pressed together with the Shift key. Of course, the Shift key may be pressed earlier or later. Also, the character on the right side is an unsubordinated character and the character on the left side is a subordinated character. This arrangement is because Urdu language is written from left to right.

By this method, the mim ( 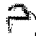 ) is inputted by pressing this key once, the character above the mim ( 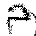 ) is inputted by pressing this key after pressing the Shift key, the character on the left side of the mim ( 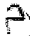 ) is inputted by pressing this key consecutively twice quickly, and the character presented in the diagonal direction of the mim ( 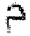 ) is inputted by pressing the Shift key and then pressing this key consecutively twice quickly. Of course, if the Shift key is set to be inputted later, the Shift key is pressed later.

### INDUSTRIAL APPLICABILITY

The present disclosure is industrially applicable.

## Claims

1. A semi-compact keyboard implemented to input through physical buttons or a touch screen, on the basis of a full keyboard layout of a native language, the semi-compact keyboard comprising:
seven or eight keys placed on a first row;
a same or smaller number of keys respectively placed on a second row and a third row as compared to the first row; and
at least one double key on each row, the double key on which two characters are placed together.

2. The semi-compact keyboard implemented to input through physical buttons or a touch screen according to claim 1, wherein the two characters placed together on the double key are characters that were placed adjacent to each other on the left and right sides in the full keyboard.

3. The semi-compact keyboard implemented to input through physical buttons or a touch screen according to claim 1, wherein of the two characters placed together on the double key, a character with a higher usage frequency is an unsubordinated character and a character with a lower usage frequency is a subordinated character, and a method of selecting a subordinated character is different from a method of selecting an unsubordinated character.

4. The semi-compact keyboard implemented to input through physical buttons or a touch screen according to claim 3, wherein all characters belonging in a group above an average usage frequency of characters on a same row become a single key or an unsubordinated character on the double key, and as a subordinated character of the double key, a character belonging in a below-average group of characters on a row with a same usage frequency is placed.

5. The semi-compact keyboard implemented to input through physical buttons or a touch screen according to claim 3, wherein a character which will be the subordinated character is placed on an adjacent key on a right side thereof where a consecutive press conflict is expected to occur more noticeably than when it is placed on an adjacent key on a left side thereof, and otherwise, the character is placed on an adjacent key on the left side.

6. The semi-compact keyboard implemented to input through physical buttons or a touch screen according to claim 3, wherein the subordinated character is displayed with a smaller size at an outer space on an image of the double key than the unsubordinated character.

7. The semi-compact keyboard implemented to input through physical buttons or a touch screen according to claim 1, wherein a character at the end of each row is moved to a position at the end of an upper or lower row.

8. The semi-compact keyboard implemented to input through physical buttons or a touch screen according to claim 1, wherein a character not used in the native language is omitted.

9. The semi-compact keyboard implemented to input through physical buttons or a touch screen according to any one of claims 1 through 8, further comprising:
a variant character conversion key separately provided to input a variant character of an original character being used in the native language by pressing the variant character and the original character together.

10. The semi-compact keyboard implemented to input through physical buttons or a touch screen according to claim 9, wherein a variant character with a highest usage frequency is converted by a consecutive press (or double click) and other variant character is converted by the variant character conversion key, when a plurality of variant characters is present for one original character.

11. The semi-compact keyboard implemented to input through physical buttons or a touch screen according to any one of claims 3 through 10, wherein the method of selecting a subordinated character is a single click (single touch) and the method of selecting an unsubordinated character is a double click (double touch), and the semi-compact keyboard further has a function of automatically correcting an error caused by single-clicking a subordinated character.

12. The semi-compact keyboard implemented to input through physical buttons or a touch screen according to claim 11, wherein a cancel key is changed to an auto-correction cancel key immediately after auto-correction is performed.

13. The semi-compact keyboard implemented to input through physical buttons or a touch screen according to claim 12, wherein the auto-correction cancel key is of an image indicating both directions.

14. The semi-compact keyboard implemented to input through physical buttons or a touch screen according to any one of claims 1 through 13, wherein an English mode of a same layout as a native mode is provided.

15. The semi-compact keyboard implemented to input through physical buttons or a touch screen according to claim 3, wherein the English mode further includes a character omitted in the native mode.

16. A method for implementing a semi-compact keyboard on the basis of a full keyboard layout of a native language, the semi-compact keyboard comprising:
seven or eight keys placed on a first row;
a same or smaller number of keys respectively placed on a second row and a third row as compared to the first row; and
at least one double key on each row, the double key on which two characters are placed together.

17. The method for implementing a semi-compact keyboard according to claim 16, wherein of the two characters placed together on the double key, a character with a higher usage frequency is an unsubordinated character and a character with a lower usage frequency is a subordinated character, and a method of selecting a subordinated character is different from a method of selecting an unsubordinated character.

18. The method for implementing a semi-compact keyboard according to claim 17, wherein all characters belonging in a group above an average usage frequency of characters on a same row become a single key or an unsubordinated character on the double key, and as a subordinated character of the double key, a character belonging in a below-average group of characters on a row with a same usage frequency is placed.
